# EUROPEAN PATENT APPLICATION

(11) **EP 3 627 844 A1**
(43) Date of publication of application: **25.03.2020**
(21) Application number: 19199493.8
(22) Date of filing: 12.05.2017
(51) Int. Cl.: H04N 21/845, H04N 21/234, H04N 21/414, H04N 21/4728, H04N 21/2343, H04N 21/262, H04N 21/81

(54) **FILE GENERATION DEVICE, FILE GENERATION METHOD, REPRODUCING DEVICE, AND REPRODUCING METHOD**

(30) Priority: 13.05.2016 JP 2016097361; 23.08.2016 JP 2016162433; 11.11.2016 JP 2016220619
(62) Divisional of application: 17796239.6
(71) Applicant: SONY Corporation, Tokyo 108-0075 (JP)
(72) Inventor: KATSUMATA, Mitsuru, Minato-ku, Tokyo 108-0075 (JP); HIRABAYASHI, Mitsuhiro, Minato-ku, Tokyo 108-0075 (JP); HAMADA, Toshiya, Minato-ku, Tokyo 108-0075 (JP); IZUMI, Nobuaki, Minato-ku, Tokyo 108-0075 (JP); TAKAHASHI, Ryohei, Minato-ku, Tokyo 108-0075 (JP)
(74) Representative: D Young & Co LLP

(57) **Abstract**

The present disclosure relates to a file generation device, a file generation method, a reproducing device, and a reproducing method capable of identifying images used for generating an omnidirectional image.

An MPD file generation section sets identification information for identifying captured images used for generating an omnidirectional image generated by mapping the captured images onto a 3D model. The present disclosure is applicable to a file generation device or the like generating segment files of an omnidirectional image delivered using, for example, MPEG-DASH (Moving Picture Experts Group phase-Dynamic Adaptive Streaming over HTTP).

## Description

### [Technical Field]

The present disclosure relates to a file generation device, a file generation method, a reproducing device, and a reproducing method, and particularly relates to a file generation device, a file generation method, a reproducing device, and a reproducing method capable of identifying images used for generating an omnidirectional image.

### [Background Art]

There is known a recording device that generates an omnidirectional image by mapping an image with a 360-degree visual field in a horizontal direction and a 180-degree visual field in a vertical direction onto a 2D image (plane image) from an image captured by a multi-camera, encodes the omnidirectional image, and records the encoded omnidirectional image (refer to, for example, PTL 1) .

Such a recording device employs, as an omnidirectional image generation method, a method using equirectangular projection, cube mapping, and the like. In a case in which the omnidirectional image generation method is the method using the equirectangular projection, the omnidirectional image is an image of a sphere by the equirectangular projection obtained when captured images are mapped onto faces of the sphere. Furthermore, in a case in which the omnidirectional image generation method is the cube mapping, the omnidirectional image is an image of a development plan of a cube obtained when captured images are mapped onto faces of the cube.

Meanwhile, there is known MPEG-DASH (Moving Picture Experts Group phase-Dynamic Adaptive Streaming over HTTP) as a motion video content streaming scheme. In MPEG-DASH, a management file that manages coded streams of the motion video content is transmitted from a delivery server to a terminal device, and the terminal device selects coded streams to be reproduced on the basis of the management file and issues a request to the delivery server.

### [Citation List]

### [Patent Literature]

[PTL 1] JP 2006-14174A

### [Summary]

### [Technical Problem]

However, in a case of delivery of the coded streams of the omnidirectional image from the delivery server to the terminal device under MPEG-DASH, no consideration has been given to setting of identification information for identifying captured images used for generating the omnidirectional image. Therefore, the terminal device has been incapable of identifying the captured images used for generating the omnidirectional image and selecting the omnidirectional image to be reproduced on the basis of the captured images.

The present disclosure has been achieved in the light of these situations and an object of the present disclosure is to make it possible to identify images used for generating an omnidirectional image.

### [Solution to Problem]

A file generation device according to a first aspect of the present disclosure is a file generation device including a setting section that sets identification information for identifying an image used for generating an omnidirectional image generated by mapping the image onto a 3D model.

A file generation method according to the first aspect of the present disclosure corresponds to the file generation device according to the first aspect of the present disclosure.

According to the first aspect of the present disclosure, the identification information for identifying the image used for generating the omnidirectional image generated by mapping the image onto the 3D model is set.

A reproducing device according to a second aspect of the present disclosure is a reproducing device including a selection section that selects an omnidirectional image that is to be reproduced and that is generated by mapping an image onto a 3D model on the basis of identification information for identifying the image used for generating the omnidirectional image.

A reproducing method according to the second aspect of the present disclosure corresponds to the reproducing device according to the second aspect of the present disclosure.

According to the second aspect of the present disclosure, the omnidirectional image that is to be reproduced and that is generated by mapping an image onto a 3D model is selected on the basis of identification information for identifying the image used for generating the omnidirectional image.

It is noted that the file generation device according to the first aspect and the reproducing device according to the second aspect can be implemented by causing a computer to execute a program.

In addition, to implement the file generation device according to the first aspect and the reproducing device according to the second aspect, the program caused to be executed by the computer can be provided by being transmitted via a transmission medium or being recorded in a recording medium.

### [Advantageous Effect of Invention]

According to the first aspect of the present disclosure, it is possible to generate a file. In addition, according to the first aspect of the present disclosure, it is possible to generate a file so that the images used for generating the omnidirectional image can be identified.

According to the second aspect of the present disclosure, it is possible to select a file. In addition, according to the second aspect of the present disclosure, it is possible to identify images used for generating the omnidirectional image.

It is noted that effects are not always limited to those described here but may be any of effects described in the present disclosure.

### [Brief Description of Drawings]

[FIG. 1]

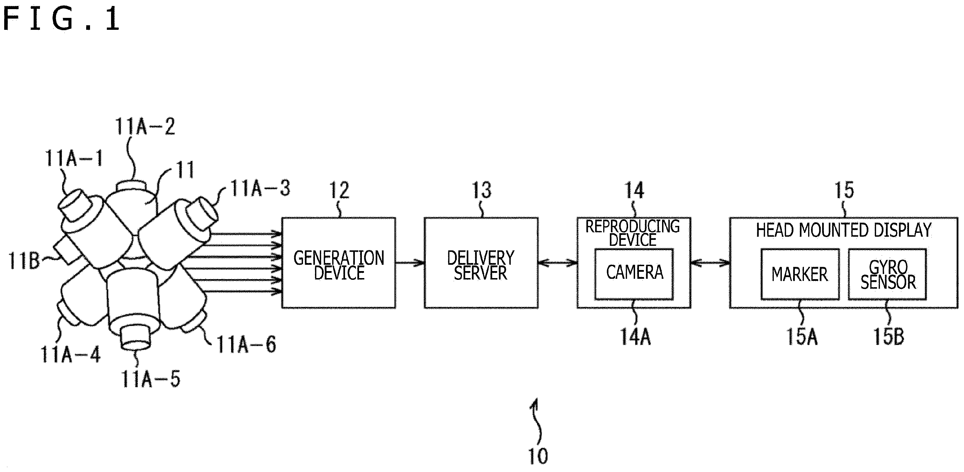

   FIG. 1 is a block diagram illustrating an example of a configuration of a first embodiment of a delivery system to which the present disclosure is applied.
[FIG. 2]

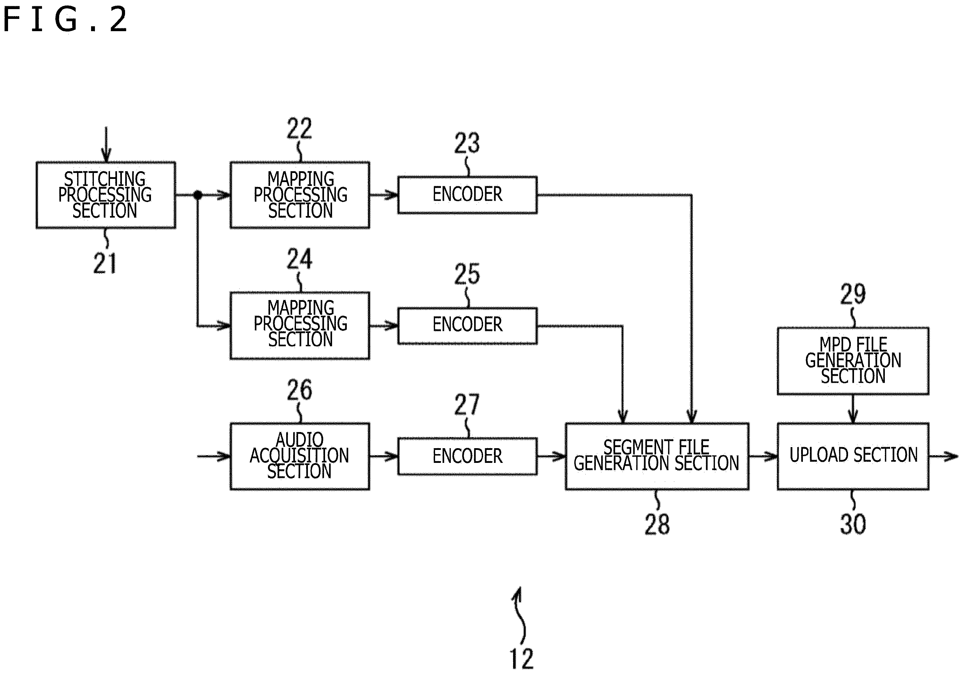

   FIG. 2 is a block diagram illustrating an example of a configuration of a generation device of FIG. 1.
[FIG. 3]

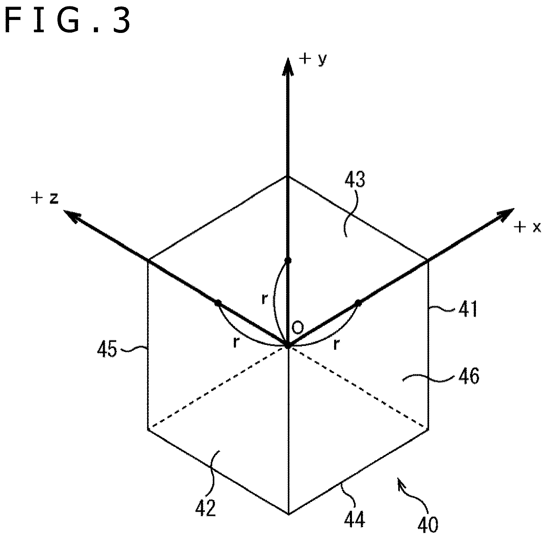

   FIG. 3 is a perspective view illustrating a cube as a 3D model.
[FIG. 4]

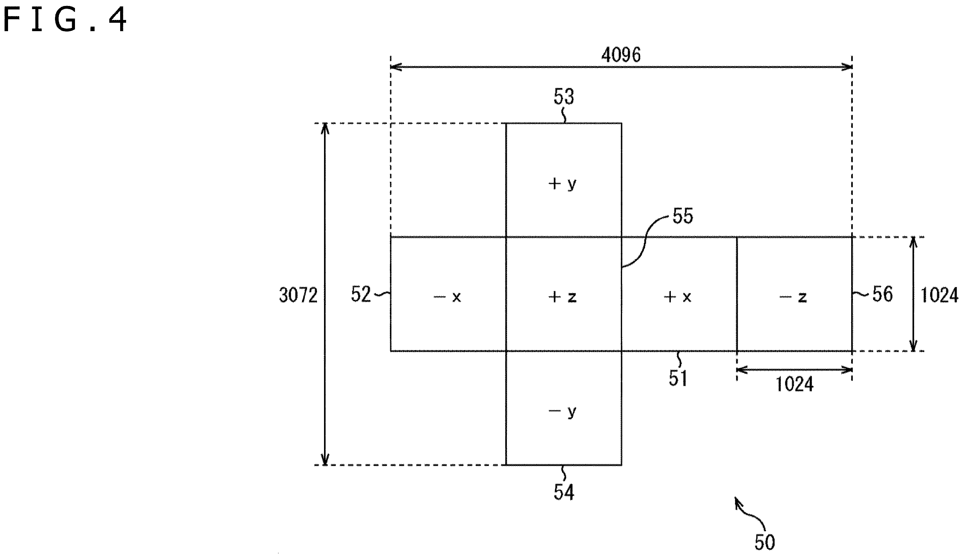

   FIG. 4 is a diagram illustrating an example of an omnidirectional image generated by cube mapping.
[FIG. 5]

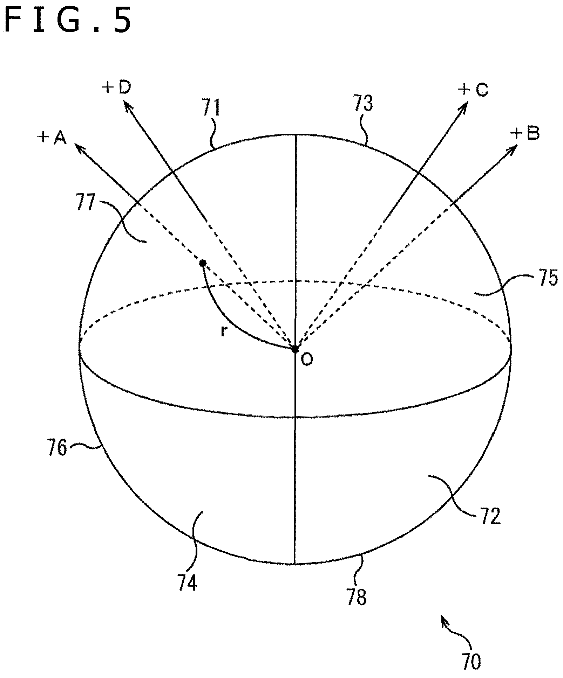

   FIG. 5 is a perspective view illustrating a sphere as a 3D model.
[FIG. 6]

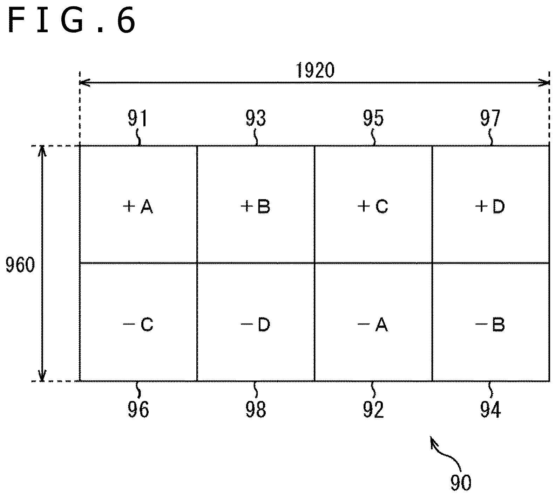

   FIG. 6 is a diagram illustrating an example of an omnidirectional image generated by a method using equirectangular projection.
[FIG. 7]

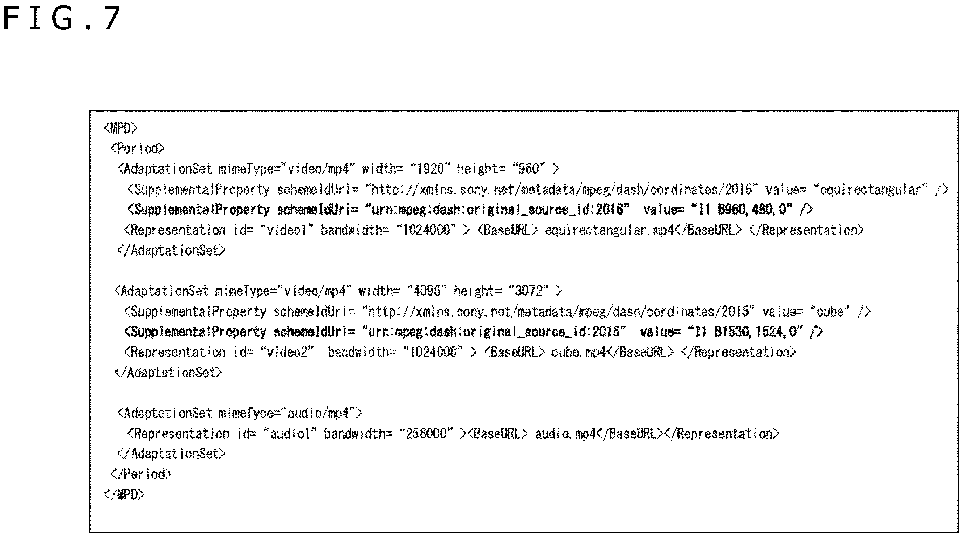

   FIG. 7 is a diagram illustrating an example of an MPD file generated by an MPD file generation section of FIG. 2.
[FIG. 8]

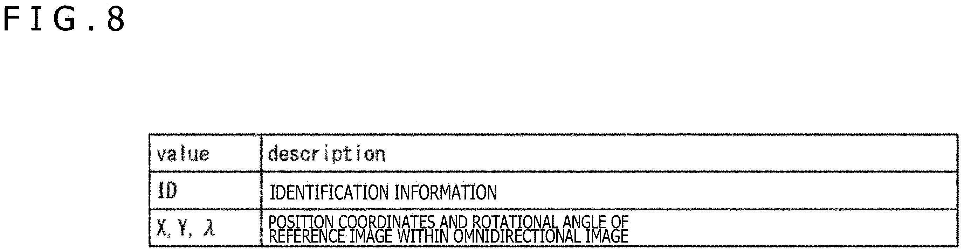

   FIG. 8 is an illustrative diagram of ID, X, Y, and λ.
[FIG. 9]

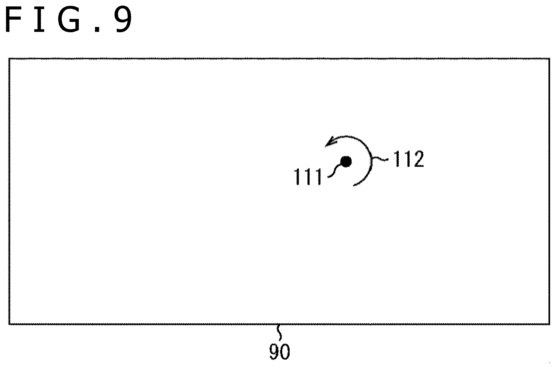

   FIG. 9 is an illustrative diagram of mapping information.
[FIG. 10]

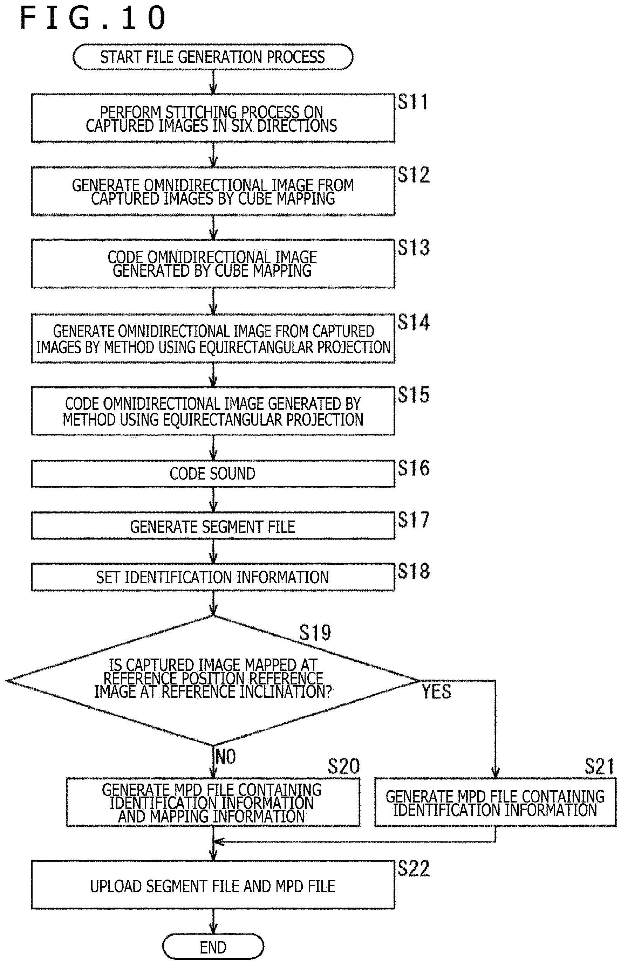

   FIG. 10 is a flowchart describing a file generation process performed by the generation device of FIG. 2.
[FIG. 11]

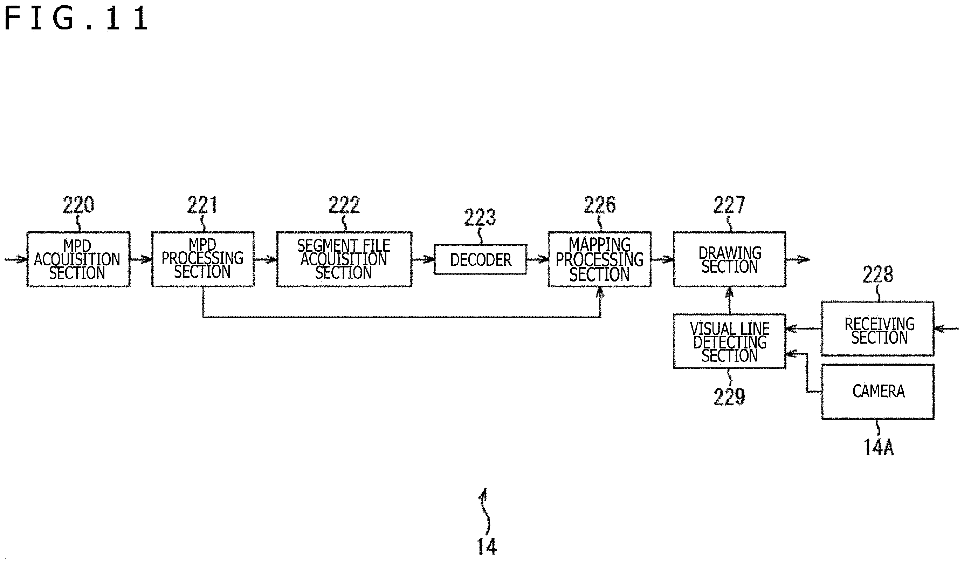

   FIG. 11 is a block diagram illustrating an example of a configuration of a reproducing device of FIG. 1.
[FIG. 12]

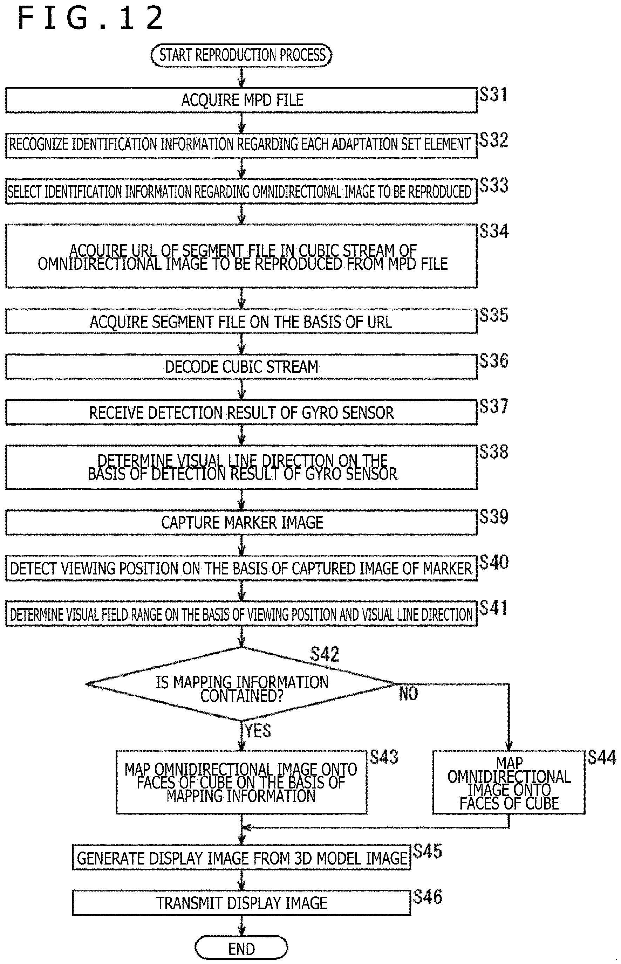

   FIG. 12 is a flowchart describing a reproducing process performed by the reproducing device of FIG. 11.
[FIG. 13]

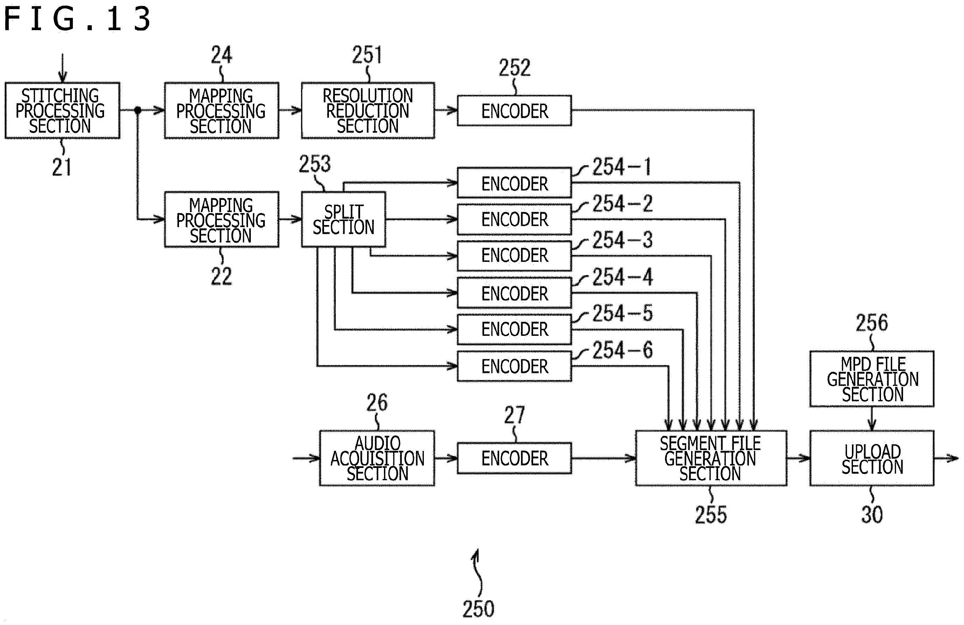

   FIG. 13 is a block diagram illustrating an example of a configuration of a generation device according to a second embodiment of a delivery system to which the present disclosure is applied.
[FIG. 14]

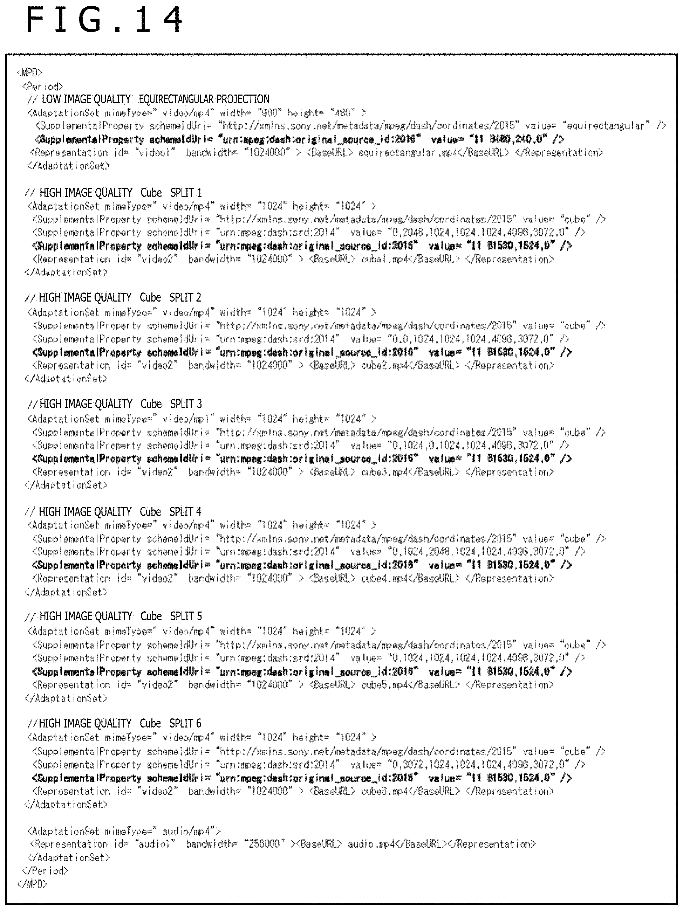

   FIG. 14 is a diagram illustrating a first example of an MPD file generated by an MPD file generation section of FIG. 13.
[FIG. 15]

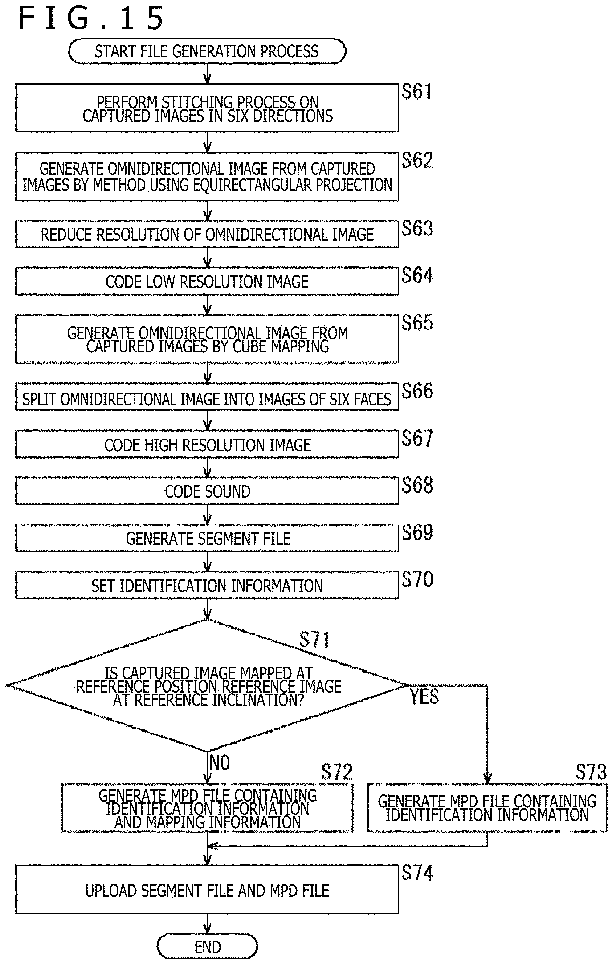

   FIG. 15 is a flowchart describing a file generation process performed by the generation device of FIG. 13.
[FIG. 16]

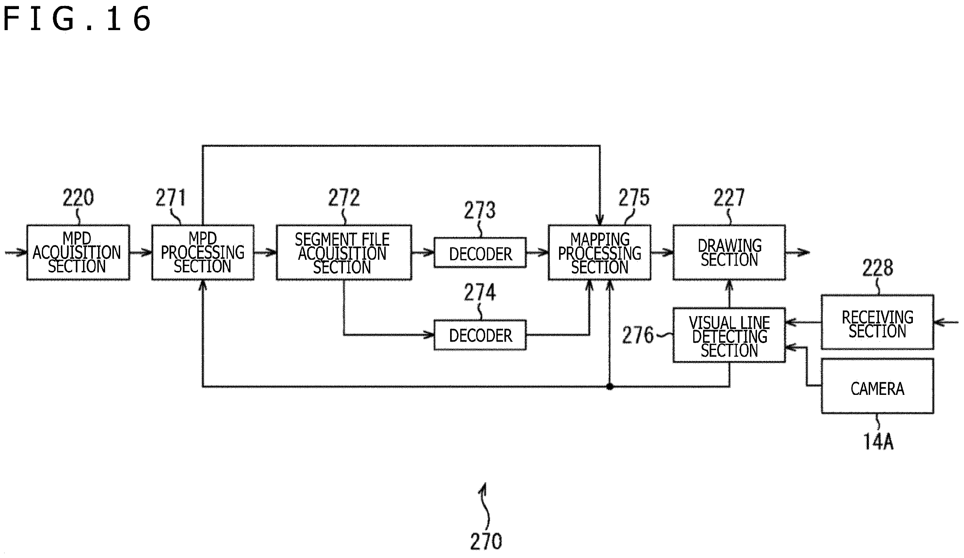

   FIG. 16 is a block diagram illustrating an example of a configuration of a reproducing device according to the second embodiment of the delivery system to which the present disclosure is applied.
[FIG. 17]

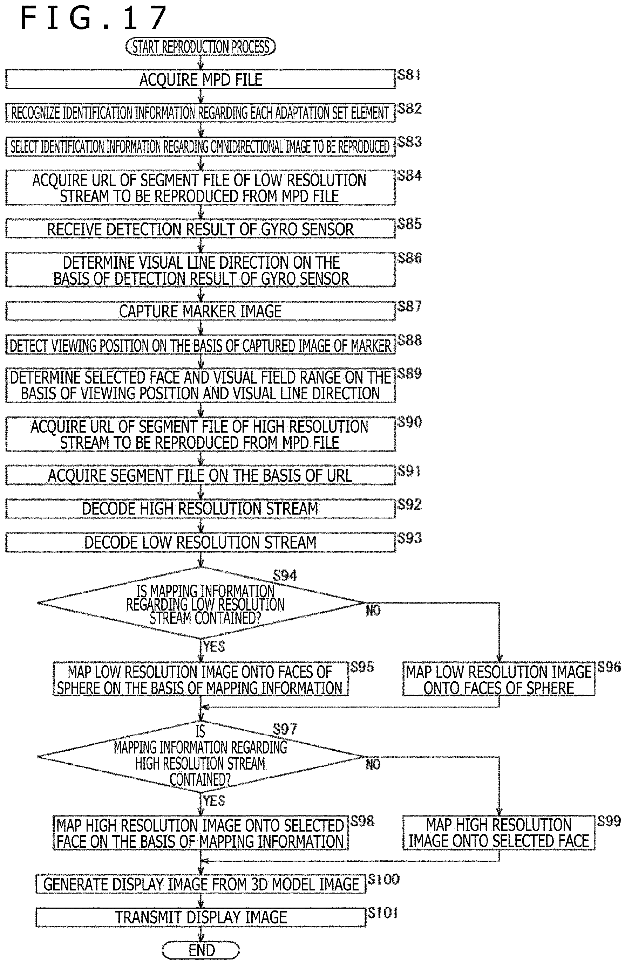

   FIG. 17 is a flowchart describing a reproducing process performed by the reproducing device of FIG. 16.
[FIG. 18]

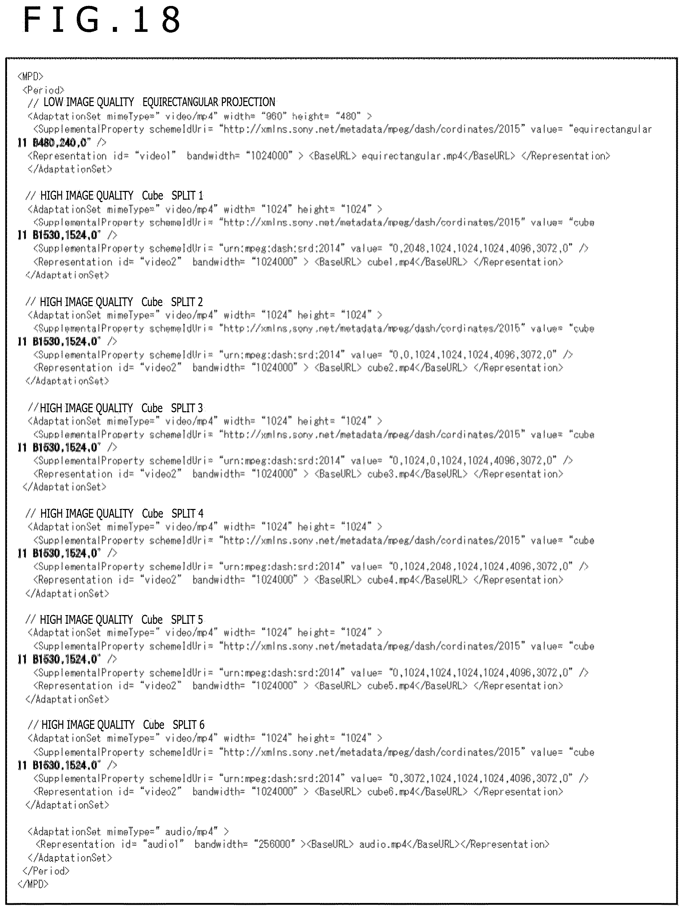

   FIG. 18 is a diagram illustrating a second example of the MPD file generated by the MPD file generation section of FIG. 13.
[FIG. 19]

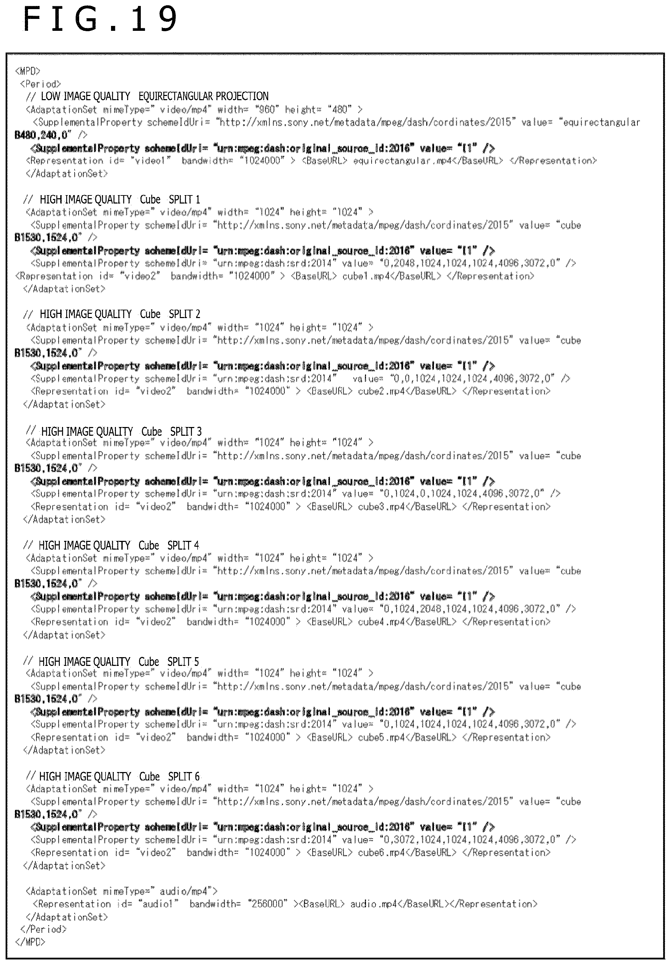

   FIG. 19 is a diagram illustrating a third example of the MPD file generated by the MPD file generation section of FIG. 13.
[FIG. 20]

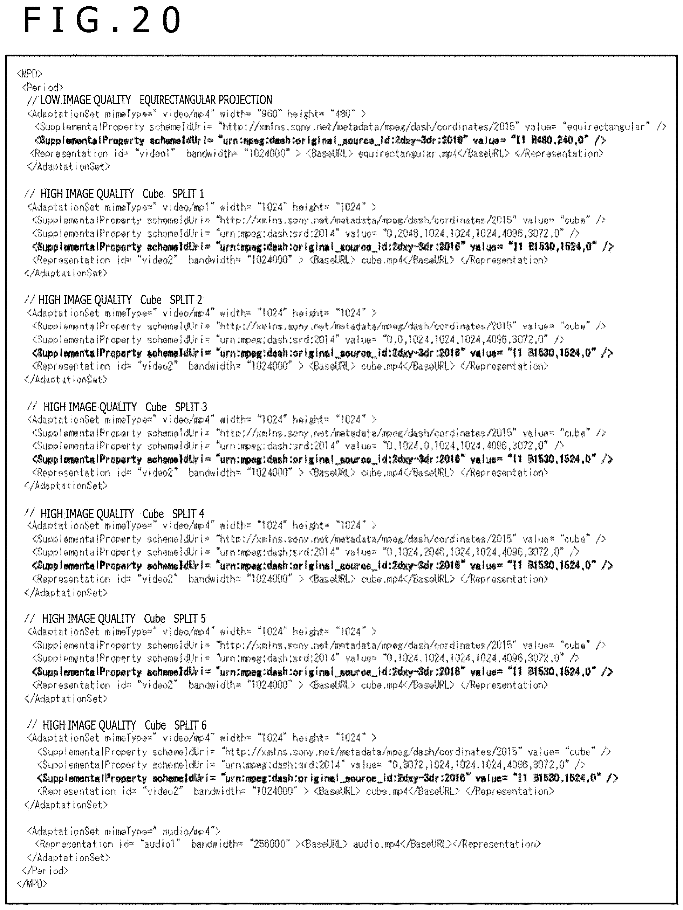

   FIG. 20 is a diagram illustrating a fourth example of the MPD file generated by the MPD file generation section of FIG. 13.
[FIG. 21]

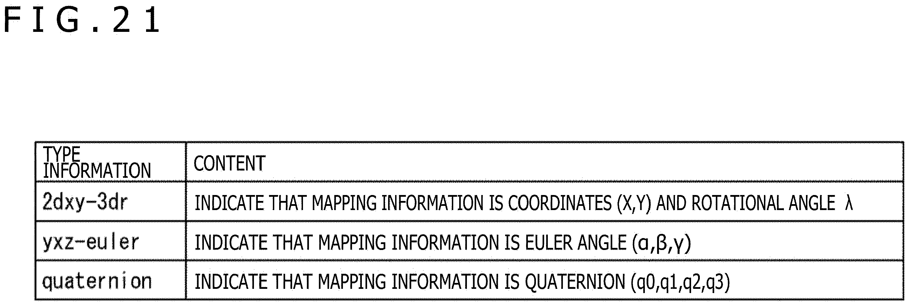

   FIG. 21 is a diagram illustrating an example of type information.
[FIG. 22]

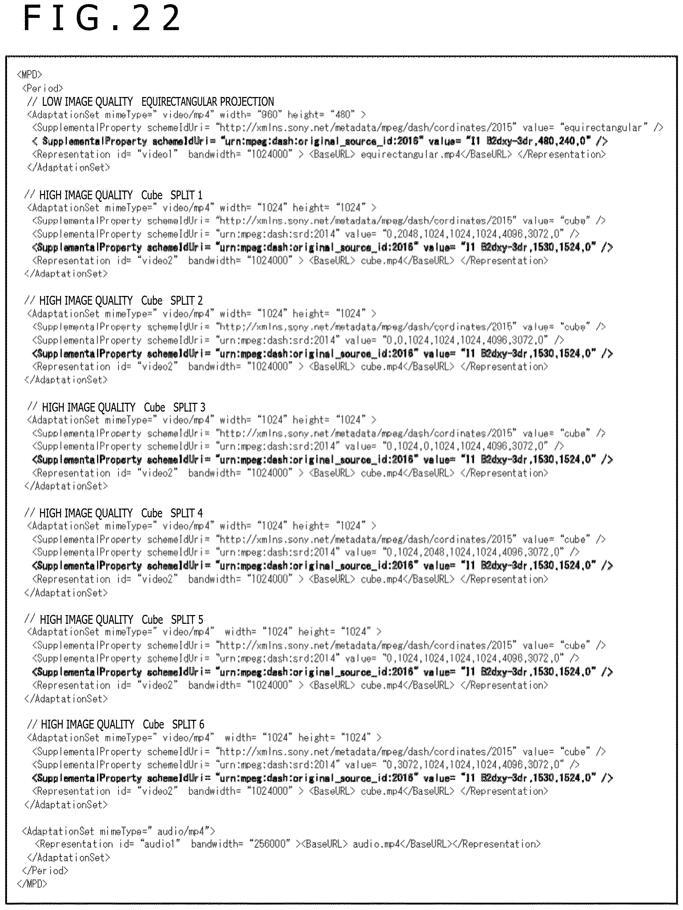

   FIG. 22 is a diagram illustrating a fifth example of the MPD file generated by the MPD file generation section of FIG. 13.
[FIG. 23]

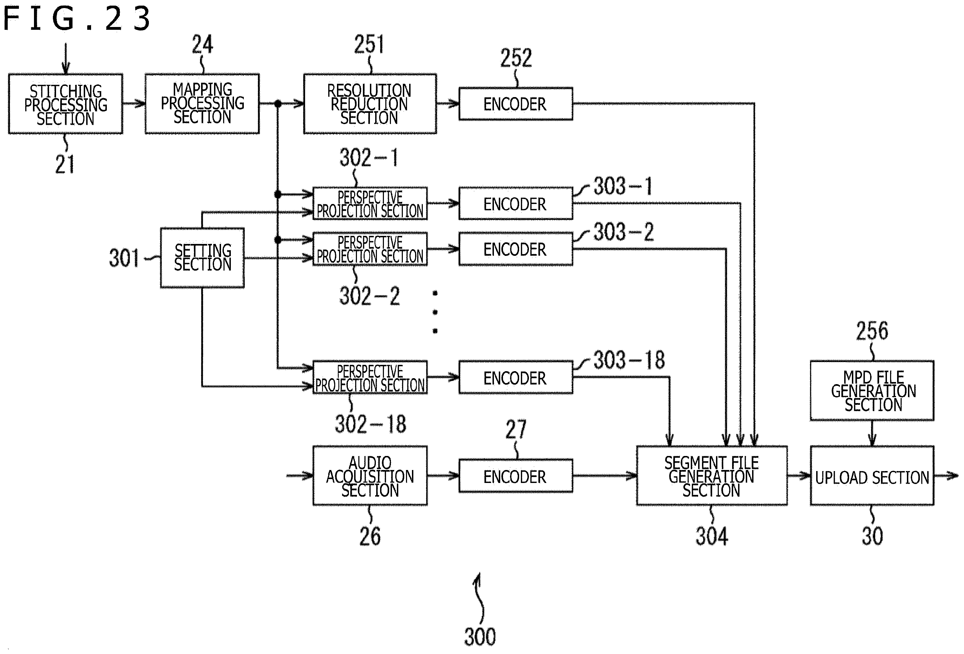

   FIG. 23 is a block diagram illustrating an example of a configuration of a generation device according to a third embodiment of a delivery system to which the present disclosure is applied.
[FIG. 24]

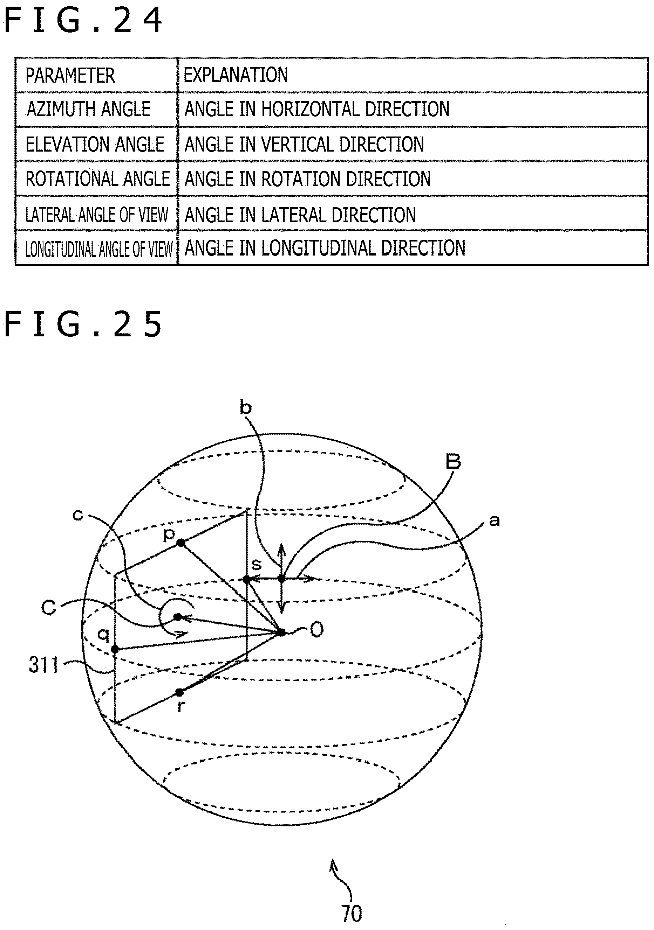

   FIG. 24 is a diagram illustrating an example of a configuration of two-dimensional plane information.
[FIG. 25]
   FIG. 25 is an illustrative diagram of the two-dimensional plane information.
[FIG. 26]

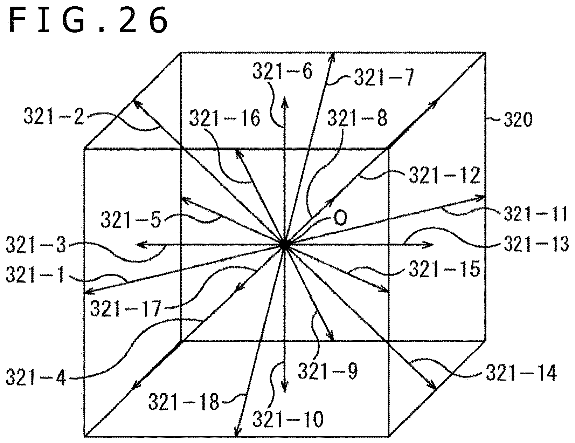

   FIG. 26 is a diagram illustrating an example of 18 two-dimensional planes.
[FIG. 27]

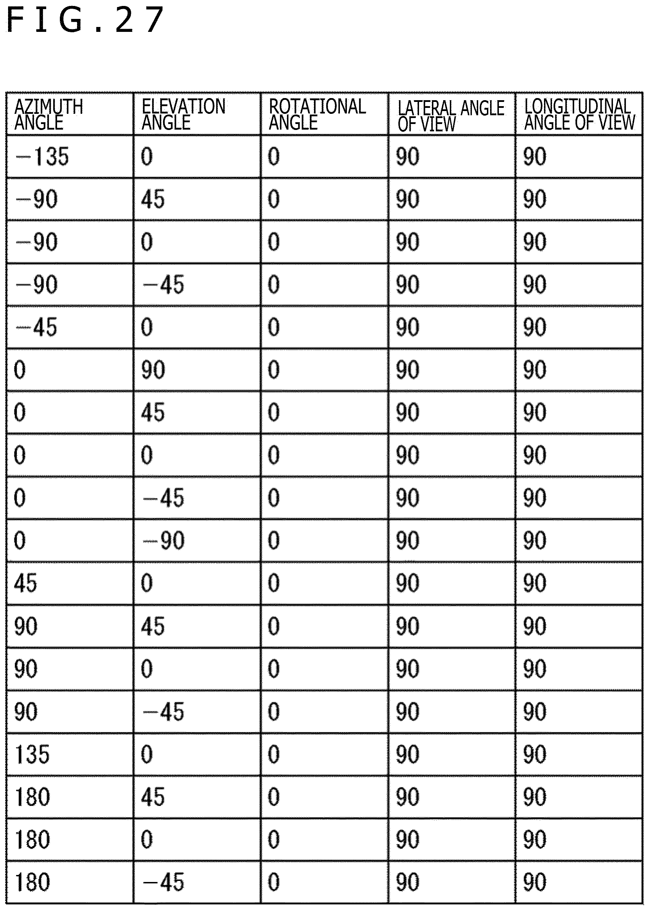

   FIG. 27 is a diagram illustrating an example of two-dimensional plane information regarding the 18 two-dimensional planes of FIG. 26.
[FIG. 28]

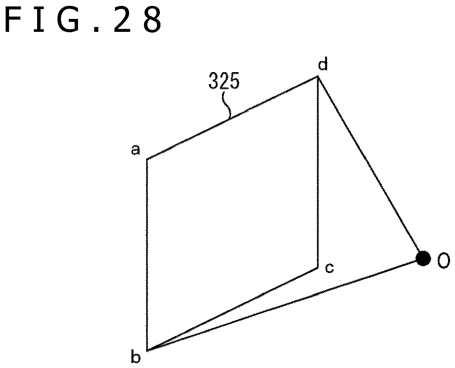

   FIG. 28 is an illustrative diagram of a diagonal angle of view.
[FIG. 29]

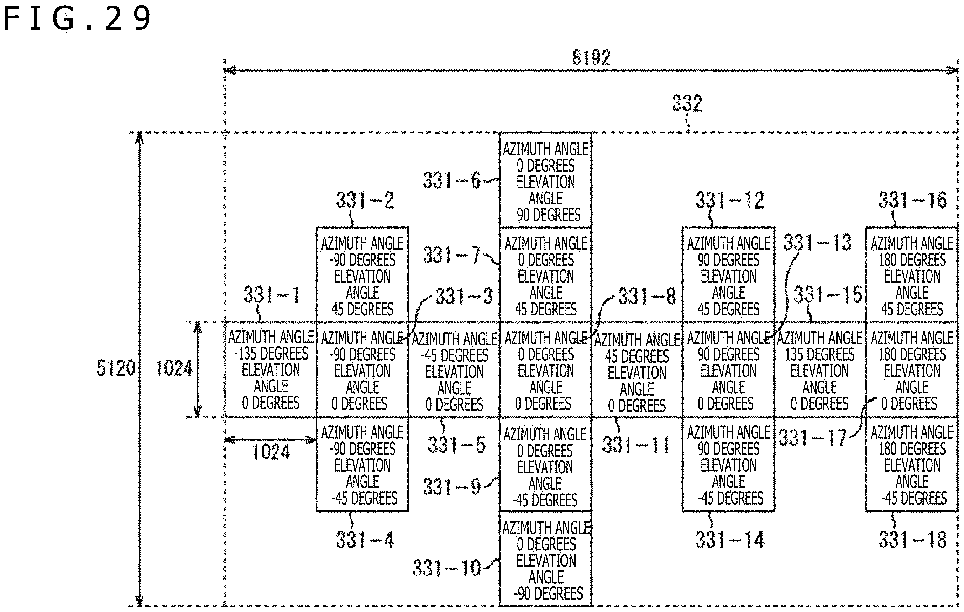

   FIG. 29 is an illustrative diagram of a method of setting an SRD of each high resolution image.
[FIG. 30]

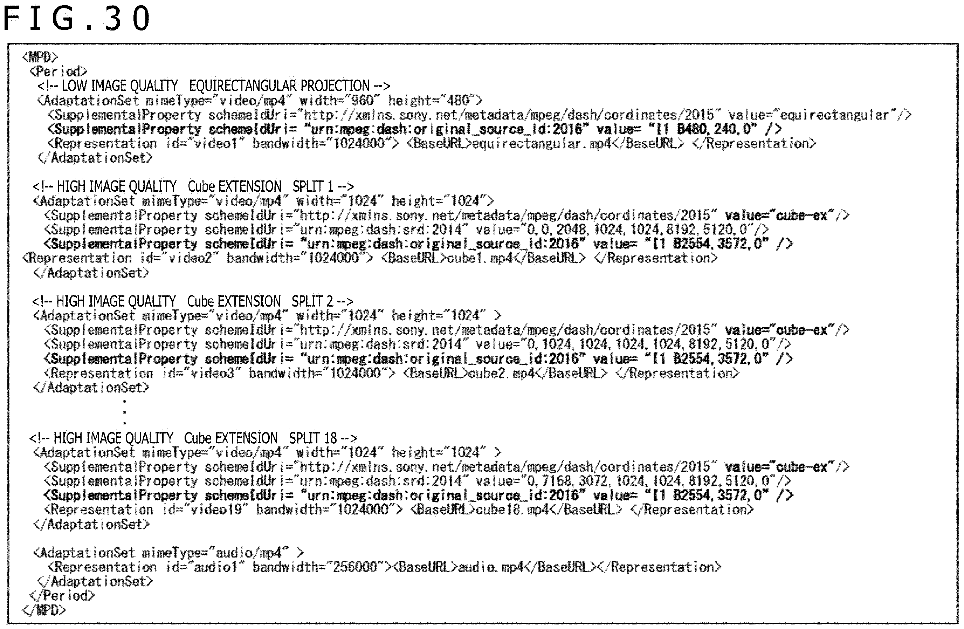

   FIG. 30 is a diagram illustrating a first example of an MPD file generated by an MPD file generation section of FIG. 23.
[FIG. 31]

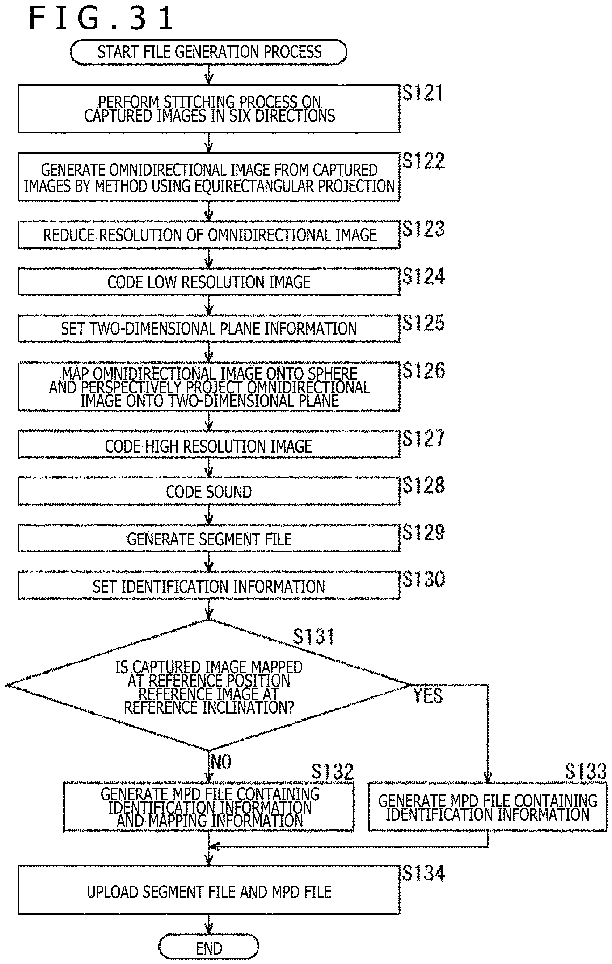

   FIG. 31 is a flowchart describing a file generation process performed by the generation device of FIG. 23.
[FIG. 32]

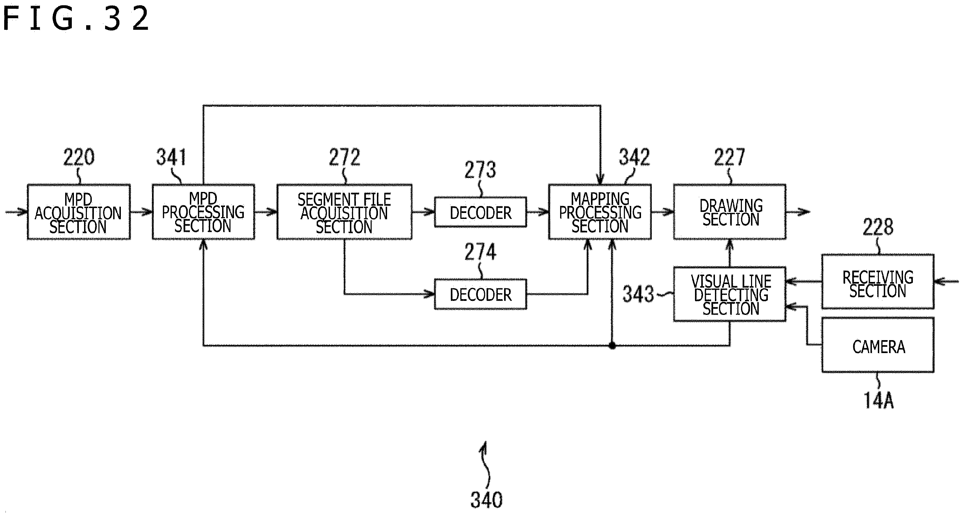

   FIG. 32 is a block diagram illustrating an example of a configuration of a reproducing device according to the third embodiment of the delivery system to which the present disclosure is applied.
[FIG. 33]

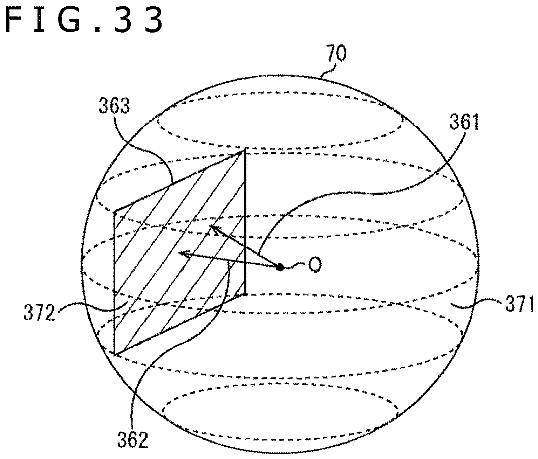

   FIG. 33 is an illustrative diagram of mapping by a mapping processing section of FIG. 32.
[FIG. 34]

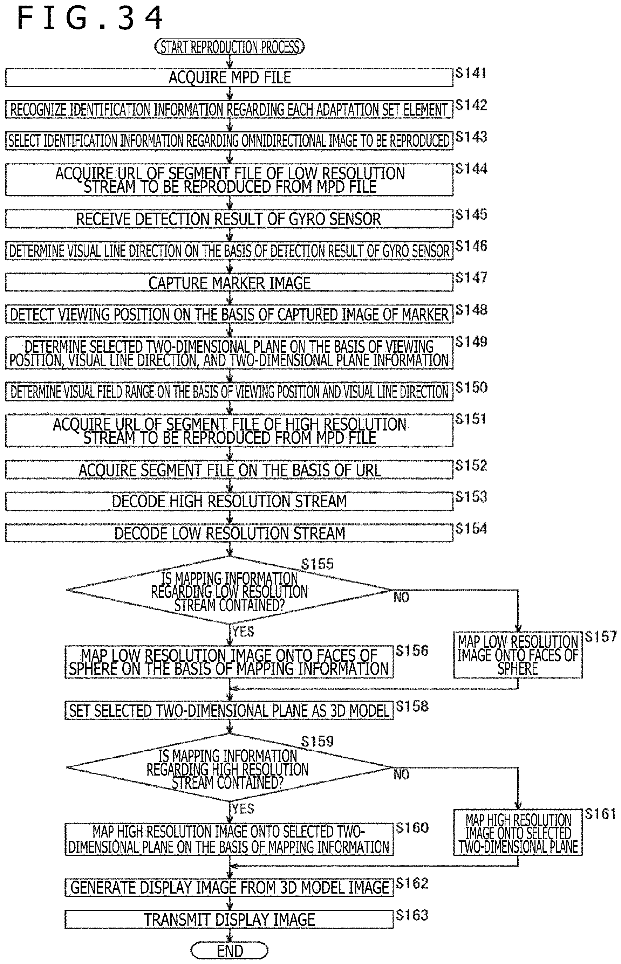

   FIG. 34 is a flowchart describing a reproducing process performed by the reproducing device of FIG. 32.
[FIG. 35]

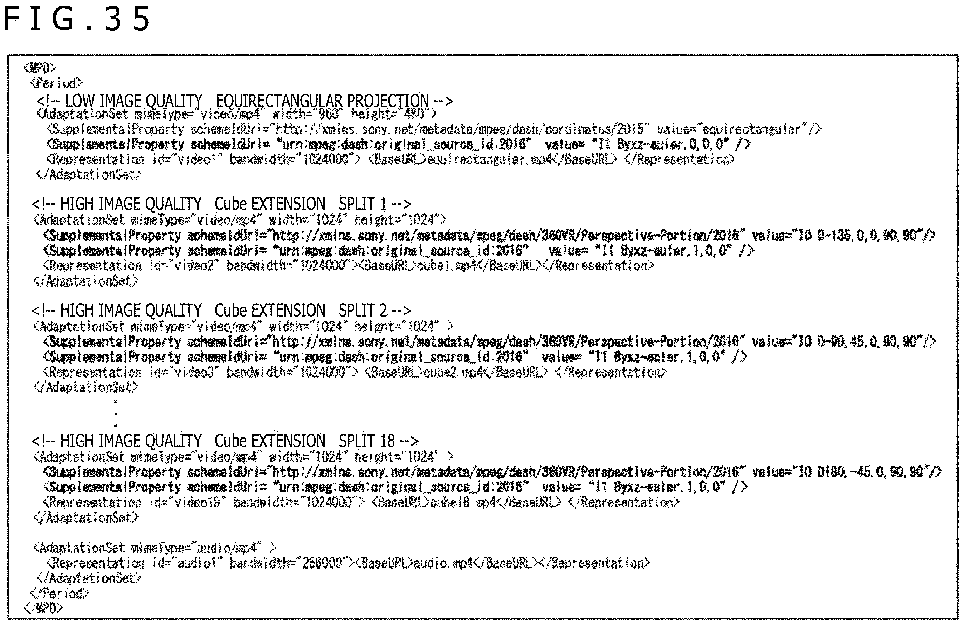

   FIG. 35 is a diagram illustrating a second example of the MPD file generated by the MPD file generation section of FIG. 23.
[FIG. 36]

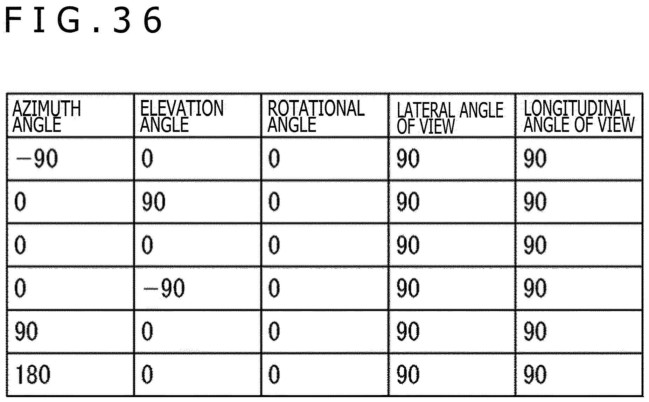

   FIG. 36 is a diagram illustrating two-dimensional plane information regarding six common images.
[FIG. 37]

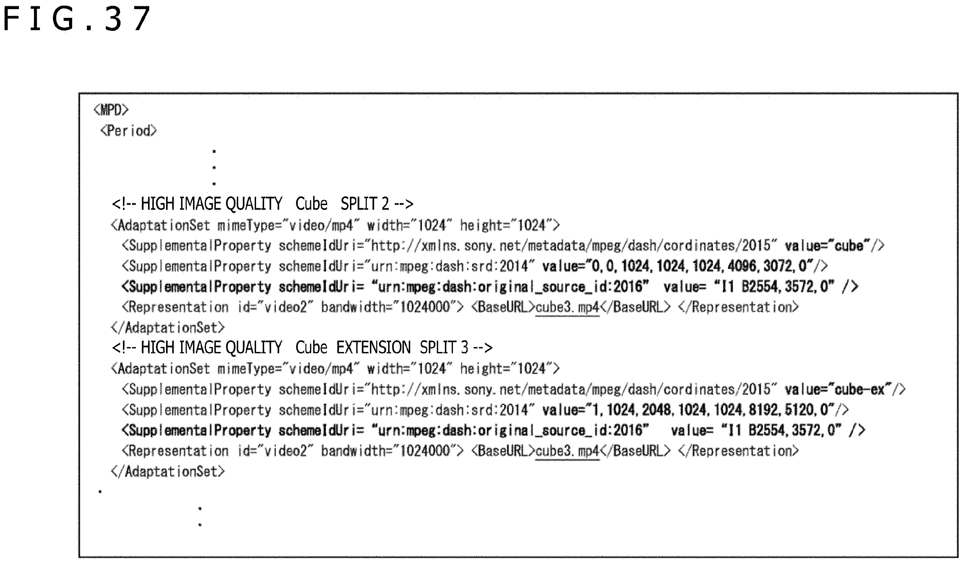

   FIG. 37 is a diagram illustrating a third example of the MPD file generated by the MPD file generation section of FIG. 23.
[FIG. 38]

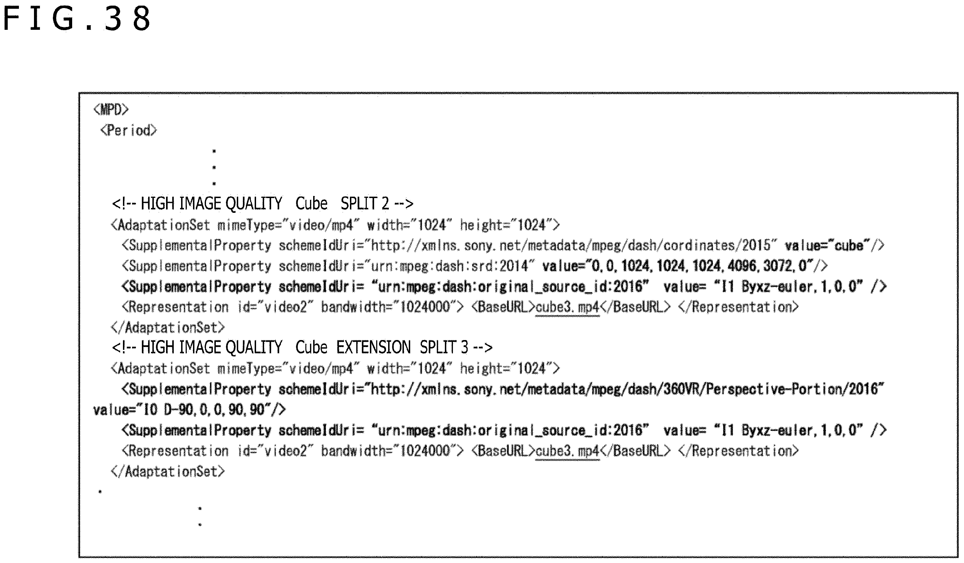

   FIG. 38 is a diagram illustrating a fourth example of the MPD file generated by the MPD file generation section of FIG. 23.
[FIG. 39]

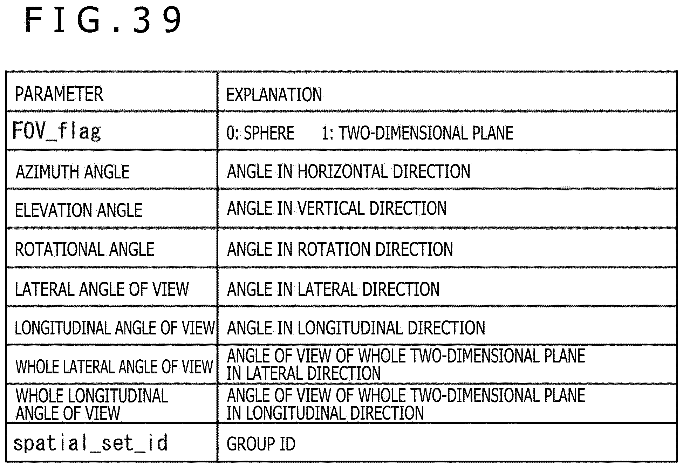

   FIG. 39 is a diagram illustrating an example of a configuration of two-dimensional plane information according to a fourth embodiment.
[FIG. 40]

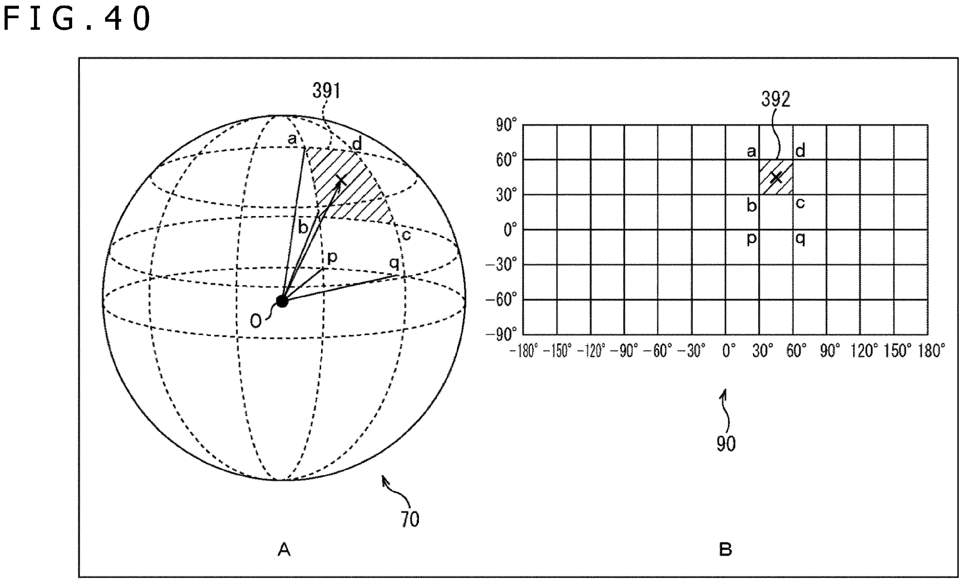

   FIG. 40 is an illustrative diagram of a drawing plane in a case in which FOV_flag is 0.
[FIG. 41]

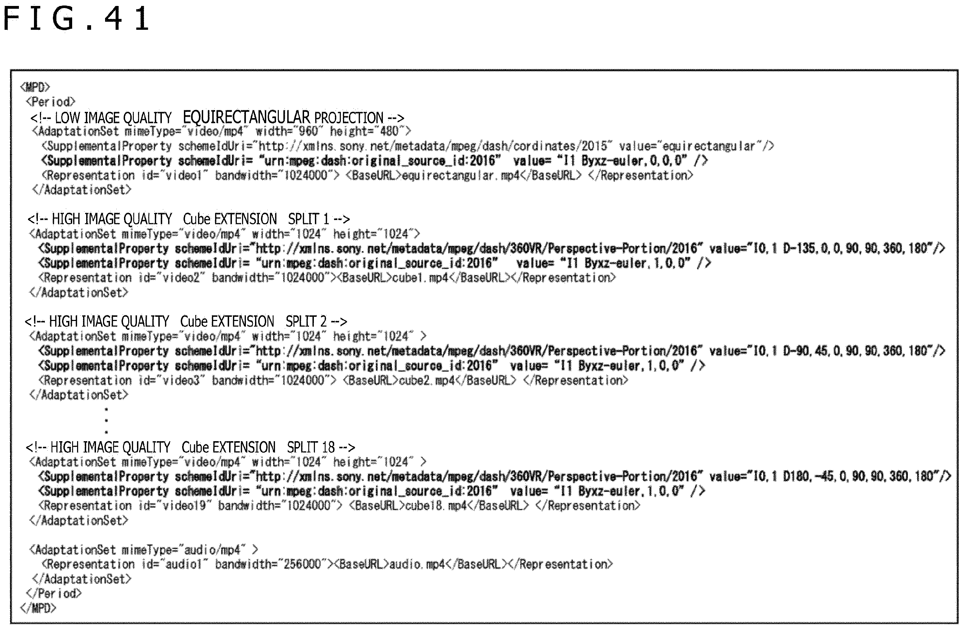

   FIG. 41 is a diagram illustrating a first example of an MPD file describing the two-dimensional information of FIG. 39.
[FIG. 42]

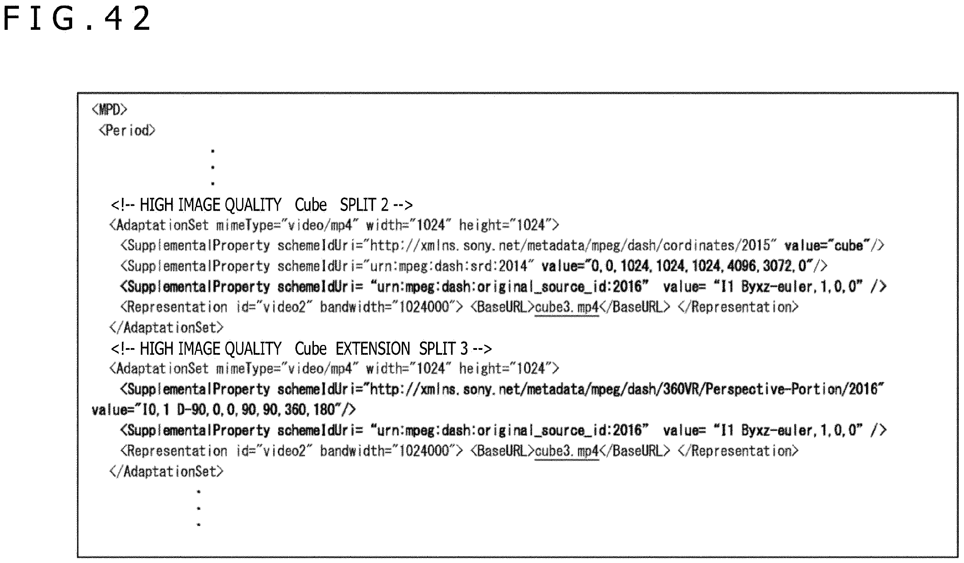

   FIG. 42 is a diagram illustrating a second example of the MPD file describing the two-dimensional information of FIG. 39.
[FIG. 43]

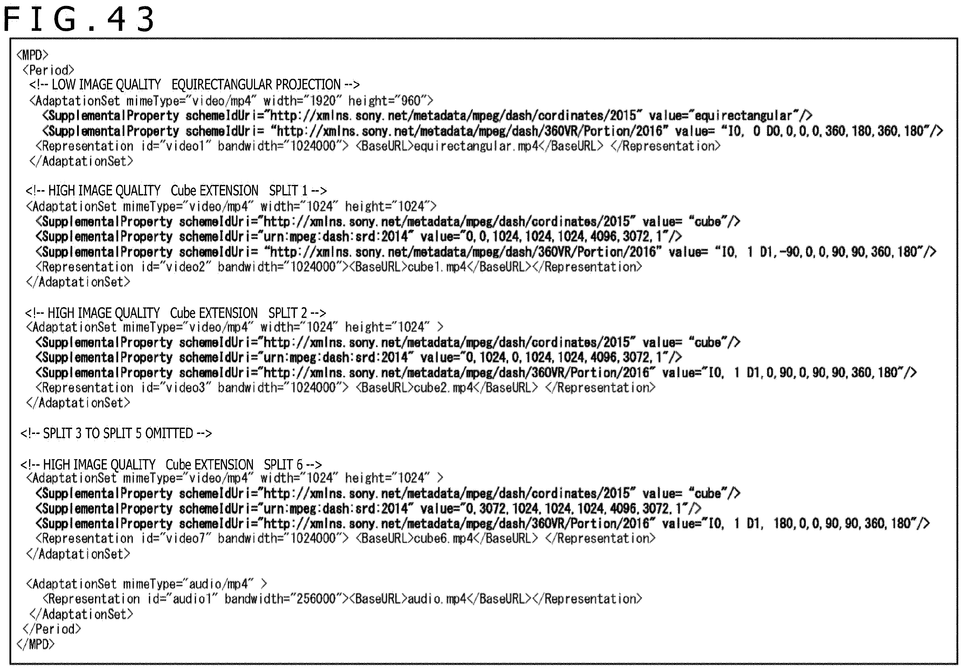

   FIG. 43 is a diagram illustrating a modification of the second example of the MPD file describing the two-dimensional information of FIG. 39.
[FIG. 44]

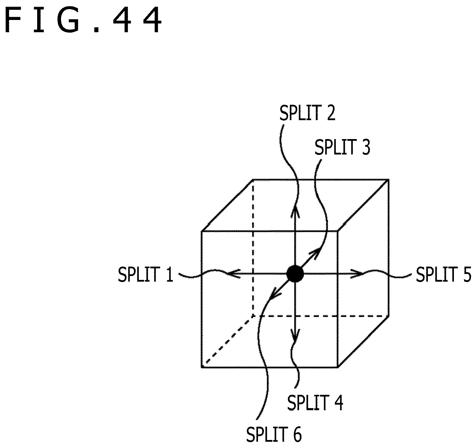

   FIG. 44 is a perspective view illustrating an example of a 3D model of a cube stream.
[FIG. 45]

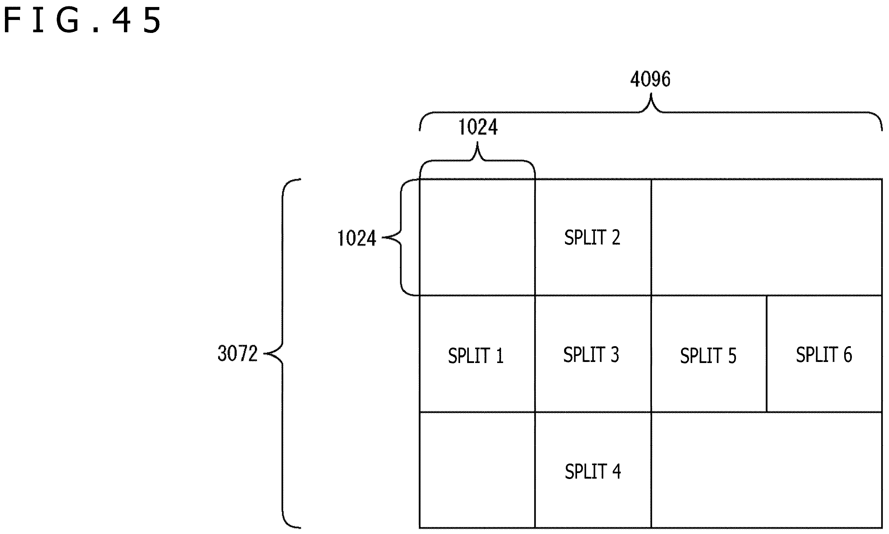

   FIG. 45 is a diagram illustrating an example of SRD information by developing faces of the 3D model.
[FIG. 46]

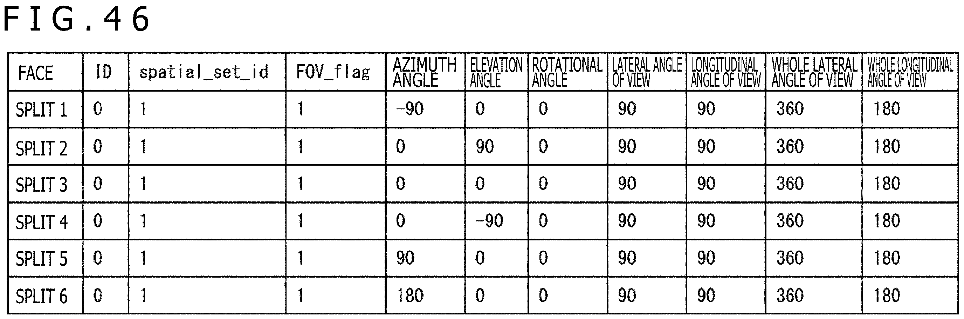

   FIG. 46 is a diagram illustrating an example of drawing plane information.
[FIG. 47]

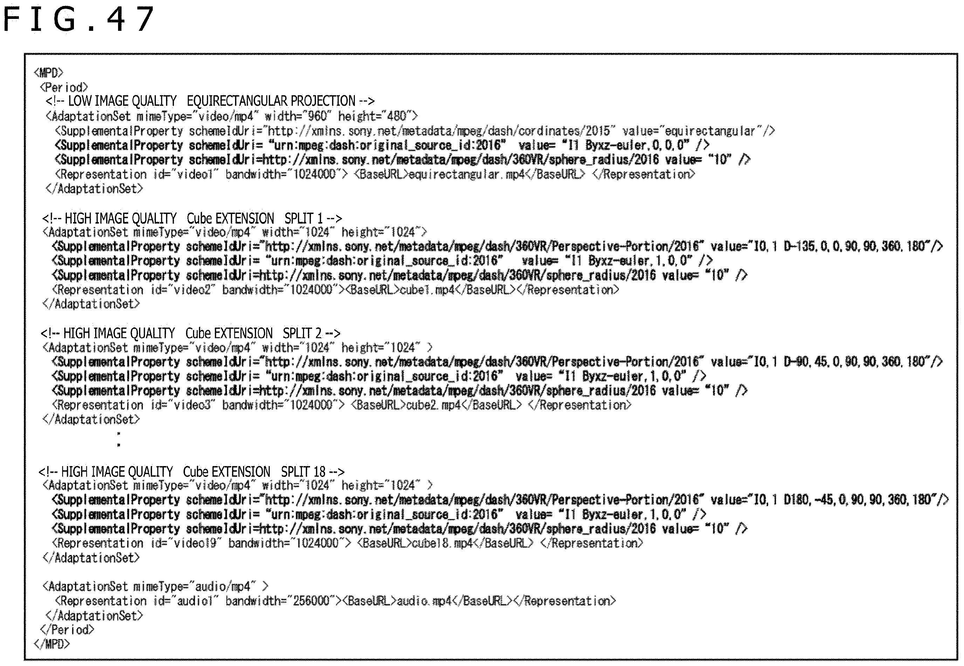

   FIG. 47 is a diagram illustrating a third example of the MPD file describing the two-dimensional information of FIG. 39.
[FIG. 48]

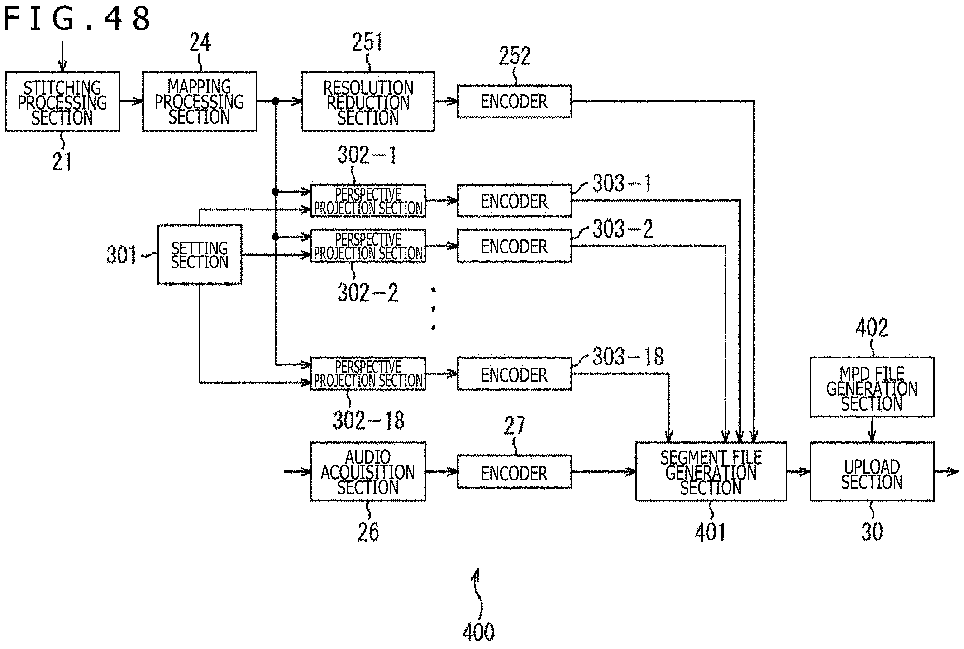

   FIG. 48 is a block diagram illustrating an example of a configuration of a fifth embodiment of a generation device to which the present disclosure is applied.
[FIG. 49]

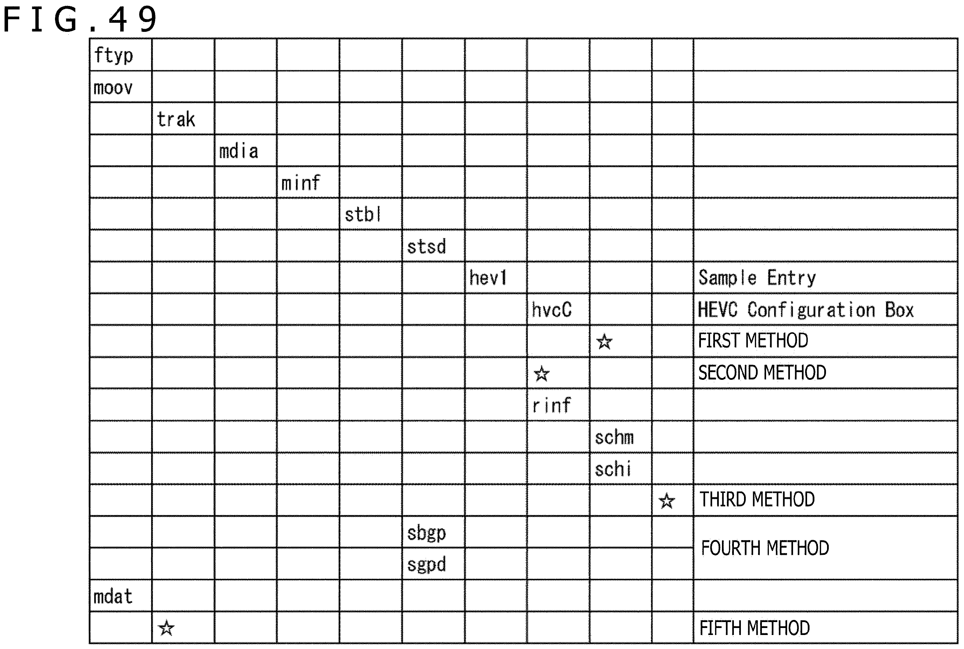

   FIG. 49 is an illustrative diagram of a method of setting various kinds of information regarding images.
[FIG. 50]

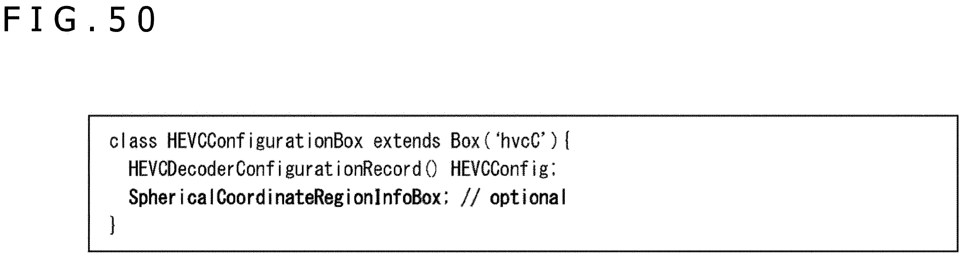

   FIG. 50 is a diagram illustrating an example of a configuration of an hvcC box in a first method.
[FIG. 51]

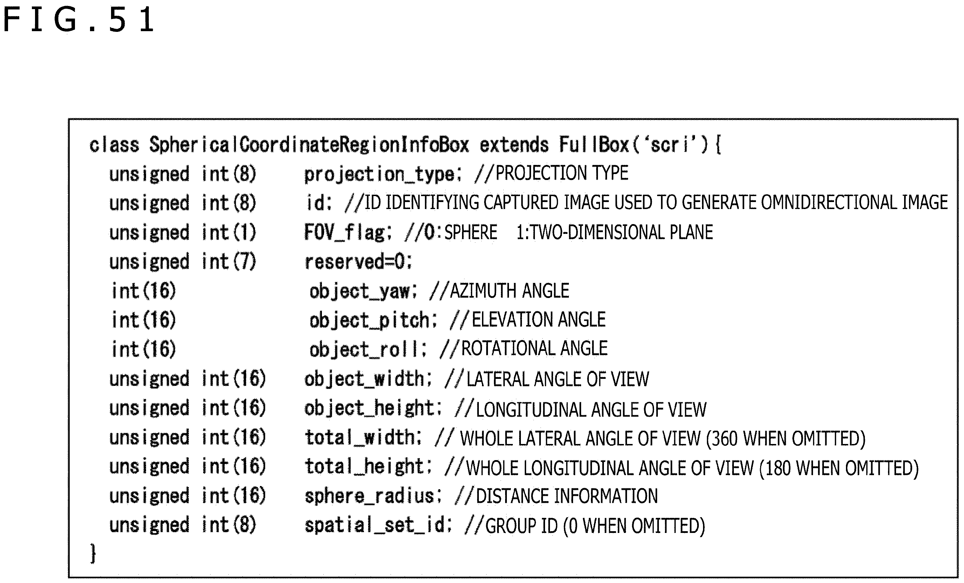

   FIG. 51 is a diagram illustrating an example of a configuration of an scri box in the first method.
[FIG. 52]

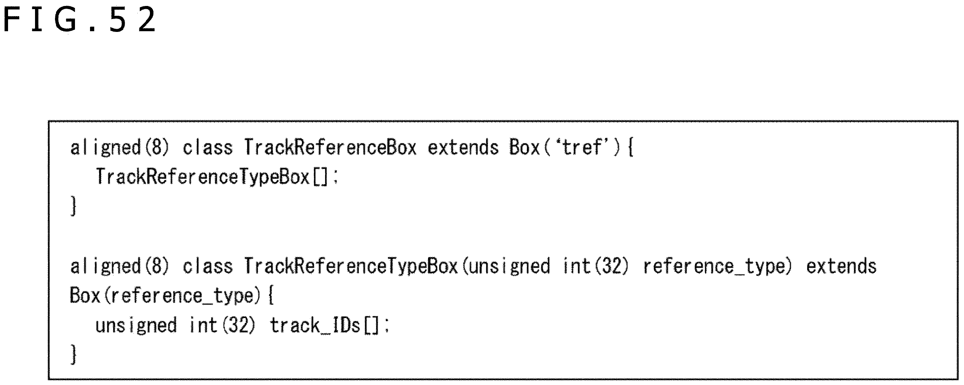

   FIG. 52 is a diagram illustrating an example of a configuration of a tref box in the first method.
[FIG. 53]

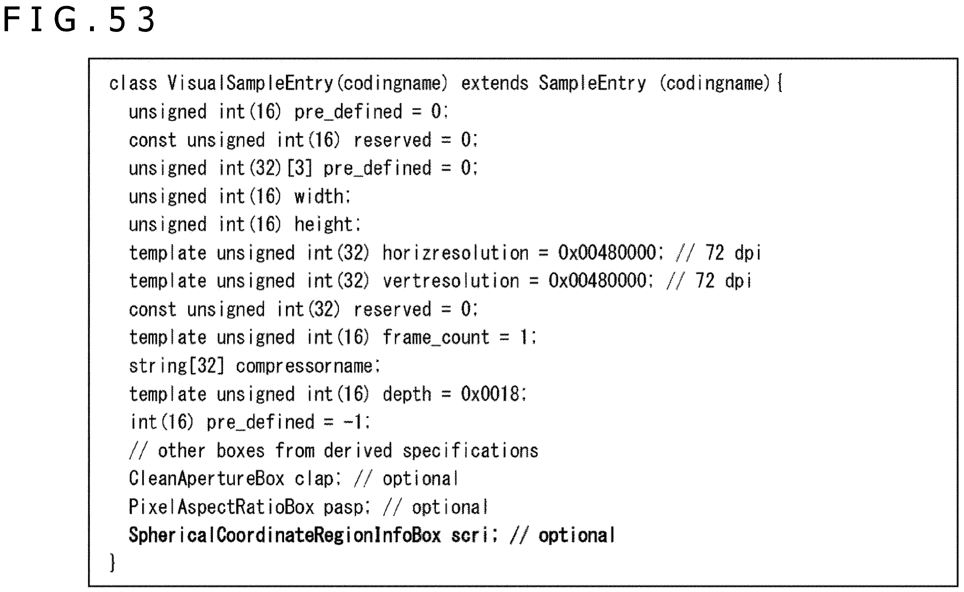

   FIG. 53 is a diagram illustrating an example of a configuration of Visual Sample Entry in a second method.
[FIG. 54]

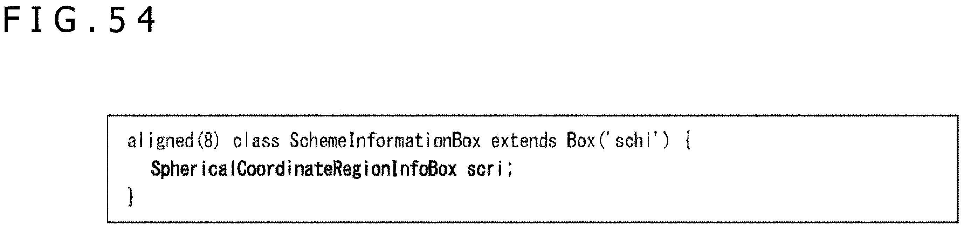

   FIG. 54 is a diagram illustrating an example of a configuration of an schi box in a third method.
[FIG. 55]

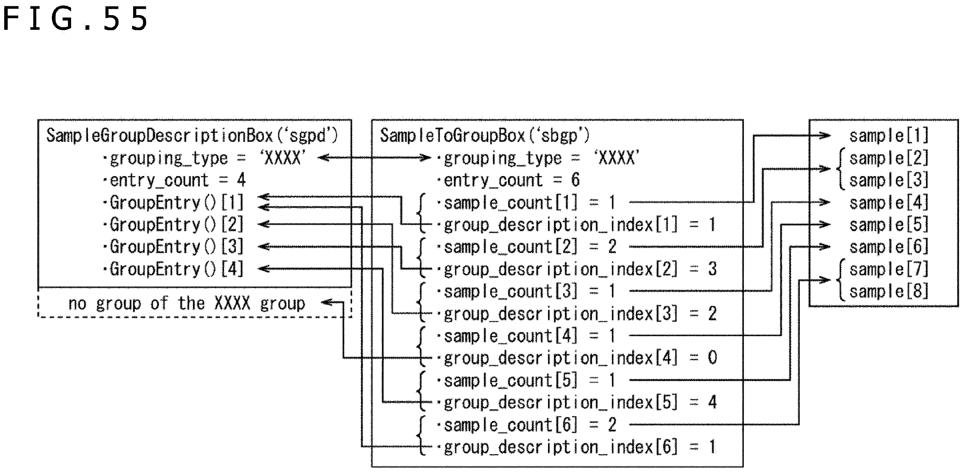

   FIG. 55 is an illustrative diagram of sample groups.
[FIG. 56]

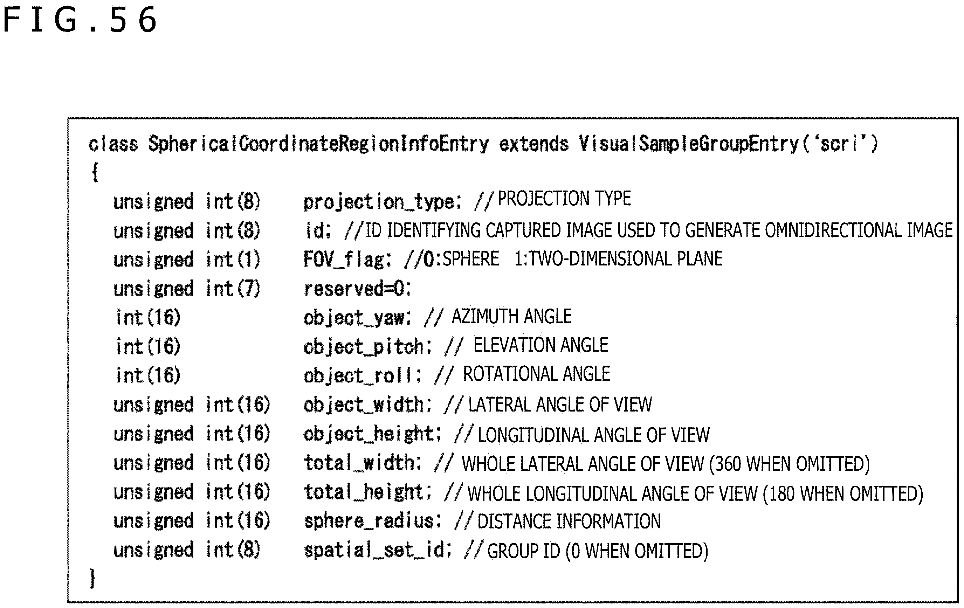

   FIG. 56 is a diagram illustrating an example of a configuration of Spherical Coordinate Region Info Entry in a fourth method.
[FIG. 57]

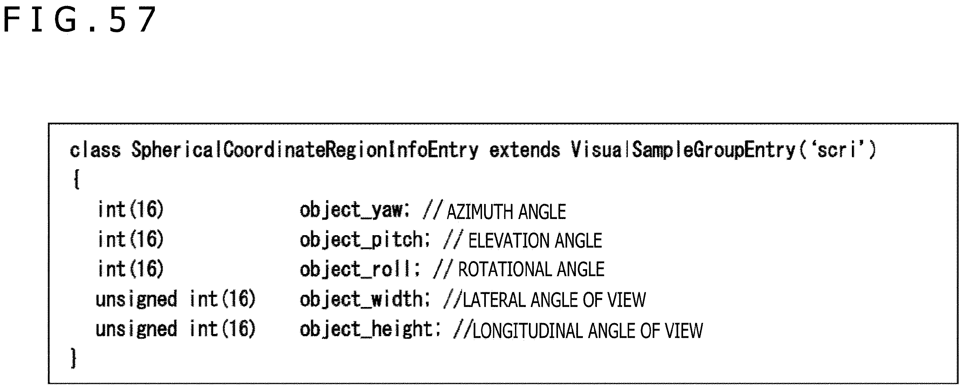

   FIG. 57 is a diagram illustrating another example of the configuration of Spherical Coordinate Region Info Entry in the fourth method.
[FIG. 58]

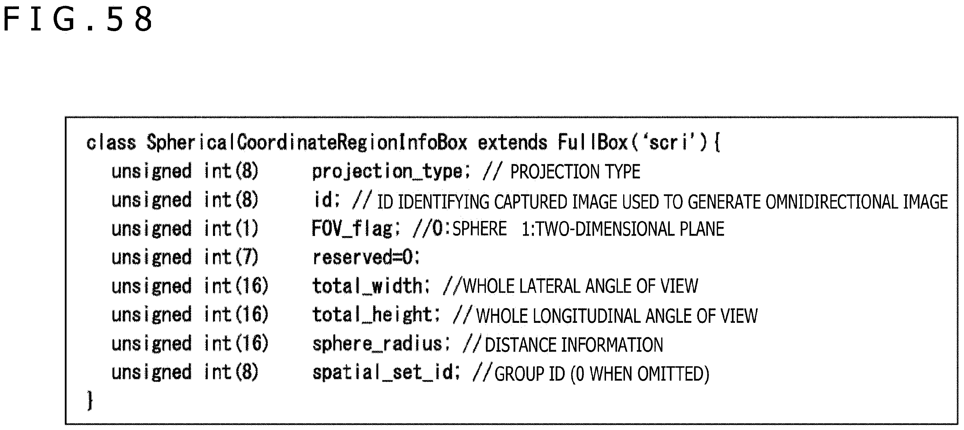

   FIG. 58 is a diagram illustrating an example of a configuration of an scri box in the fourth method.
[FIG. 59]

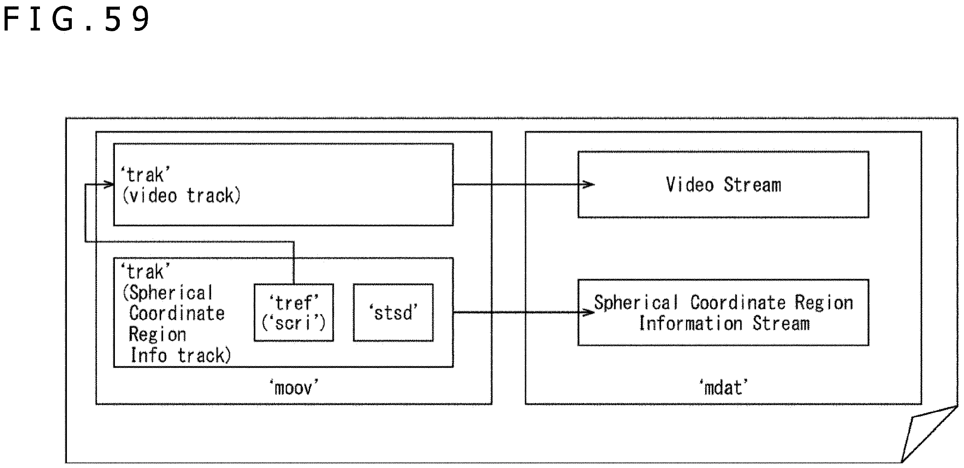

   FIG. 59 is a diagram illustrating an example of a configuration of a segment file in a fifth method.
[FIG. 60]

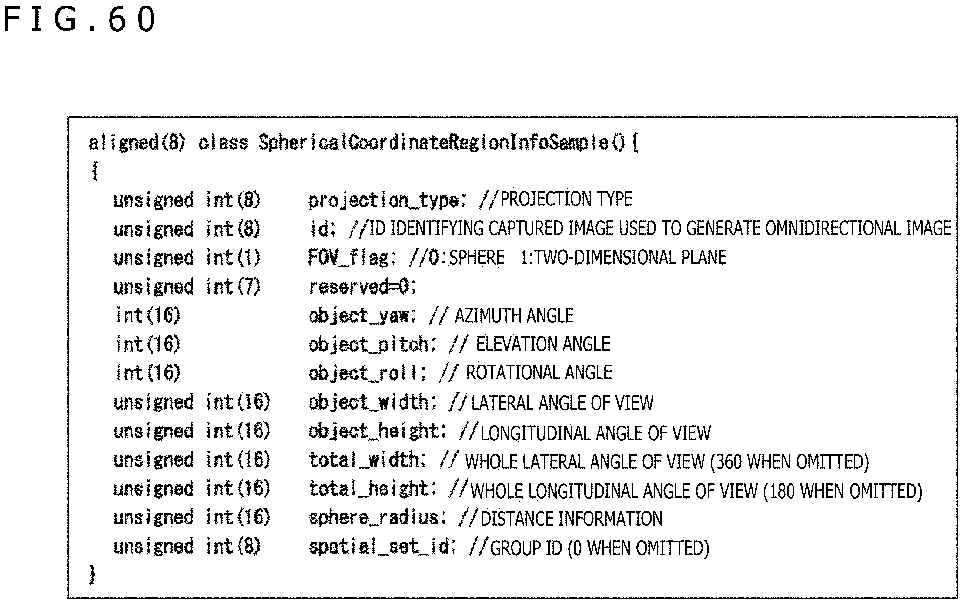

   FIG. 60 is a diagram illustrating an example of a configuration of SphericalCoordinateRegionInfoSample in the fifth method.
[FIG. 61]

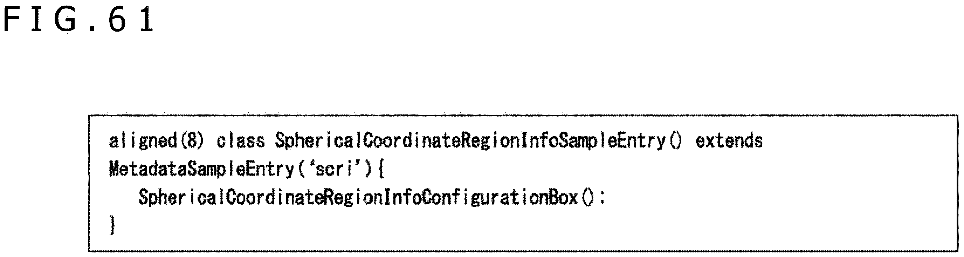

   FIG. 61 is a diagram illustrating an example of a configuration of Spherical Coordinate Region Info Sample Entry in the fifth method.
[FIG. 62]

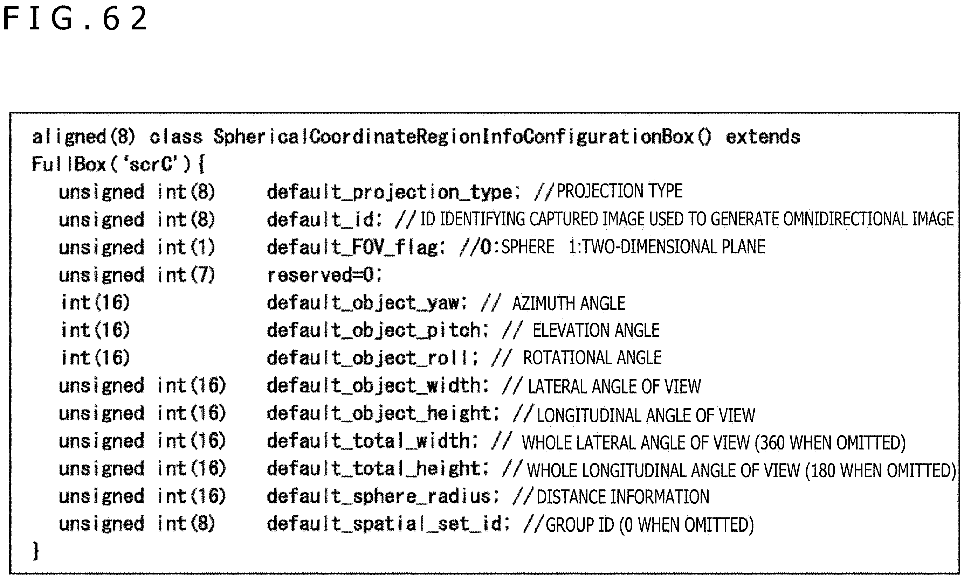

   FIG. 62 is a diagram illustrating an example of a configuration of Spherical Coordinate Region Info Configuration Box in the fifth method.
[FIG. 63]

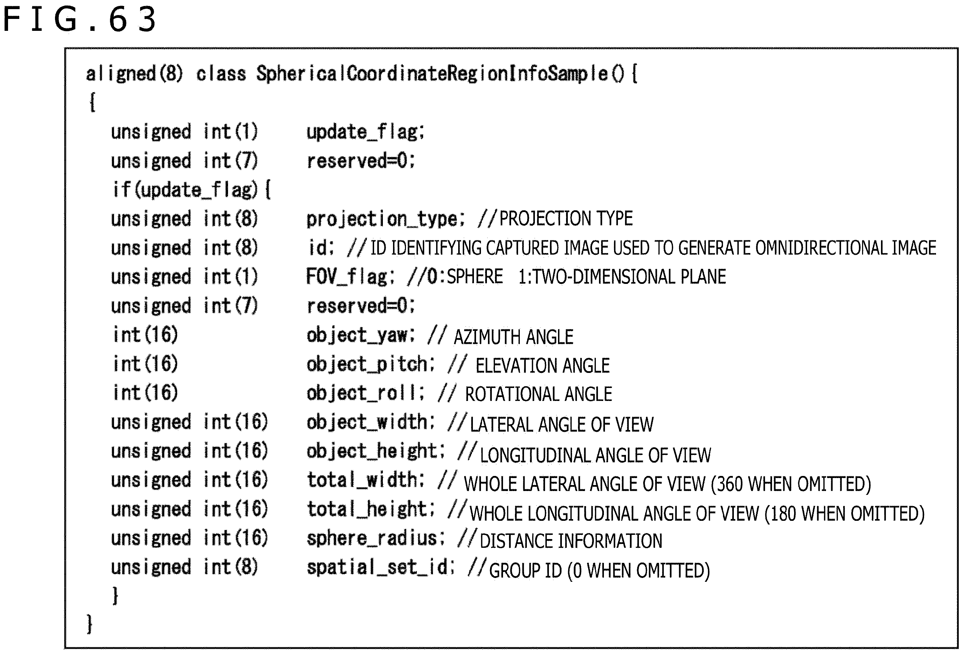

   FIG. 63 is a diagram illustrating another example of the configuration of SphericalCoordinateRegionInfoSample in the fifth method.
[FIG. 64]

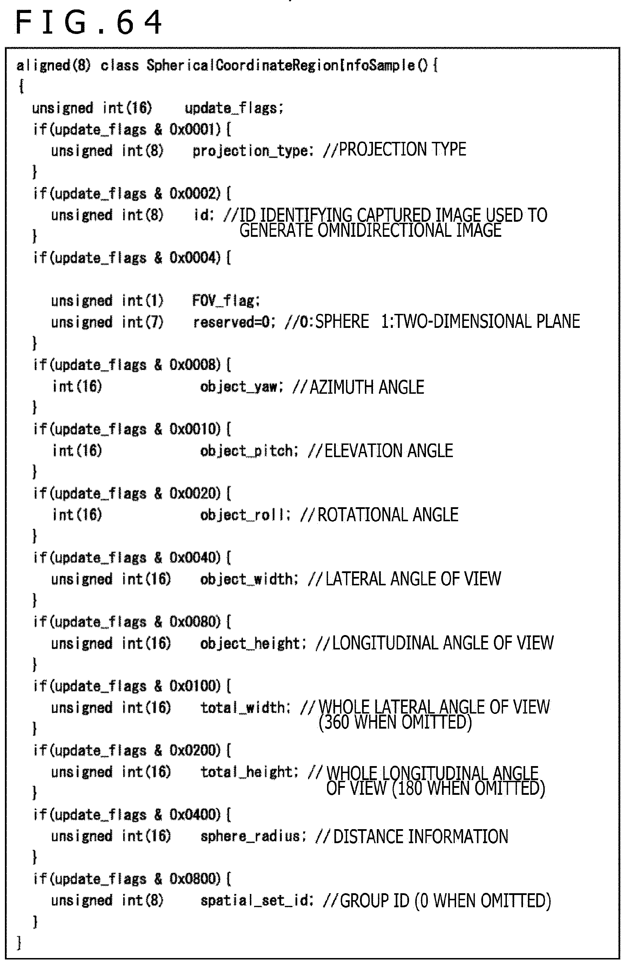

   FIG. 64 is a diagram illustrating yet another example of the configuration of SphericalCoordinateRegionInfoSample in the fifth method.
[FIG. 65]

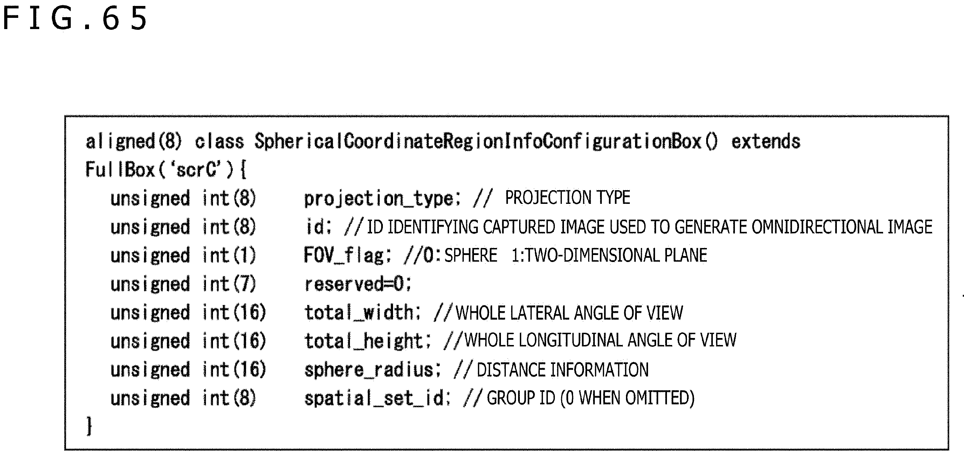

   FIG. 65 is a diagram illustrating another example of the configuration of Spherical Coordinate Region Info Configuration Box in the fifth method.
[FIG. 66]

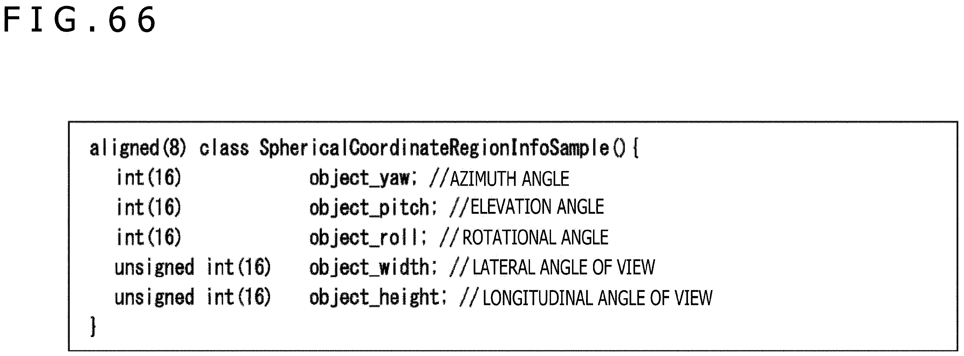

   FIG. 66 is a diagram illustrating yet another example of the configuration of SphericalCoordinateRegionInfoSample in the fifth method.
[FIG. 67]

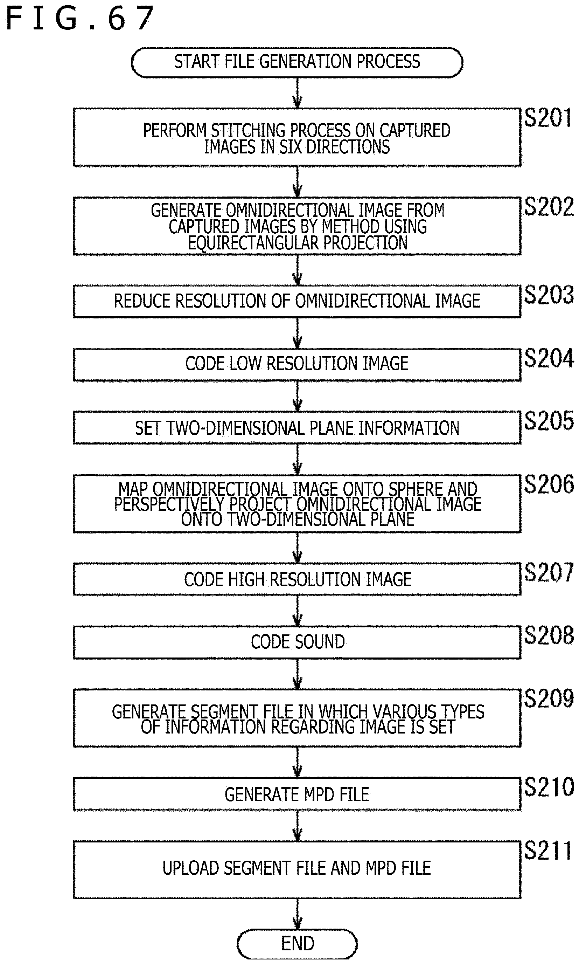

   FIG. 67 is a flowchart describing a file generation process performed by the generation device of FIG. 48.
[FIG. 68]

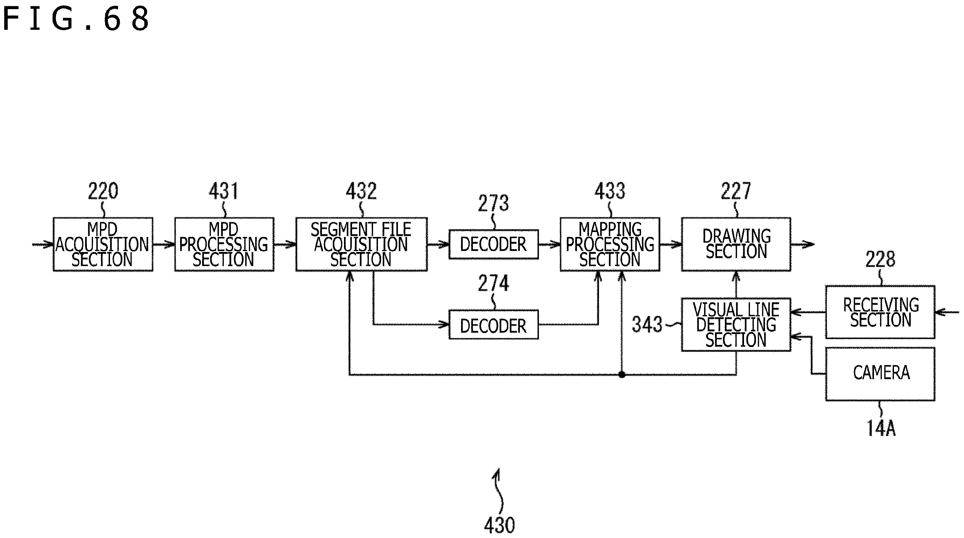

   FIG. 68 is a block diagram illustrating an example of a configuration of a reproducing device according to a fifth embodiment of a delivery system to which the present disclosure is applied.
[FIG. 69]

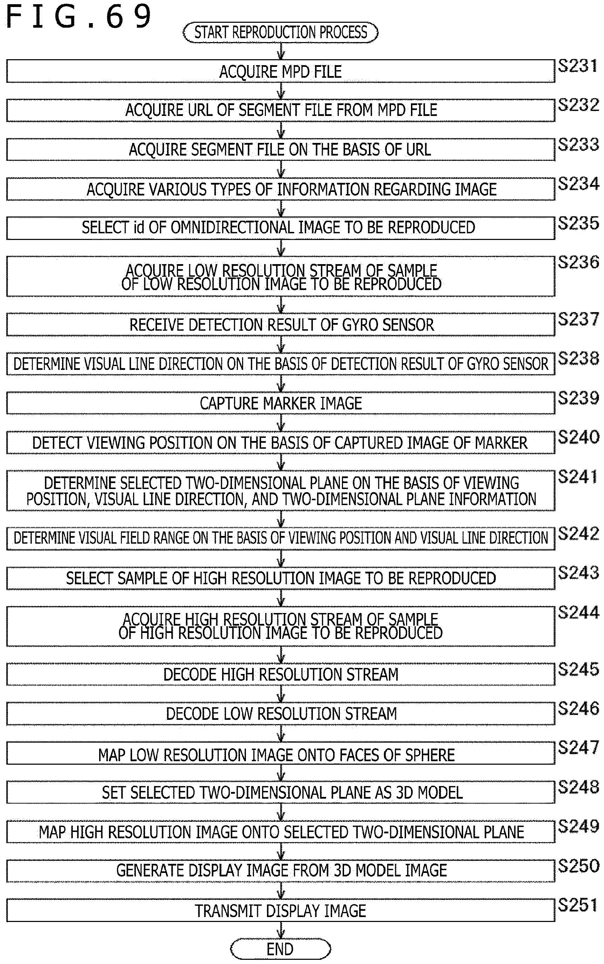

   FIG. 69 is a flowchart describing a reproducing process performed by the reproducing device of FIG. 68.
[FIG. 70]

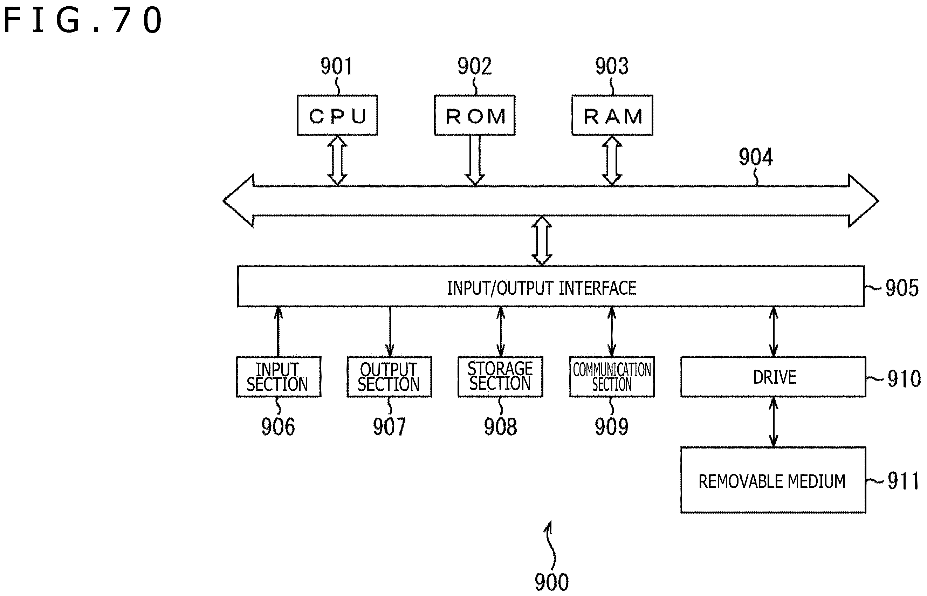

   FIG. 70 is a block diagram illustrating an example of a configuration of computer hardware.

### [Description of Embodiments]

Modes for carrying out the present disclosure (hereinafter, referred to as "embodiments") will be described hereinafter. It is noted that description will be given in the following order.
1. First embodiment: delivery system (FIGS. 1 to 12)
2. Second embodiment: delivery system (FIGS. 13 to 22)
3. Third embodiment: delivery system (FIGS. 23 to 38)
4. Fourth embodiment: delivery system (FIGS. 39 to 47)
5. Fifth embodiment: delivery system (FIGS. 48 to 69)
6. Sixth embodiment: computer (FIG. 70)

### <First embodiment>

### (Example of configuration of first embodiment of delivery system)

FIG. 1 is a block diagram illustrating an example of a configuration of a first embodiment of a delivery system to which the present disclosure is applied.

A delivery system 10 of FIG. 1 includes a photographing device 11, a generation device 12, a delivery server 13, a reproducing device 14, and a head mounted display 15. The delivery system 10 generates an omnidirectional image from captured images captured by the photographing device 11 and displays a display image in a visual field range of a viewer using the omnidirectional image.

Specifically, the photographing device 11 in the delivery system 10 includes six cameras 11A-1 to 11A-6 and a microphone 11B. In a case in which there is no need to particularly discriminate the cameras 11A-1 to 11A-6, the cameras are generically referred to as "cameras 11A" hereinafter.

Each camera 11A captures a moving image and the microphone 11B acquires a surrounding sound. The delivery system 10 supplies the captured images that are the moving images in six directions captured by the cameras 11A and the sound acquired by the microphone 11B to the generation device 12 as a motion video content. It is noted that the number of cameras provided in the photographing device 11 may be other than six as long as the number is equal to or greater than two.

The generation device 12 generates an omnidirectional image from the captured images supplied from the photographing device 11 by a method using equirectangular projection, encodes the omnidirectional image at bitrates equal to or higher than 1, and generates an equirectangular projected stream at each bitrate. In addition, the generation device 12 generates an omnidirectional image from the captured images by cube mapping, encodes the omnidirectional image at bitrates equal to or higher than 1, and generates a cube stream at each bitrate. Furthermore, the generation device 12 encodes the sound supplied from the photographing device 11 and generates an audio stream.

The generation device 12 files the equirectangular projected stream at each bitrate, the cube stream at each bitrate, and the audio stream in time units referred to as "segments" of approximately ten seconds. The generation device 12 uploads segment files generated as a result of filing to the delivery server 13.

While it is assumed herein that the bitrates of the equirectangular projected streams and the cube streams are equal to or higher than 1, it may be assumed that a condition (for example, image sizes) other than the bitrates is equal to or higher than 1.

In addition, the generation device 12 generates an MPD (Media Presentation Description) file that manages the segment files of the motion video content, and uploads the MPD file to the delivery server 13.

The delivery server 13 stores the segment files and the MPD file uploaded from the generation device 12. The delivery server 13 transmits the stored segment files or the stored MPD file to the reproducing device 14 in response to a request from the reproducing device 14.

The reproducing device 14 issues a request of the MPD file to the delivery server 13, and receives the MPD file transmitted to the reproducing device 14 in response to the request. In addition, the reproducing device 14 issues a request of the segment files of the omnidirectional image generated by an omnidirectional image generation method corresponding to mapping that can be performed by the reproducing device 14 on the basis of the MPD file, and receives the segment files transmitted in response to the request. The reproducing device 14 decodes the equirectangular projected stream or the cube stream contained in the received segment files. The reproducing device 14 generates a 3D model image by mapping the omnidirectional image obtained as a result of the decoding onto a 3D model.

In addition, the reproducing device 14 includes a camera 14A and captures an image of a marker 15A affixed to the head mounted display 15. The reproducing device 14 then detects a viewing position in a coordinate system of the 3D model on the basis of the captured image of the marker 15A. Furthermore, the reproducing device 14 receives a detection result of a gyro sensor 15B in the head mounted display 15 from the head mounted display 15. The reproducing device 14 determines a visual line direction of a viewer in the coordinate system of the 3D model on the basis of the detection result of the gyro sensor 15B. The reproducing device 14 determines a visual field range of the viewer located within the 3D model on the basis of the viewing position and the visual line direction.

The reproducing device 14 performs perspective projection on a 3D model image onto the visual field range of the viewer with the viewing position as a focal point, thereby generating an image in the visual field range of the viewer as the display image. The reproducing device 14 supplies the display image to the head mounted display 15.

The head mounted display 15 is worn on the head of the viewer and displays the display image supplied from the reproducing device 14. The marker 15A photographed by the camera 14A is affixed to the head mounted display 15. Therefore, the viewer can designate the viewing position by moving with the head mounted display 15 worn on the head. In addition, the head mounted display 15 includes the gyro sensor 15B and the detection result of an angular speed by the gyro sensor 15B is transmitted to the reproducing device 14. Therefore, the viewer can designate the visual line direction by rotating the head on which the head mounted display 15 is worn.

### (Example of configuration of generation device)

FIG. 2 is a block diagram illustrating an example of a configuration of the generation device 12 of FIG. 1.

The generation device 12 of FIG. 2 includes a stitching processing section 21, a mapping processing section 22, an encoder 23, a mapping processing section 24, an encoder 25, an audio acquisition section 26, an encoder 27, a segment file generation section 28, an MPD file generation section 29, and an upload section 30.

The stitching processing section 21 performs a stitching process for making uniform colors and brightness of the captured images in the six directions supplied from the cameras 11A of FIG. 1, eliminating overlaps, and connecting the captured images. The stitching processing section 21 supplies the captured images in frame units after the stitching process to the mapping processing section 22 and the mapping processing section 24.

The mapping processing section 22 generates the omnidirectional image from the captured images supplied from the stitching processing section 21 by the cube mapping. Specifically, the mapping processing section 22 maps the captured images after the stitching process as textures onto a cube, and generates an image of a development plan of the cube as the omnidirectional image. The mapping processing section 22 supplies the omnidirectional image to the encoder 23. It is noted that the stitching processing section 21 and the mapping processing section 22 may be integrated.

The encoder 23 encodes the omnidirectional image supplied from the mapping processing section 22 at bitrates equal to or higher than 1 and generates cube streams. The encoder 23 supplies the cube stream at each bitrate to the segment file generation section 28.

The mapping processing section 24 generates the omnidirectional image from the captured images supplied from the stitching processing section 21 by the method using the equirectangular projection. Specifically, the mapping processing section 24 maps the captured images after the stitching process as textures onto a sphere, and generates an image of the sphere by the equirectangular projection as the omnidirectional image. The mapping processing section 24 supplies the omnidirectional image to the encoder 25. It is noted that the stitching processing section 21 and the mapping processing section 24 may be integrated.

The encoder 25 encodes the omnidirectional image supplied from the mapping processing section 24 at bitrates equal to or higher than 1 and generates equirectangular projected streams. The encoder 25 supplies the equirectangular projected stream at each bitrate to the segment file generation section 28.

The audio acquisition section 26 acquires a sound supplied from the microphone 11B of FIG. 1 and supplies the sound to the encoder 27. The encoder 27 encodes the sound supplied from the audio acquisition section 26 and generates an audio stream. The encoder 27 supplies the audio stream to the segment file generation section 28.

The segment file generation section 28 files the equirectangular projected stream at each bitrate, the cube stream at each bitrate, and the audio stream in segment units. The segment file generation section 28 supplies segment files created as a result of the filing to the upload section 30.

The MPD file generation section 29 generates an MPD file. Specifically, the MPD file generation section 29 (setting section) sets, to the MPD file, an ID or the like as identification information for identifying captured images used for generating the omnidirectional image corresponding to a segment file for each of the segment files of the equirectangular projected streams and the cube streams.

In addition, the MPD file generation section 29 sets, to the MPD file, mapping information corresponding to a segment file for each of the segment files of the equirectangular projected streams and the cube streams, as needed.

The mapping information is information used at a time of mapping the omnidirectional image onto the 3D model so that a reference image at a predetermined position within each of the captured images after the stitching process can be mapped onto a reference position of the 3D model at a predetermined inclination (hereinafter, referred to as "reference inclination"). The mapping information includes, herein, a position of the reference image within the omnidirectional image and a rotational angle of the omnidirectional image at the reference position for setting an inclination of the reference image on the 3D model to the reference inclination at the time of mapping the omnidirectional image onto the 3D model so that the reference image is mapped at the reference position. It is noted that the reference position is, for example, a position on the 3D model corresponding to a predetermined visual line direction in a case in which the viewing position is a center of the 3D model.

In other words, since the mapping processing section 22 and the mapping processing section 24 individually perform mapping, positions and inclinations of the captured images mapped onto the reference position on the captured images often differ between the mapping processing section 22 and the mapping processing section 24. In such a case, therefore, the MPD file generation section 29 sets the mapping information. The reproducing device 14 can thereby map the reference image onto the reference position at the reference inclination on the basis of the mapping information irrespectively of the omnidirectional image generation method. The MPD file generation section 29 supplies the MPD file to the upload section 30.

The upload section 30 uploads the segment files supplied from the segment file generation section 28 and the MPD file supplied from the MPD file generation section 29 to the delivery server 13 of FIG. 1.

### (Description of cube mapping)

FIG. 3 is a perspective view illustrating a cube as the 3D model onto which the captured images are mapped by the cube mapping performed by the mapping processing section 22 of FIG. 2.

As depicted in FIG. 3, in the cube mapping performed by the mapping processing section 22, the captured images supplied from the stitching processing section 21 are mapped onto six faces 41 to 46 of a cube 40.

In the present specification, it is assumed that an axis that passes through a center O of the cube 40 and is orthogonal to faces 41 and 42 is an x-axis, an axis that is orthogonal to faces 43 and 44 is a y-axis, and an axis that is orthogonal to faces 45 and 46 is a z-axis. In addition, when distances between the center O and the faces 41 to 46 are each assumed as r, the face 41 for which x = r is also referred to as "+x face 41" as appropriate, and the face 42 for which x = -r is also referred as "-x face 42" as appropriate. Likewise, the face 43 for which y = r, the face 44 for which y = -r, the face 45 for which z = r, and the face 46 for which z = -r are also referred to as "+y face 43," "-y face 44," "+z face 45," and "-z face 46," respectively as appropriate.

The +x face 41 faces the -x face 42, the +y face 43 faces -y face 44, and the +z face 45 faces the -z face 46.

FIG. 4 is a diagram illustrating an example of an omnidirectional image generated by the cube mapping performed by the mapping processing section 22 of FIG. 2.

As depicted in FIG. 4, an omnidirectional image 50 generated by the cube mapping is an image of a development plan of a cube 40. Specifically, the omnidirectional image 50 is an image such that an image 52 of the -x face 42, an image 55 of the +z face 45, an image 51 of the +x face 41, and an image 56 of the -z face 46 are disposed in order from the left at a center, an image 53 of the +y face 43 is disposed on the image 55, and an image 54 of the -y face 44 is disposed under the image 55.

In the present specification, it is assumed that a horizontal size of the omnidirectional image 50 is 4096 pixels, a vertical size thereof is 3072 pixels, and horizontal and vertical sizes of the images 51 to 56 are each 1024 pixels.

### (Description of method using equirectangular projection)

FIG. 5 is a perspective view illustrating a cube as the 3D model onto which the captured images are mapped by the method using the equirectangular projection and performed by the mapping processing section 24 of FIG. 2.

As depicted in FIG. 5, with the method using the equirectangular projection by the mapping processing section 24, the captured images supplied from the stitching processing section 21 are mapped onto a face of a sphere 70. The face of the sphere 70 can be divided into, for example, eight faces 71 to 78 identical in size and shape.

In the present specification, it is assumed that an axis that passes through a center O of the sphere 70 and that passes through the center of the faces 71 and 72 is A-axis, an axis that passes through the center of the faces 73 and 74 is B-axis, an axis that passes through the center of the faces 75 and 76 is a C-axis, and an axis that passes through the center of the faces 77 and 78 is a D-axis. In addition, when distances between the center O and the faces 71 to 78 are each assumed as r, the face 71 for which A = r is also referred to as "+A face 71" as appropriate, and the face 72 for which A = -r is also referred as "-A face 72" as appropriate. Likewise, the face 73 for which B = r, the face 74 for which B = -r, the face 75 for which C = r, the face 76 for which C = -r, the face 77 for which D = r, and the face 78 for which D = -r are also referred to as "+B face 73," "-B face 74," "+C face 75," "-C face 76," "+D face 77," and "-D face 78," respectively as appropriate.

The +A face 71 faces the -A face 72, the +B face 73 faces -B face 74, the +C face 75 faces the -C face 76, and the +D face 77 faces the -D face 78.

FIG. 6 is a diagram illustrating an example of an omnidirectional image generated by the method using the equirectangular projection and performed by the mapping processing section 24 of FIG. 2.

As depicted in FIG. 6, an omnidirectional image 90 generated by the method using the equirectangular projection is an image of the sphere 70 by the equirectangular projection. Therefore, abscissas (horizontal coordinates) and ordinates (vertical coordinates) of the omnidirectional image 90 correspond to longitudes and latitudes in a case in which the sphere 70 is a globe.

Specifically, the omnidirectional image 90 is an image such that an image 91 of the +A face 71, an image 93 of the +B face 73, an image 95 of the +C face 75, and an image 97 of the +D face 77 are disposed in order from the upper left, an image 96 of the -C face 76, an image 98 of the -D face 78, an image 92 of the -A face 72, and an image 94 of the -B face 74 are disposed in order from the lower left.

In the present specification, it is assumed that a horizontal size of the omnidirectional image 90 is 1920 pixels and a vertical size thereof is 960 pixels.

### (Example of MPD file)

FIG. 7 is a diagram illustrating an example of the MPD file generated by the MPD file generation section 29 of FIG. 2

In the MPD file, information such as coding schemes, coding bitrates, and image resolutions regarding segment files is hierarchized and described in an XML format.

Specifically, the MPD file hierarchically contains elements such as Period elements, AdaptationSet elements, Representation elements, and SegmentInfo elements.

In the MPD file, a motion video content corresponding to the segment file managed by the MPD file itself is divided by a predetermined time range (for example, by a program, a CM (Commercial), and the like). Each Period element is described for every divided motion video content. The Period element has information such as reproducing start clock time of a program of the motion video content (data such as a set of synchronized image data or audio data).

The AdaptationSet elements are contained in each Period element and each AdaptationSet element groups the Representation elements of the motion video content that corresponds to the Period element by media types, attributes, and the like. Each of the AdaptationSet elements has a media type, an attribute, and the like common to the motion video content corresponding to the Representation elements contained in one group.

The Representation elements are contained in each AdaptationSet element that groups the Representation elements, and are described for every segment file group of the motion video content identical in media type and attribute among the motion video contents corresponding to the Period element that is an upper layer. Each Representation element has an attribute, a URL (Uniform Resource Locator), and the like common to the segment file group corresponding to this Representation element.

Each SegmentInfo element is contained in each Representation element, and has information regarding each segment file in the segment file group corresponding to the Representation element.

In the example of FIG. 7, the segment files of each of the equirectangular projected stream, the cubic stream, and the audio stream in the time range corresponding to the Period element are classified into one group. Therefore, in the MPD file of FIG. 7, the Period element contains three AdaptationSet elements.

The first AdaptationSet element from the top is an element corresponding to the segment files of the equirectangular projected stream, and the second AdaptationSet element is an element corresponding to the segment files of the cubic stream. Since the two AdaptationSet elements are elements corresponding to the segment files of the omnidirectional image, these elements are similarly configured.

Specifically, each of the first and second AdaptationSet elements has a horizontal size width and a vertical size height of the corresponding omnidirectional image. As described above, the horizontal size of the omnidirectional image 90 corresponding to the equirectangular projected stream is 1920 pixels and the vertical size thereof is 960 pixels. Therefore, as depicted in FIG. 7, the size width of the first AdaptationSet element is 1920 pixels and the size height thereof is 960 pixels. In addition, the horizontal size of the omnidirectional image 50 corresponding to the cubic stream is 4096 pixels and the vertical size thereof is 3072 pixels. Therefore, as depicted in FIG. 7, the size width of the second AdaptationSet element is 4096 pixels and the size height thereof is 3072 pixels.

Furthermore, each of the first and second AdaptationSet elements has "SupplementalProperty schemeIdUri="http://xmlns.sony.net/metadata/mpeg/dash/cordinates/2015"" that is a SupplementalProperty indicating the omnidirectional image generation method corresponding to this AdaptationSet element by a value.

Since the first AdaptationSet element is the element corresponding to the segment files of the equirectangular projected stream, the omnidirectional image generation method corresponding to the first AdaptationSet element is the method using the equirectangular projection. Therefore, as depicted in FIG. 7, the value of "SupplementalProperty schemeIdUri="http://xmlns.sony.net/metadata/mpeg/dash/cordinates/2015"" in the first AdaptationSet element is "equirectangular" indicating the method using the equirectangular projection.

Since the second AdaptationSet element is the element corresponding to the segment files of the cubic stream, the omnidirectional image generation method corresponding to the second AdaptationSet element is the cube mapping. Therefore, as depicted in FIG. 7, the value of "SupplementalProperty schemeIdUri="http://xmlns.sony.net/metadata/mpeg/dash/cordinates/2015"" in the second AdaptationSet element is "cube" indicating the cube mapping.

Furthermore, each of the first and second AdaptationSet elements has "SupplementalProperty schemeIdUri="urn:mpeg:dash:original_source_id:2016"" that is a SupplementalProperty indicating the identification information and the mapping information regarding the captured images used for generating the omnidirectional image corresponding to this AdaptationSet element by a value.

In the example of FIG. 7, ID and "X,Y,λ" are set to the value of "SupplementalProperty schemeIdUri="urn:mpeg:dash:original_source_id:2016"." As depicted in FIG. 8, the ID is the identification information regarding the captured images used for generating the omnidirectional image. In addition, X is an X coordinate of the position of the reference image within the omnidirectional image among the mapping information regarding the omnidirectional image, and Y is a Y coordinate of the position of the reference image within the omnidirectional image among the mapping information. Furthermore, λ is a rotational angle among the mapping information.

Since the captured images used for generating the omnidirectional image 50 and those used for generating the omnidirectional image 90 corresponding to the first and second AdaptationSet elements are identical, the identification information has an identical value (1 in the example of FIG. 7). In addition, in the example of FIG. 7, the coordinates of the position of the reference image within the omnidirectional image 90 corresponding to the equirectangular projected stream are (960,480) and the rotational angle is 0 degrees. In the example depicted in FIG. 7, "I" is added to a top of a block storing the identification information and "B" is added to a top of a block storing the mapping information. In addition, pieces of information in the block are delimited with a comma (,) and the blocks are delimited with a space. Therefore, the value of "SupplementalProperty schemeIdUri="urn:mpeg:dash:original_source_id:2016"" of the first AdaptationSet element is "I1 B960,480,0." In other words, in this case, "1" in "I1" is the identification information, and "960" in "B960,480,0" is the X coordinate, "480" therein is the Y coordinate, and "0" therein is the rotational angle.

In addition, in the example of FIG. 7, the coordinates of the position of the reference image within the omnidirectional image 50 corresponding to the cubic stream are (1530,1524) and the rotational angle is 0 degrees. Therefore, the value of "SupplementalProperty schemeIdUri="urn:mpeg:dash:original_source_id:2016"" in the second AdaptationSet element is "I1 B1530,1524,0." In other words, in this case, "1" in "I1" is the identification information, and "1530" in "B1530,1524,0" is the X coordinate, "1524" therein is the Y coordinate, and "0" therein is the rotational angle.

In the example of FIG. 7, the mapping information is described in each of the first and second AdaptationSet elements since the reference image is not mapped onto the reference position of the 3D model at the reference inclination at a time of generating each of the omnidirectional images 50 and 90. However, in a case of mapping at the reference inclination, the mapping information is not described.

The third AdaptationSet element from the top is an element corresponding to the segment files of the audio stream.

In addition, in the example of FIG. 7, each AdaptationSet element contains one Representation element. In the Representation elements in the first to third AdaptationSet elements from the top, for example, "equirectangular.mp4," "cube.mp4," and "audio.mp4" are described as URLs (BaseURLs) which form the basis of the segment files corresponding to the Representation elements, respectively. It is noted that FIG. 7 omits the description of SegmentInfo elements.

As described so far, in the MPD file, SupplementalProperty that indicates the omnidirectional image generation method by a value, and SupplementalProperty that indicates the identification information and the mapping information by a value are set.

Therefore, the reproducing device 14 can select, as the segment files to be reproduced, the segment files of the omnidirectional image generated by the generation method corresponding to the mapping that can be performed by the reproducing device 14 from among the segment files to which the identical identification information is set, on the basis of the MPD file.

In addition, the reproducing device 14 can map the reference image onto the reference position of the 3D model at the reference inclination by mapping the omnidirectional image corresponding to the segment files to be reproduced using the mapping information.

It is noted that the identification information and the mapping information may be described not on SupplementalProperty but in EssentialProperty. In a case of describing the identification information and the mapping information in SupplementalProperty, the reproducing device incapable of understanding this SupplementalProperty can use information regarding the MPD file except for this SupplementalProperty. On the other hand, in a case of describing the identification information and the mapping information in EssentialProperty, the reproducing device incapable of understanding this EssentialProperty is unable to use all the information regarding the elements including this EssentialProperty.

In addition, the identification information and the mapping information may be contained in elements such as the Representation element other than the AdaptationSet element.

### (Description of mapping information)

FIG. 9 is an illustrative diagram of the mapping information regarding the segment file of the equirectangular projected stream.

As depicted in FIG. 9, the mapping information regarding the segment file of the equirectangular projected stream contains coordinates of a position 111 of the reference image within the omnidirectional image 90 generated by the method using the equirectangular projection.

In addition, the mapping information regarding the segment file of the equirectangular projected stream contains the rotational angle λ that is the angle of rotation of the omnidirectional image 90 in a counterclockwise direction that is necessary to set the inclination of the reference image on the sphere 70 to the reference inclination at a time of mapping the omnidirectional image 90 onto the sphere 70 so that the position 111 can be mapped onto the reference position and that is indicated by an arrow 112 about a line connecting the position 111 on the sphere 70 to the center O of the sphere 70 assumed as an axis.

It is noted that the mapping information may be an Euler angle (α,β,γ) or a quaternion (q0,q1,q2,q3) indicating the rotational angle of the omnidirectional image at the time of mapping the omnidirectional image onto the 3D model so that the reference image can be mapped onto the reference position at the reference inclination.

In a case in which the mapping information is the Euler angle (α,β,γ), the reproducing device 14 maps the omnidirectional image onto the 3D model as it is and then rotates the mapped omnidirectional image three times on the 3D model on the basis of the Euler angle (α,β,γ).

Specifically, first, the reproducing device 14 rotates the omnidirectional image mapped onto the 3D model by an Euler angle α about the y-axis on the basis of the Euler angle (α,β,γ). Next, the reproducing device 14 rotates the omnidirectional image rotated about the y-axis by the Euler angle α about the x-axis by the Euler angle β. Lastly, the reproducing device 14 rotates the omnidirectional image rotated about the x-axis by the Euler angle β about the z-axis by the Euler angle γ. The omnidirectional image mapped onto the reference position of the 3D model after rotation three times thereby becomes the reference image at the reference inclination.

While it is described herein that the omnidirectional image is rotated in order of the y-axis, the x-axis, and the z-axis, an order of rotation is not limited to this order. In a case in which the mapping information is the Euler angle (α,β,γ), parameters indicating the order of rotation may be contained in the mapping information.

In addition, in a case in which the mapping information is the quaternion (q0,q1,q2,q3) (quaternion), the reproducing device 14 maps the omnidirectional image onto the 3D model as it is and then rotates the mapped omnidirectional image once on the 3D model on the basis of the quaternion (q0,q1,q2,q3).

### (Description of process performed by generation device)

FIG. 10 is a flowchart describing a file generation process performed by the generation device 12 of FIG. 2.

In Step S11 of FIG. 10, the stitching processing section 21 performs a stitching process on the captured images in the six directions supplied from the cameras 11A of FIG. 1 for every frame. The stitching processing section 21 supplies the captured images in frame units obtained as a result of the stitching process to the mapping processing section 22 and the mapping processing section 24.

In Step S12, the mapping processing section 22 generates the omnidirectional image 50 from the captured images supplied from the stitching processing section 21 by the cube mapping, and supplies the omnidirectional image 50 to the encoder 23.

In Step S13, the encoder 23 encodes the omnidirectional image 50 supplied from the mapping processing section 22 and generated by the cube mapping at bitrates equal to or higher than 1 and generates cube streams. The encoder 23 supplies the cube stream at each bitrate to the segment file generation section 28.

In Step S14, the mapping processing section 24 generates the omnidirectional image 90 from the captured images supplied from the stitching processing section 21 by the method using the equirectangular projection, and supplies the omnidirectional image 90 to the encoder 25.

In Step S15, the encoder 25 encodes the omnidirectional image 90 supplied from the mapping processing section 24 and generated by the method using the equirectangular projection at bitrates equal to or higher than 1 and generates equirectangular projected streams. The encoder 25 supplies the equirectangular projected stream at each bitrate to the segment file generation section 28.

In Step S16, the encoder 27 encodes the sound acquired from the microphone 11B of FIG. 1 via the audio acquisition section 26 and generates an audio stream. The encoder 27 supplies the audio stream to the segment file generation section 28.

In Step S17, the segment file generation section 28 files the equirectangular projected stream at each bitrate, the cube stream at each bitrate, and the audio stream in segment units, and generates segment files. The segment file generation section 28 supplies the segment files to the upload section 30.

In Step S18, the MPD file generation section 29 sets the identical ID as the identification information regarding the segment files of all the equirectangular projected streams and all the cube streams.

In Step S19, the MPD file generation section 29 determines whether the captured images mapped onto the reference position of the 3D model by the mapping processing section 22 and the mapping processing section 24 are the reference image at the reference inclination.

In a case of determining in Step S19 that the captured images mapped onto the reference position by at least one of the mapping processing section 22 or the mapping processing section 24 are not the reference image at the reference inclination, the process goes to Step S20.

In Step S20, the MPD file generation section 29 generates the MPD file containing the identification information and the mapping information. Specifically, the MPD file generation section 29 sets the identification information set in Step S18 to the AdaptationSet elements corresponding to the equirectangular projected stream and the cube stream in the MPD file. In addition, the MPD file generation section 29 further sets the mapping information to the AdaptationSet element corresponding to the omnidirectional image generated by mapping performed by at least one of the mapping processing section 22 or the mapping processing section 24 from the 3D model for which the captured images mapped onto the reference position are not the reference image at the reference inclination. The MPD file generation section 29 supplies the generated MPD file to the upload section 30, and the process goes to Step S22.

On the other hand, in a case of determining in Step S19 that the captured images mapped onto the reference position by both of the mapping processing section 22 and the mapping processing section 24 are the reference images at the reference inclination, the process goes to Step S21.

In Step S21, the MPD file generation section 29 generates the MPD file that contains the AdaptationSet elements corresponding to the equirectangular projected stream and the cube stream and containing the identification information set in Step S18. The MPD file generation section 29 supplies the generated MPD file to the upload section 30, and the process goes to Step S22.

In Step S22, the upload section 30 uploads the segment files supplied from the segment file generation section 28 and the MPD file supplied from the MPD file generation section 29 to the delivery server 13 of FIG. 1, and the process ends.

### (Example of configuration of reproducing device)

FIG. 11 is a block diagram illustrating an example of a configuration of the reproducing device 14 of FIG. 1.

The reproducing device 14 of FIG. 11 includes the camera 14A, an MPD acquisition section 220, an MPD processing section 221, a segment file acquisition section 222, a decoder 223, a mapping processing section 226, a drawing section 227, a receiving section 228, and a visual line detecting section 229.

The MPD acquisition section 220 in the reproducing device 14 issues a request of the MPD file to the delivery server 13 of FIG. 1 and acquires the MPD file. The MPD acquisition section 220 supplies the acquired MPD file to the MPD processing section 221.

The MPD processing section 221 analyzes the MPD file supplied from the MPD acquisition section 220. Specifically, the MPD processing section 221 (selection section) recognizes the value to which I is assigned in the value of "SupplementalProperty schemeIdUri="urn:mpeg:dash:original_source_id:2016"" contained in each AdaptationSet element as the identification information. In addition, the MPD processing section 221 selects the AdaptationSet element containing the predetermined identification information on the basis of the identification information regarding each AdaptationSet element. For example, in a case in which a configuration of the MPD file is that of FIG. 7, the MPD processing section 221 selects the first and second AdaptationSet elements containing the identification information of 1.

Furthermore, the MPD processing section 221 selects the AdaptationSet element containing the omnidirectional image generation method corresponding to a scheme of mapping by the mapping processing section 226 from among the AdaptationSet elements containing the predetermined identification information as the AdaptationSet element to be reproduced.

In the example of FIG. 11, the scheme of mapping by the mapping processing section 226 is a scheme for performing mapping using the cube as the 3D model, as described later. Therefore, the MPD processing section 221 selects the AdaptationSet element containing the cube mapping for performing mapping using the cube as the 3D model as the omnidirectional image generation method as the AdaptationSet element to be reproduced. In other words, the MPD processing section 221 selects the AdaptationSet element in which the value of "SupplementalProperty schemeIdUri="http://xmlns.sony.net/metadata/mpeg/dash/cordinates/2015"" is "cube."

The MPD processing section 221 acquires information such as URLs of the segment files at reproducing clock time from the Representation element in the selected AdaptationSet element, and supplies the information to the segment file acquisition section 222. In addition, in a case in which the selected AdaptationSet element contains the mapping information, the MPD processing section 221 supplies the mapping information to the mapping processing section 226.

The segment file acquisition section 222 issues a request of the segment files identified by the URLs supplied from the MPD processing section 221 to the delivery server 13 on the basis of the URLs and acquires the segment file. The segment file acquisition section 222 supplies the cubic stream contained in the acquired segment files to the decoder 223.

The decoder 223 decodes the cubic stream supplied from the segment file acquisition section 222 and generates the omnidirectional image 50. The decoder 223 supplies the generated omnidirectional image 50 to the mapping processing section 226.

In a case in which the MPD processing section 221 supplies the mapping information, the mapping processing section 226 disposes the reference image within the omnidirectional image supplied from the decoder 223 at the reference position on the basis of the mapping information, rotates the omnidirectional image 50 by the rotational angle, and maps the omnidirectional image 50 onto the faces 41 to 46 of the cube 40 as textures.

On the other hand, in a case in which the MPD processing section 221 does not supply the mapping information, the mapping processing section 226 maps the omnidirectional image 50 onto the faces 41 to 46 of the cube 40 as textures as they are. The mapping processing section 226 supplies the 3D model image obtained as a result of the mapping to the drawing section 227.

The drawing section 227 performs perspective projection of the 3D model image supplied from the mapping processing section 226 onto the visual field range of the viewer with the viewing position supplied from the visual line detecting section 229 as a focal point, thereby generating an image in the visual field range of the viewer as a display image. The drawing section 227 supplies the display image to the head mounted display 15.

The receiving section 228 receives the detection result of the gyro sensor 15B of FIG. 1 from the head mounted display 15 and supplies the detection result to the visual line detecting section 229.

The visual line detecting section 229 determines the visual line direction of the viewer in the coordinate system of the 3D model on the basis of the detection result of the gyro sensor 15B supplied from the receiving section 228. In addition, the visual line detecting section 229 acquires the captured image of the marker 15A from the camera 14A, and detects the viewing position in the coordinate system of the 3D model on the basis of the captured image. The visual line detecting section 229 determines the visual field range of the viewer in the coordinate system of the 3D model on the basis of the viewing position and the visual line direction in the coordinate system of the 3D model. The visual line detecting section 229 supplies the visual field range and the viewing position of the viewer to the drawing section 227.

It is noted that the scheme of mapping by the mapping processing section 226 may be a scheme of mapping using the sphere as the 3D model.

In this case, the MPD processing section 221 selects the AdaptationSet element containing the method using the equirectangular projection for performing mapping using the sphere as the 3D model as the omnidirectional image generation method, as the AdaptationSet element to be reproduced. In other words, the MPD processing section 221 selects the AdaptationSet element in which the value of "SupplementalProperty schemeIdUri="http://xmlns.sony.net/metadata/mpeg/dash/cordinates/2015"" is "equirectangular," as the AdaptationSet element to be reproduced. As a result, the segment file acquisition section 222 acquires the segment files of the equirectangular projected stream.

### (Process performed by reproducing device)

FIG. 12 is a flowchart describing a reproducing process performed by the reproducing device 14 of FIG. 11.

In Step S31 of FIG. 12, the MPD acquisition section 220 in the reproducing device 14 issues a request of the MPD file to the delivery server 13 of FIG. 1 and acquires the MPD file. The MPD acquisition section 220 supplies the acquired MPD file to the MPD processing section 221.

In Step S32, the MPD processing section 221 recognizes the value to which I is assigned in the value of "SupplementalProperty schemeIdUri="urn:mpeg:dash:original_source_id:2016"" contained in each AdaptationSet element of the MPD file as the identification information.

In Step S33, the MPD processing section 221 selects the predetermined identification information from among the identification information regarding each AdaptationSet element as the identification information regarding the omnidirectional image to be reproduced.

In Step S34, the MPD processing section 221 acquires URLs of the segment files of the cubic stream of the omnidirectional image 50 to be reproduced from the MPD file. Specifically, the MPD processing section 221 acquires the URLs of the segment files at the reproducing clock time from the Representation element in the AdaptationSet element described in the MPD file and containing the identification information regarding the omnidirectional image to be reproduced and the cube mapping as the omnidirectional image generation method. The MPD processing section 221 supplies the acquired URLs to the segment file acquisition section 222.

In Step S35, the segment file acquisition section 222 issues a request of the segment files identified by the URLs to the delivery server 13 on the basis of the URLs supplied from the MPD processing section 221, and acquires the segment files. The segment file acquisition section 222 supplies the cubic stream contained in the acquired segment files to the decoder 223.

In Step S36, the decoder 223 decodes the cubic stream supplied from the segment file acquisition section 222, and generates the omnidirectional image 50. The decoder 223 supplies the generated omnidirectional image 50 to the mapping processing section 226.

In Step S37, the receiving section 228 receives the detection result of the gyro sensor 15B from the head mounted display 15 and supplies the detection result to the visual line detecting section 229.

In Step S38, the visual line detecting section 229 determines the visual line direction of the viewer in the coordinate system of the 3D model on the basis of the detection result of the gyro sensor 15B supplied from the receiving section 228.

In Step S39, the camera 14A captures the image of the marker 15A and supplies the image to the visual line detecting section 229. In Step S40, the visual line detecting section 229 detects the viewing position in the coordinate system of the 3D model on the basis of the captured image of the marker 15A supplied from the camera 14A.

In Step S41, the visual line detecting section 229 determines the visual field range of the viewer on the basis of the viewing position and the visual line direction in the coordinate system of the 3D model. The visual line detecting section 229 supplies the visual field range and the viewing position of the viewer to the drawing section 227.

In Step S42, the MPD processing section 221 determines whether the AdaptationSet element containing the identification information regarding the omnidirectional image to be reproduced and the cube mapping as the omnidirectional image generation method contains the mapping information.

In a case of determining in Step S42 that the AdaptationSet element contains the mapping information, the MPD processing section 221 supplies the mapping information to the mapping processing section 226 and the process goes to Step S43.

In Step S43, the mapping processing section 226 maps the omnidirectional image 50 supplied from the decoder 223 onto the faces 41 to 46 of the cube 40 as textures on the basis of the mapping information. The omnidirectional image 50 mapped onto the reference position of the cube 40 thereby becomes the reference image at the reference inclination. The mapping processing section 226 supplies the 3D model image obtained as a result of the mapping to the drawing section 227, and the process goes to Step S45.

On the other hand, in a case of determining in Step S42 that the AdaptationSet element does not contain the mapping information, the mapping processing section 226 maps the omnidirectional image 50 onto the faces 41 to 46 of the cube 40 as textures in Step S44.

In a case in which the AdaptationSet element does not contain the mapping information, the omnidirectional image 50 corresponding to the AdaptationSet element is the omnidirectional image 50 for which the reference image at the reference inclination is mapped onto the reference position of the cube 40 only by mapping the omnidirectional image onto the cube 40. Therefore, through the process in Step S44, the reference image at the reference inclination is mapped onto the reference position of the cube 40. The mapping processing section 226 supplies the 3D model image obtained as a result of the mapping to the drawing section 227, and the process goes to Step S45.

In Step S45, the drawing section 227 performs perspective projection of the 3D model image supplied from the mapping processing section 226 onto the visual field range of the viewer with the viewing position supplied from the visual line detecting section 229 as a focal point, thereby generating an image in the visual field range of the viewer as the display image.

In Step S46, the drawing section 227 transmits the display image to the head mounted display 15 of FIG. 1 to display the display image thereon, and the process ends.

As described so far, the generation device 12 sets the identification information to the MPD file. Therefore, the reproducing device 14 can recognize the captured images used for generating the omnidirectional image on the basis of the identification information. As a result, the reproducing device 14 can select the appropriate omnidirectional image from among the omnidirectional images generated from the identical captured images as an object to be reproduced.

In addition, the generation device 12 generates the omnidirectional images by a plurality of generation methods; thus, it is possible to increase the number of reproducing devices capable of reproducing the omnidirectional images generated by the generation device 12.

It is noted that the mapping information may not be described in the MPD file whether the reference image is mapped onto the reference position of the 3D model at the reference inclination at the time of generating the omnidirectional image in the first embodiment.

### <Second embodiment>

### (Example of configuration of generation device)

A configuration of a second embodiment of a delivery system to which the present disclosure is applied is identical to that of the delivery system 10 of FIG. 1 except for configurations of a generation device and a reproducing device. Therefore, only the generation device and the reproducing device will be described hereinafter.

FIG. 13 is a block diagram illustrating an example of the configuration of the generation device according to the second embodiment of the delivery system to which the present disclosure is applied.

In the configurations depicted in FIG. 13, same configurations as those in FIG. 2 are denoted by the same reference characters. Repetitive description will be omitted, as appropriate.

A generation device 250 of FIG. 13 differs in configuration from the generation device 12 of FIG. 2 in that encoders 254-1 to 254-6, an encoder 252, a segment file generation section 255, and an MPD file generation section 256 are provided as an alternative to the encoder 23, the encoder 25, the segment file generation section 28, and the MPD file generation section 29, respectively, and in that a resolution reduction section 251 and a split section 253 are newly provided.

The generation device 250 reduces a resolution of the omnidirectional image 90 generated by the method using the equirectangular projection to encode the resultant omnidirectional image 90, and splits the omnidirectional image 50 generated by the cubic mapping to encode the split images.

Specifically, the resolution reduction section 251 in the generation device 250 reduces the resolution of the omnidirectional image 90 supplied from the mapping processing section 24 by halving the resolution of the omnidirectional image 90 in horizontal and vertical directions, and generates a low resolution image. The resolution reduction section 251 supplies the low resolution image to the encoder 252.

The encoder 252 encodes the low resolution image supplied from the resolution reduction section 251 at bitrates equal to or higher than 1 and generates low resolution streams. The encoder 252 supplies the low resolution stream to the segment file generation section 255.

The split section 253 splits the omnidirectional image 50 supplied from the mapping processing section 22 into the images 51 to 56 of the six faces 41 to 46. The split section 253 supplies the images 51 to 56 to the encoders 254-1 to 254-6 as high resolution images.

The encoders 254-1 to 254-6 encode the high resolution images supplied from the split section 253 at bitrates equal to or higher than 1. The encoders 254-1 to 254-6 supply high resolution streams of the faces 41 to 46 generated as a result of the encoding to the segment file generation section 255.

The segment file generation section 255 files the low resolution stream at each bitrate, the high resolution streams of the faces 41 to 46 at each bitrate, and an audio stream in segment units. The segment file generation section 255 supplies segment files generated as a result of the filing to the upload section 30.

The MPD file generation section 256 generates an MPD file. Specifically, the MPD file generation section 256 sets, to the MPD file, an ID or the like as identification information for identifying captured images corresponding to a segment file for each of the segment files of the low resolution streams and the high resolution streams.

In addition, the MPD file generation section 256 sets, to the MPD file, mapping information corresponding to a segment file for each of the segment files of the low resolution streams and the high resolution streams, as needed. The MPD file generation section 256 supplies the MPD file to the upload section 30.

### (First example of MPD file)

FIG. 14 is a diagram illustrating a first example of the MPD file generated by the MPD file generation section 256 of FIG. 13.

In the example of FIG. 14, the segment files of each of the low resolution stream, the high resolution streams of the faces 41 to 46, and the audio stream in the time range corresponding to each Period element are classified into one group. Therefore, in the MPD file of FIG. 14, the Period element contains eight AdaptationSet elements. In addition, in the example of FIG. 14, the identification information regarding the omnidirectional images 50 and 90 and the mapping information are identical to those in the example of FIG. 7.

The first AdaptationSet element from the top is an element corresponding to the segment file of the low resolution stream. This AdaptationSet element is identical to the first AdaptationSet element of FIG. 7 except for the horizontal size width, the vertical size height, and the value of "SupplementalProperty schemeIdUri="urn:mpeg:dash:original_source_id:2016"."

In other words, an image corresponding to the first AdaptationSet element is not the omnidirectional image 90 generated by the mapping processing section 24 but the low resolution image. In addition, the horizontal and vertical resolutions of the low resolution image are half of the horizontal and vertical resolutions of the omnidirectional image 90, respectively. Therefore, the horizontal size width of the first AdaptationSet element is 960 (= 1920/2) pixels and the vertical size height thereof is 480 (= 960/2) pixels.

In addition, the captured images used for generating the low resolution image are those used for generating the omnidirectional image 90 and the ID of the captured images as the identification information is "1." However, in the example of FIG. 14, the mapping information regarding the low resolution image is coordinates (480,240) of the position of the reference image within the low resolution image and the rotational angle of 0 degrees. Therefore, the value of "SupplementalProperty schemeIdUri="urn:mpeg:dash:original_source_id:2016"" is "I1 B480,240,0." In other words, in a case of FIG. 14, similarly to the case of FIG. 7, "I" is added to the top of the block storing the identification information in the value and "B" is added to the top of the block storing the mapping information. In addition, pieces of information in the block are delimited with a comma (,) and the blocks are delimited with a space.

The second to seventh AdaptationSet elements from the top are element corresponding to the segment files of the high resolution streams of the faces 41 to 46, respectively. The AdaptationSet elements are identical to the second AdaptationSet element of FIG. 7 except for the horizontal size width and the vertical size height as well as newly included "SupplementalProperty schemeIdUri="urn:mpeg:dash:srd:2014"."

In other words, the images corresponding to the second to seventh AdaptationSet elements from the top are not the omnidirectional image 50 generated by the mapping processing section 22 but the images 51 to 56. Therefore, the horizontal size width and the vertical size height of the second to seventh AdaptationSet elements are 1024 pixels that is the number of pixels in each of the horizontal and vertical directions of the images 51 to 56.

In addition, the second to seventh AdaptationSet elements from the top each have "SupplementalProperty schemeIdUri="urn:mpeg:dash:srd:2014"" that is an SRD (Spatial Relationship Description) indicating that the image corresponding to the AdaptationSet element is an image obtained by splitting an image of a motion video content.

A value of "SupplementalProperty schemeIdUri="urn:mpeg:dash:srd:2014"" is source_id, object_x, object_y, object_width, object_height, total_width, total_height, and spatial_set_id.

"source_id" is an ID that identifies the image (omnidirectional image 50 herein) before being split into the image corresponding to this AdaptationSet element. In addition, "object_x" and "object_y" are a coordinate in the horizontal direction and a coordinate in the vertical direction of an upper left position of the image on the image (omnidirectional image 50 herein) before being split into the image corresponding to this AdaptationSet element, respectively. "object_width" and "object_height" is the horizontal size and the vertical size of the image corresponding to this AdaptationSet element, respectively. Furthermore, "total_width" and "total_height" are the horizontal size and the vertical size of the image (omnidirectional image 50 herein) before being split into the image corresponding to this AdaptationSet element. "spatial_set_id" is an ID for identifying a splitting hierarchy of the image corresponding to this AdaptationSet element. In the example of FIG. 14, the ID of the omnidirectional image 50 is 0.

Therefore, the values of "SupplementalProperty schemeIdUri="urn:mpeg:dash:srd:2014"" owned by the second to seventh AdaptationSet elements from the top corresponding to the images 51 to 56 are "0,2048,1024,1024,1024,4096,3072,0," "0,0,1024,1024,1024,1024,4096,3072,0," "0,1024,0,1024,1024,4096,3072,0," "0,1024,2048,1024,1024,4096,3072,0," "0,1024,1024,1024,1024,4096,3072,0," and "0,3072,1024,1024,1024,4096,3072,0," respectively.

In the example of FIG. 14, the mapping information is described in each of the AdaptationSet elements since the reference image is not mapped onto the reference position of the 3D model at the reference inclination at a time of generating the omnidirectional images 50 and 90. However, in a case of mapping at the reference inclination, the mapping information is not described.

The eighth AdaptationSet element from the top is an element corresponding to the segment files of the audio stream.

In addition, in the example of FIG. 14, each AdaptationSet element contains one Representation element. In the Representation elements in the first to eighth AdaptationSet elements from the top, for example, "equirectangular.mp4," "cube1.mp4" to "cube6.mp4," and "audio.mp4" are described as BaseURLs of the segment files corresponding to the Representation element, respectively. It is noted that FIG. 14 omits the description of SegmentInfo elements.

### (Description of process performed by generation device)

FIG. 15 is a flowchart describing a file generation process performed by the generation device 250 of FIG. 13.

In Step S61 of FIG. 15, the stitching processing section 21 performs a stitching process on the captured images in the six directions supplied from the cameras 11A of FIG. 1 for every frame. The stitching processing section 21 supplies the captured images in frame units obtained as a result of the stitching process to the mapping processing section 22 and the mapping processing section 24.

In Step S62, the mapping processing section 24 generates the omnidirectional image 90 from the captured images supplied from the stitching processing section 21 by the method using the equirectangular projection, and supplies the omnidirectional image 90 to the resolution reduction section 251.

In Step S63, the resolution reduction section 251 reduces the resolution of the omnidirectional image 90 supplied from the mapping processing section 24 and generates the low resolution image. The resolution reduction section 251 supplies the low resolution image to the encoder 252.

In Step S64, the encoder 252 encodes the low resolution image supplied from the resolution reduction section 251 and generates a low resolution stream. The encoder 252 supplies the low resolution stream to the segment file generation section 255.

In Step S65, the mapping processing section 22 generates the omnidirectional image 50 from the captured images supplied from the stitching processing section 21 by the cube mapping, and supplies the omnidirectional image 50 to the split section 253.

In Step S66, the split section 253 splits the omnidirectional image 50 supplied from the mapping processing section 22 into the images 51 to 56 of the six faces 41 to 46. The split section 253 supplies the images 51 to 56 to the encoders 254-1 to 254-6 as the high resolution images, respectively.

In Step S67, the encoders 254-1 to 254-6 encode the high resolution images of the faces 41 to 46 to generate the high resolution streams, and supplies the high resolution streams to the segment file generation section 255.

In Step S68, the encoder 27 encodes the sound acquired from the microphone 11B of FIG. 1 via the audio acquisition section 26 and generates the audio stream. The encoder 27 supplies the audio streams to the segment file generation section 255.

In Step S69, the segment file generation section 255 files the low resolution stream at each bitrate, the high resolution streams of the faces 41 to 46 at each bitrate, and the audio streams in segment units, and generates segment files. The segment file generation section 255 supplies the segment files to the upload section 30.

Since processes from Steps S70 to S74 are similar to those from Steps S18 to S22 of FIG. 10, description will be omitted.

### (Example of configuration of reproducing device)

FIG. 16 is a block diagram illustrating an example of a configuration of a reproducing device according to the second embodiment of the delivery system to which the present disclosure is applied.

In the configurations depicted in FIG. 16, same configurations as those in FIG. 11 are denoted by the same reference characters. Repetitive description will be omitted, as appropriate.

The reproducing device 270 of FIG. 16 differs in configuration from the reproducing device 14 of FIG. 11 in that an MPD processing section 271, a segment file acquisition section 272, decoders 273 and 274, a mapping processing section 275, and a visual line detecting section 276 are provided as an alternative to the MPD processing section 221, the segment file acquisition section 222, the decoder 223, the mapping processing section 226, and the visual line detecting section 229. The reproducing device 270 generates a display image from the high resolution image of the face corresponding to a visual line extending from the viewing position of the viewer in the visual line direction and the low resolution image.

The MPD processing section 271 in the reproducing device 270 analyzes the MPD file supplied from the MPD acquisition section 220. Specifically, the MPD processing section 271 recognizes the identification information regarding each AdaptationSet element and selects the AdaptationSet element containing the predetermined identification information, similarly to the MPD processing section 221 of FIG. 11. For example, in a case in which a configuration of the MPD file is that of FIG. 14, the MPD processing section 271 selects the first to seventh AdaptationSet elements from the top containing the identification information of 1.

In addition, the MPD processing section 271 selects the AdaptationSet element of the low resolution image (AdaptationSet element that does not contain the SRD in the example of FIG. 14) from among the selected AdaptationSet elements containing the predetermined identification information, as the AdaptationSet element of the low resolution image to be reproduced. For example, in the case in which the configuration of the MPD file is that of FIG. 14, the MPD processing section 271 selects the first AdaptationSet element.

In addition, the MPD processing section 271 selects the AdaptationSet elements of the high resolution images (AdaptationSet elements each containing the SRD in the example of FIG. 14) from among the selected AdaptationSet elements containing the predetermined identification information. For example, in the case in which the configuration of the MPD file is that of FIG. 14, the MPD processing section 271 selects the second to seventh AdaptationSet elements.

The MPD processing section 271 then selects the AdaptationSet element of a selected face indicated by selected face information (to be described later in detail) supplied from the visual line detecting section 276 from among the AdaptationSet elements of the high resolution images on the basis of the selected face information and the SRDs, as the AdaptationSet element of the high resolution image to be reproduced.

Specifically, the MPD processing section 271 selects the AdaptationSet element having the value that indicates a position of the image, on the omnidirectional image 50, corresponding to the selected face indicated by the selected face information from among the images 51 to 56, as the AdaptationSet element of the high resolution image to be reproduced. It is noted that the selected face information is information indicating one face corresponding to the visual line of the viewer among the faces 41 to 46 as the selected face.

The MPD processing section 271 acquires information such as URLs and the like of segment files at reproducing clock time from the Representation elements in the AdaptationSet elements of the low resolution image and the high resolution image to be reproduced, and supplies the information to the segment file acquisition section 272. In addition, in a case in which the AdaptationSet elements of the low resolution image and the high resolution image to be reproduced contain the mapping information, the MPD processing section 271 supplies the mapping information to the mapping processing section 275.

The segment file acquisition section 272 issues a request of the segment files identified by the URLs supplied from the MPD processing section 271 to the delivery server 13 on the basis of the URLs and acquires the segment files. The segment file acquisition section 272 supplies one low resolution stream contained in the acquired segment files to the decoder 273 and supplies one high resolution stream to the decoder 274.

The decoder 273 decodes the one low resolution stream supplied from the segment file acquisition section 272 to generate a low resolution image, and supplies the low resolution image to the mapping processing section 275.

The decoder 274 decodes the one high resolution stream supplied from the segment file acquisition section 272 to generate a high resolution image, and supplies the high resolution image to the mapping processing section 275.

In a case in which the MPD processing section 271 supplies the mapping information regarding the low resolution image, the mapping processing section 275 disposes the reference image within the low resolution image at the reference position on the basis of the mapping information, rotates the low resolution image by the rotational angle λ, and maps the low resolution image onto the faces 71 to 76 of the sphere 70 as textures. On the other hand, in a case in which the MPD processing section 271 does not supply the mapping information, the mapping processing section 275 maps the low resolution image onto the faces 71 to 76 of the sphere 70 as textures as it is.

It is noted that the mapping processing section 275 may map only part of the low resolution image containing a region subjected to the perspective projection onto the visual field range of the viewer determined by the visual line detecting section 276 without mapping the entire low resolution image.

In addition, the mapping processing section 275 sets the selected face within the sphere 70 as the 3D model on the basis of the selected face information supplied from the visual line detecting section 276. In a case in which the MPD processing section 271 supplies the mapping information regarding the high resolution image, the mapping processing section 275 disposes a reference image of the high resolution image at the reference position on the basis of the mapping information, rotates the high resolution image by the rotational angle, and maps the high resolution image onto the selected face set within the sphere 70 as a texture. On the other hand, in a case in which the MPD processing section 271 does not supply the mapping information, the mapping processing section 275 maps the high resolution image onto the selected face set within the sphere 70 as a texture as it is.

In addition, the mapping processing section 275 supplies the 3D model image for which the textures are mapped onto the sphere 70 and the selected face to the drawing section 227.

The visual line detecting section 276 determines the visual line direction of the viewer in the coordinate system of the 3D model on the basis of the detection result of the gyro sensor 15B supplied from the receiving section 228. In addition, the visual line detecting section 276 acquires the captured image of the marker 15A from the camera 14A, and detects the viewing position on the basis of the captured image.

The visual line detecting section 276 determines as a selected face one face for which a normal passing through a center is closest to the visual line of the viewer among the faces 41 to 46 on the basis of the viewing position and the visual line direction in the coordinate system of the 3D model. The visual line detecting section 276 supplies the selected face information to the MPD processing section 271 and the mapping processing section 275.

In addition, the visual line detecting section 276 determines the visual field range of the viewer in the coordinate system of the 3D model on the basis of the viewing position and the visual line direction in the coordinate system of the 3D model. The visual line detecting section 276 supplies the visual field range and the viewing position of the viewer to the drawing section 227.

### (Process performed by reproducing device)

FIG. 17 is a flowchart describing a reproducing process performed by the reproducing device 270 of FIG. 16.

Since processes from Steps S81 to S83 of FIG. 17 are similar to those from Steps S31 to S33 of FIG. 12, description will be omitted.

In Step S84, the MPD processing section 271 acquires URLs of the segment files of the low resolution stream to be reproduced from the MPD file. Specifically, the MPD processing section 271 acquires the URLs of the segment files at the reproducing clock time from the Representation element in the AdaptationSet element of the low resolution image described in the MPD file and containing the identification information selected in Step S83. The MPD processing section 271 supplies the acquired URLs to the segment file acquisition section 272.

Since processes from Steps S85 to S88 are similar to those from Steps S37 to S40 of FIG. 12, description will be omitted.

In Step S89, the visual line detecting section 276 determines the selected face and the visual field range of the viewer on the basis of the viewing position and the visual line direction. The visual line detecting section 276 supplies the visual field range and the viewing position of the viewer to the drawing section 227. In addition, the visual line detecting section 276 supplies the selected face information to the MPD processing section 271 and the mapping processing section 275. The mapping processing section 275 sets the selected face within the sphere 70 as the 3D model on the basis of the selected face information.

In Step S90, the MPD processing section 271 acquires URLs of the segment files of the high resolution stream to be reproduced from the MPD file. Specifically, the MPD processing section 271 acquires the URLs of the segment files at the reproducing clock time from the Representation element in the AdaptationSet element described in the MPD file and containing the identification information selected in Step S83 and the SRD that indicates the position of the high resolution image, on the omnidirectional image 50, corresponding to the selected face indicated by the selected face information by the value. The MPD processing section 271 supplies the acquired URLs to the segment file acquisition section 272.

In Step S91, the segment file acquisition section 272 issues a request of the segment files identified by the URLs to the delivery server 13 on the basis of the URLs supplied from the MPD processing section 271, and acquires the segment files. The segment file acquisition section 222 supplies the low resolution stream contained in the acquired segment files to the decoder 273 and supplies the high resolution stream to the decoder 274.

In Step S92, the decoder 274 decodes the high resolution stream supplied from the segment file acquisition section 272 to generate a high resolution image, and supplies the high resolution image to the mapping processing section 275.

In Step S93, the decoder 273 decodes the lower resolution stream supplied from the segment file acquisition section 272 to generate a low resolution image, and supplies the low resolution image to the mapping processing section 275.

In Step S94, the MPD processing section 271 determines whether the AdaptationSet element of the low resolution stream to be reproduced contains the mapping information. In a case of determining in Step S94 that the AdaptationSet element contains the mapping information, the MPD processing section 271 supplies the mapping information to the mapping processing section 275 and the process goes to Step S95.

In Step S95, the mapping processing section 275 maps the low resolution image supplied from the decoder 273 onto the faces 41 to 46 of the sphere 70 as textures on the basis of the mapping information regarding the low resolution stream supplied from the MPD processing section 271. The process then goes to Step S97.

On the other hand, in a case of determining in Step S94 that the AdaptationSet element does not contain the mapping information, the process goes to Step S96. In Step S96, the mapping processing section 275 maps the low resolution image supplied from the decoder 273 onto the faces 41 to 46 of the sphere 70 as textures as it is. The process then goes to Step S97.

In Step S97, the MPD processing section 271 determines whether the AdaptationSet element of the high resolution stream to be reproduced contains the mapping information. In a case of determining in Step S97 that the AdaptationSet element contains the mapping information, the MPD processing section 271 supplies the mapping information to the mapping processing section 275 and the process goes to Step S98.

In Step S98, the mapping processing section 275 maps the high resolution image as textures onto the selected face set within the sphere 70 on the basis of the mapping information regarding the high resolution stream. The mapping processing section 275 supplies the 3D model image for which the textures are mapped onto the sphere 70 and the selected face to the drawing section 227, and the process goes to Step S100.

On the other hand, in a case of determining in Step S97 that the AdaptationSet element does not contain the mapping information, the process goes to Step S99. In Step S99, the mapping processing section 275 maps the high resolution image onto the selected face set within the sphere 70 as a texture as it is. The mapping processing section 275 supplies the 3D model image for which the textures are mapped onto the sphere 70 and the selected face to the drawing section 227, and the process goes to Step S100.

Since processes in Steps S100 and S101 are similar to those in Steps S45 and S46 of FIG. 12, description will be omitted.

As described so far, the generation device 250 sets the identification information to the MPD file. Therefore, the reproducing device 270 can set the low resolution image and the high resolution image corresponding to the identical identification information as images reproduced simultaneously on the basis of the identification information.

Furthermore, the generation device 250 sets the mapping information to the MPD file. Therefore, the reproducing device 270 maps the low resolution image and the high resolution image on the basis of the mapping information, thereby making it possible to make the low resolution image and the high resolution image mapped onto the reference position become the reference image at the reference inclination. As a result, it is possible to map the low resolution image and the high resolution image into the identical sphere 70 in an overlapped fashion with high accuracy.

Moreover, the reproducing device 270 acquires only the high resolution stream of one selected face corresponding to the visual line of the viewer among the faces 41 to 46. Therefore, it is possible to reduce a transmission quantity between the generation device 250 and the reproducing device 270, compared with a case of acquiring the high resolution streams of all the faces 41 to 46.

Furthermore, the reproducing device 270 generates the 3D model image using the high resolution image of the selected face corresponding to the visual line of the viewer and the low resolution image of all the faces 71 to 78. Therefore, it is possible to generate the display image in the visual field range of the viewer from the high resolution image and eventually improve an image quality of the display image. In addition, even in a case in which a region of the 3D model image used for the perspective projection onto the visual field range of the viewer contains a region other than the high resolution image or in a case in which the visual field range of the viewer suddenly changes, it is possible to generate the display image using the low resolution image.

### (Second example of MPD file)

FIG. 18 is a diagram illustrating a second example of the MPD file generated by the MPD file generation section 256 of FIG. 13.

A description of the MPD file of FIG. 18 differs from that of FIG. 14 in that the identification information and the mapping information are set as a value of not "SupplementalProperty schemeIdUri="urn:mpeg:dash:original_source_id:2016"" but "SupplementalProperty schemeIdUri="http://xmlns.sony.net/metadata/mpeg/dash/cordinates/2015" ."

Specifically, the value of "SupplementalProperty schemeIdUri="http://xmlns.sony.net/metadata/mpeg/dash/cordinates/2015"" contained in the AdaptationSet element of the omnidirectional image is the omnidirectional image generation method, the ID, and "X,Y,λ."

In other words, the value of "SupplementalProperty schemeIdUri="http://xmlns.sony.net/metadata/mpeg/dash/cordinates/2015"" contained in the first AdaptationSet element from the top is "equirectangular I1 B480,240,0." In addition, the value of "SupplementalProperty schemeIdUri="http://xmlns.sony.net/metadata/mpeg/dash/cordinates/2015"" contained in each of the second to seventh AdaptationSet elements from the top is "cube I1 B1530,1524,0." In this case, similarly to the case of FIG. 7, "I" is added to the top of the block storing the identification information and "B" is added to the top of the block storing the mapping information in the value. In addition, pieces of information in the block are delimited with a comma (,) and the blocks are delimited with a space. It is noted that nothing is added to a top of a block storing the omnidirectional image generation method.

Furthermore, "SupplementalProperty schemeIdUri="urn:mpeg:dash:original_source_id:2016"" is not described in the first to seventh AdaptationSet elements from the top.

### (Third example of MPD file)

FIG. 19 is a diagram illustrating a third example of the MPD file generated by the MPD file generation section 256 of FIG. 13.

A description of the MPD file of FIG. 19 differs from that of FIG. 14 in that the mapping information is set as a value of not "SupplementalProperty schemeIdUri="urn:mpeg:dash:original_source_id:2016"" but "SupplementalProperty schemeIdUri="http://xmlns.sony.net/metadata/mpeg/dash/cordinates/2015" ."

Specifically, the value of "SupplementalProperty schemeIdUri="http://xmlns.sony.net/metadata/mpeg/dash/cordinates/2015"" contained in the AdaptationSet element of the omnidirectional image is the omnidirectional image generation method and the mapping information.

Therefore, the value of "SupplementalProperty schemeIdUri="http://xmlns.sony.net/metadata/mpeg/dash/cordinates/2015"" contained in the first AdaptationSet element from the top is "equirectangular B480,240,0." In addition, the value of "SupplementalProperty schemeIdUri="http://xmlns.sony.net/metadata/mpeg/dash/cordinates/2015"" contained in each of the second to seventh AdaptationSet elements from the top is "cube B1530,1524,0." In this case, similarly to the case of FIG. 7, "B" is added to the top of the block storing the mapping information in the value. In addition, pieces of information in the block are delimited with a comma (,) and the blocks are delimited with a space. It is noted that nothing is added to a top of a block storing the omnidirectional image generation method.

In addition, the value of "SupplementalProperty schemeIdUri="urn:mpeg:dash:original_source_id:2016"" is the ID. In other words, the value of "SupplementalProperty schemeIdUri="urn:mpeg:dash:original_source_id:2016"" in each of the first to seventh AdaptationSet elements is "I1." In this case, similarly to the case of FIG. 7, "I" is added to the top of the block storing the identification information in the value.

In the example of FIG. 19, since the identification information is indicated by the value of SupplementalProperty different from the mapping information, the identification information can be easy to use in processes other than mapping.

### (Fourth example of MPD file)

FIG. 20 is a diagram illustrating a fourth example of the MPD file generated by the MPD file generation section 256 of FIG. 13.

A description of the MPD file of FIG. 20 differs from that of FIG. 14 in that type information indicating a type of the mapping information is newly described.

In other words, it has been described above that the mapping information is coordinates (X,Y) and the rotational angle λ. However, as described above, the mapping information may be the Euler angle (α,β,γ) or the quaternion (q0,q1,q2,q3).

Therefore, in the example of FIG. 20, information indicating that the mapping information is any of the coordinates (X,Y) and the rotational angle λ, the Euler angle (α,β,γ) and (q0,q1,q2,q3) is described as the type information.

Specifically, the type information is set between "original_source_id" and "2016"in "SupplementalProperty schemeIdUri="urn:mpeg:dash:original_source_id:2016"."

As depicted in FIG. 21, in a case in which the mapping information indicates the coordinates (X,Y) and the rotational angle λ, the type information (type) is "2dxy-3dr," and in a case in which the mapping information indicates the Euler angle (α,β,γ), the type information is "yxz-euler." In addition, in a case in which the mapping information indicates the quaternion (q0,q1,q2,q3), the type information is "quaternion."

In the example of FIG. 20, the mapping information is coordinates (X,Y) and the rotational angle λ. Therefore, SupplementalProperty contained in the first AdaptationSet element from the top and having the value of "I1 B480,240,0" is "SupplementalProperty schemeIdUri="urn:mpeg:dash:original_source_id:2dxy-3dr:2016"."

In addition, SupplementalProperty contained in each of the second to seventh AdaptationSet elements from the top and having the value of "I1 B1530,1524,0" is "SupplementalProperty schemeIdUri="urn:mpeg:dash:original_source_id:2dxy-3dr:2016"." It is noted that in a case of this FIG. 20, similarly to the case of FIG. 7, "I" is added to the top of the block storing the identification information and "B" is added to the top of the block storing the mapping information in the value. In addition, pieces of information in the block are delimited with a comma (,) and the blocks are delimited with a space.

### (Fifth example of MPD file)

FIG. 22 is a diagram illustrating a fifth example of the MPD file generated by the MPD file generation section 256 of FIG. 13.

A description of the MPD file of FIG. 22 differs from that of FIG. 20 in that the type information is set to the value of "SupplementalProperty schemeIdUri="urn:mpeg:dash:original_source_id:2016"."

Specifically, the value of "SupplementalProperty schemeIdUri="urn:mpeg:dash:original_source_id:2016"" contained in the AdaptationSet element of the omnidirectional image is the ID and the "type information X,Y,λ."

Therefore, the value of "SupplementalProperty schemeIdUri="urn:mpeg:dash:original_source_id:2016"" contained in the first AdaptationSet element from the top is "I1 B2dxy-3dr,480,240,0." In addition, the value of "SupplementalProperty schemeIdUri="urn:mpeg:dash:original_source_id:2016"" contained in each of the second to seventh AdaptationSet elements from the top is "I1 B2dxy-3dr,1530,1524,0." It is noted that in a case of this FIG. 20, similarly to the case of FIG. 7, "I" is added to the top of the block storing the identification information in the value and "B" is added to the top of the block storing the mapping information. In this case, in this case, "B" is added to the type information stored in the top of the block storing the mapping information. In addition, pieces of information in the block are delimited with a comma (,) and the blocks are delimited with a space.

As described so far, in the examples of FIGS. 20 and 22, the type information is set to the MPD file. Therefore, the MPD file generation section 256 can select the type of the mapping information set to the MPD file from among a plurality of types. In addition, even in a case in which the MPD file generation section 256 selects the type of the mapping information, the reproducing device 270 can recognize the type of the mapping information by the type information. As a result, the reproducing device 270 can accurately perform mapping based on the mapping information.

It is noted that in the MPD file of the first embodiment, similarly to the case of FIG. 18, the identification information and the mapping information may be set to the value of "SupplementalProperty schemeIdUri="http://xmlns.sony.net/metadata/mpeg/dash/cordinates/2015" ." In addition, in the MPD file of the first embodiment, similarly to the case of FIG. 19, the mapping information may be set to the value of "SupplementalProperty schemeIdUri="http://xmlns.sony.net/metadata/mpeg/dash/cordinates/2015" ." Furthermore, in the MPD file of the first embodiment, similarly to the cases of FIGS. 20 and 22, the type of the mapping information may be described.

### <Third embodiment>

### (Example of configuration of generation device)

A configuration of a third embodiment of a delivery system to which the present disclosure is applied is identical to that of the delivery system 10 of FIG. 1 except for configurations of a generation device and a reproducing device. Therefore, only the generation device and the reproducing device will be described hereinafter.

FIG. 23 is a block diagram illustrating an example of the configuration of the generation device according to the third embodiment of the delivery system to which the present disclosure is applied.

In the configurations depicted in FIG. 23, same configurations as those in FIG. 13 are denoted by the same reference characters. Repetitive description will be omitted, as appropriate.

A generation device 300 of FIG. 23 differs in configuration from the generation device 250 of FIG. 13 in that perspective projection sections 302-1 to 302-18, encoders 303-1 to 303-18, and a segment file generation section 304 are provided as an alternative to the split section 253, the encoders 254-1 to 254-6, and the segment file generation section 255, in that a setting section 301 is newly provided, and in that the mapping processing section 22 is not provided.

The generation device 300 generates 18 high resolution images by mapping the omnidirectional image generated by the equirectangular projection onto the sphere 70 and performing perspective projection of the omnidirectional image onto 18 two-dimensional planes.

Specifically, a setting section 301 of the generation device 300 sets two-dimensional plane information which indicates a position, an inclination, and a size of a two-dimensional plane as a drawing plane corresponding to each of 18 visual line directions. The setting section 301 supplies each piece of the two-dimensional plane information to the perspective projection sections 302-1 to 302-18.

The perspective projection sections 302-1 to 302-18 each map the omnidirectional image 90 generated by the mapping processing section 24 onto the sphere 70. The perspective projection sections 302-1 to 302-18 each generate an image (perspective projected image) by performing perspective projection of the omnidirectional image mapped onto the sphere 70 onto the two-dimensional plane indicated by the two-dimensional plane information supplied from the setting section 301 with a center of the sphere 70 as a focal point. The generated image thereby becomes an image viewing the omnidirectional image 90 mapped onto the sphere 70 from the center O of the sphere 70 toward a predetermined visual line direction. The perspective projection sections 302-1 to 302-8 supply the generated images to the encoders 303-1 to 303-18 as high resolution images, respectively.

The encoders 303-1 to 303-18 encode the high resolution images supplied from the perspective projection sections 302-1 to 302-18 at bitrates equal to or higher than 1. The encoders 303-1 to 303-18 supply high resolution streams of the two-dimensional planes generated as a result of the encoding to the segment file generation section 304.

In a case in which there is no need to particularly discriminate the perspective projection sections 302-1 to 302-18, the perspective projection sections are generically referred to as "perspective projection sections 302" hereinafter. Likewise, the encoders 303-1 to 303-18 are generically referred to as "encoders 303."

The segment file generation section 304 files the low resolution stream at each bitrate, the high resolution streams in each two-dimensional plane at each bitrate, and the audio stream in segment units. The segment file generation section 304 supplies segment files generated as a result of the filing to the upload section 30.

### (Example of configuration of two-dimensional plane information)

FIG. 24 is a diagram illustrating an example of a configuration of the two-dimensional plane information.

As depicted in FIG. 24, the two-dimensional plane information includes an azimuth angle, an elevation angle, a rotational angle, a lateral angle of view, and a longitudinal angle of view. The azimuth angle and the elevation angle are information that indicates the position of the two-dimensional plane and the rotational angle is information that indicates the inclination of the two-dimensional plane. In addition, the lateral angle of view and the longitudinal angle of view are information that indicates the size of the two-dimensional plane.

Specifically, as depicted in FIG. 25, the azimuth angle and the elevation angle are angles formed between a line connecting the center O of the sphere 70 as a three-dimensional model to a center C of a two-dimensional plane 311, the center O, and a reference point B on the sphere 70 in the horizontal direction (direction of an arrow a in FIG. 25) and the vertical direction (direction of an arrow b in FIG. 25), respectively. In addition, as depicted in FIG. 25, the rotational angle is an angle of the two-dimensional plane 311 in a rotation direction (direction of an arrow c in FIG. 25) when the line connecting the center C to the center O is assumed as an axis. It is noted that a position of the center C of the two-dimensional plane is set by moving the position from the reference point B in an order of the azimuth angle, the elevation angle, and the rotational angle. In addition, a positive direction of the rotational angle is, for example, counterclockwise.

As depicted in FIG. 25, the lateral angle of view is an angle qos formed between lines connecting midpoints s and q of two lateral end portions of the two-dimensional plane 311 to the center O. In addition, as depicted in FIG. 25, the longitudinal angle of view is an angle por formed between lines connecting midpoints p and r of two longitudinal end portions of the two-dimensional plane 311 to the center O.

It is noted that the two-dimensional plane 311 is set such that the line passing through the center O of the sphere 70 and the center C of the two-dimensional plane 311 serves as a normal. This normal is in the visual line direction of the high resolution image corresponding to the two-dimensional plane 311 when the center O is assumed as the viewing position.

### (Example of two-dimensional plane)

FIG. 26 is a diagram illustrating an example of 18 two-dimensional planes set by the setting section 301 of FIG. 23, and FIG. 27 is a diagram illustrating an example of two-dimensional plane information regarding the 18 two-dimensional planes.

As depicted in FIG. 26, the setting section 301 sets 12 two-dimensional planes having lines 321-1, 321-2, 321-4, 321-5, 321-7, 321-9, 321-11, 321-12, 321-14, 321-15, 321-16, and 321-18 that connect midpoints of 12 sides of a cube 320 disposed within the sphere 70 with the center O of the sphere 70 as a center thereof to the center O and that serve as normals.

In addition, the setting section 301 sets six two-dimensional planes having lines 321-3, 321-6, 321-8, 321-10, 321-13, and 321-17 that connect centers of six faces of the cube 320 to the center O and that serve as normals.

In this case, as depicted in FIG. 27, azimuth angles in the two-dimensional plane information regarding the 18 two-dimensional planes having the lines 321-1 to 321-18 serving as the normals passing through the centers thereof are -135, -90, -90, -90, -45, 0, 0, 0, 0, 0, 45, 90, 90, 90, 135, 180, 180, and 180 in order, respectively. In addition, elevation angles are 0, 45, 0, -45, 0, 90, 45, 0, -45, -90, 0, 45, 0, -45, 0, 45, 0, and -45 in order, respectively.

Furthermore, in the example of FIG. 27, rotational angles of all the 18 two-dimensional planes are set to 0 degrees, and lateral angles of view and longitudinal angles of view are set to 90 degrees.

Adjacent two-dimensional planes in the 18 two-dimensional planes set as described above overlap one another. Therefore, the omnidirectional image of the identical region mapped onto the sphere 70 is present in high resolution images of the adjacent two-dimensional planes.

It is noted that the information indicating a size of each two-dimensional plane is not necessarily the lateral angle of view and the longitudinal angle of view but may be a diagonal angle of view. As depicted in FIG. 28, the diagonal angle of view is an angle bod (aoc) that is formed between lines that connect two vertexes b (a) and d (c) diagonal in a two-dimensional plane 325 to the center O of the sphere 70.

In a case in which the information indicating the size of the two-dimensional plane is the lateral angle of view and the longitudinal angle of view, a person viewing the information easily understands the size of the two-dimensional plane, compared with a case in which the information is the diagonal angle of view. On the other hand, in a case in which the information indicating the size of the two-dimensional plane is the diagonal angle of view, it is possible to reduce an amount of information because of the small number of parameters, compared with the case in which the information is the lateral angle of view and the longitudinal angle of view.

### (Description of method of setting SRD of high resolution image)

FIG. 29 is an illustrative diagram of a method of setting an SRD of each high resolution image by the MPD file generation section 256 of FIG. 23.

In the example of FIG. 29, a perspective projection section 302-i (where i = 1, 2, ..., 18) performs perspective projection of the omnidirectional image onto the two-dimensional plane indicated by i-th two-dimensional plane information from the top of FIG. 27, thereby generating a high resolution image 331-i.

In this case, as depicted in FIG. 29, the MPD file generation section 256 disposes high resolution images 331-1 to 331-18 on one virtual omnidirectional image 332, and sets SRDs of the high resolution images 331-1 to 331-18 assuming that the high resolution images 331-1 to 331-18 are split images obtained by splitting the virtual omnidirectional image 332. In a case in which there is no need to particularly discriminate the high resolution images 331-1 to 331-18, the high resolution images are generically referred to as "high resolution images 331" hereinafter.

In the third embodiment, a size of the virtual omnidirectional image 332 is 8192 pixels × 5120 pixels and a size of each high resolution image 331 is 1024 pixels × 1024 pixels as depicted in FIG. 29.

### (First example of MPD file)

FIG. 30 is a diagram illustrating a first example of the MPD file generated by the MPD file generation section 256 of FIG. 23.

In the example of FIG. 30, the segment files of each of the low resolution stream, the high resolution streams of the high resolution images 331, and the audio stream in the time range corresponding to each Period element are classified into one group. Therefore, in the MPD file of FIG. 30, the Period element contains 20 AdaptationSet elements.

Since the first AdaptationSet element from the top corresponding to the segment files of the low resolution stream is identical to that of FIG. 14, description thereof will be omitted.

The second to 19th AdaptationSet elements from the top are element corresponding to the segment files of the high resolution streams of the high resolution images 331, respectively. Each of these AdaptationSet elements is identical to the second AdaptationSet element of FIG. 14 except for the omnidirectional image generation method, information set to a value of the SRD, the Representation element, and the mapping information.

Specifically, the omnidirectional image corresponding to the second to 19th AdaptationSet elements is the virtual omnidirectional image 332. Therefore, "cube-ex" indicating a method of generating the virtual omnidirectional image 332 is set to the value of "SupplementalProperty schemeIdUri="http://xmlns.sony.net/metadata/mpeg/dash/cordinates/2015"" owned by each of the second to 19th AdaptationSet elements as the omnidirectional image generation method.

It is noted that in the third embodiment, the 18 two-dimensional planes have six faces that configure the cube and the virtual omnidirectional image 332 contains the omnidirectional image generated by the cube mapping. Therefore, the method of generating the virtual omnidirectional image 332 is defined herein as a cube mapping extension method and information indicating the cube mapping extension is described as "cube-ex"; however, the information indicating the method of generating the virtual omnidirectional image 332 is not limited to this information.

In addition, an ID that identifies the virtual omnidirectional image 332 that is the image before being split into the high resolution images 331 is set to source_id in the SRD owned by each of the second to 19th AdaptationSet elements. In the example of FIG. 30, this ID is 0.

In addition, coordinates of an upper left position of the high resolution image 331-1 corresponding to the second AdaptationSet element on the virtual omnidirectional image 332 are (0,2048). Therefore, 0 and 2048 are set to object_x and object_y in the SRD owned by the second AdaptationSet element, respectively.

Likewise, 1024, 1024, 1024, 2048, 3072, 3072, 3072, 3072, 3072, 4096, 5120, 5120, 5120, 6144, 7168, 7168, and 7168 are set to object_x in the SRDs owned by the third to 19th AdaptationSet element, respectively. In addition, 1024, 2048, 3072, 2048, 0, 1024, 2048, 3072, 4096, 2048, 1024, 2048, 3072, 2048, 1024, 2048, and 3072 are set to object_y in the SRDs owned by the third to 19th AdaptationSet element, respectively.

Furthermore, horizontal and vertical sizes of the high resolution images 331 corresponding to the second to 19th AdaptationSet elements are all 1024 pixels. Therefore, 1024 is set to all of object_width and object_height in the SRDs owned by the second to 19th AdaptationSet elements.

Furthermore, a horizontal size of the virtual omnidirectional image 332 before split into the high resolution images 331 corresponding to the second to 19th AdaptationSet elements is 8192 pixels and a vertical size thereof is 5120 pixels. Therefore, 8192 is set to all of total_width in the SRDs owned by the second to 19th AdaptationSet elements and 5120 is set to all of total_height therein.

In addition, each of the high resolution images 331 corresponding to the second to 19th AdaptationSet elements is an image obtained by splitting the virtual omnidirectional image 332 once. Therefore, 0 is set to spatial_set_id in the SRDs owned by the second to 19th AdaptationSet elements. In the example of FIG. 30, coordinates (X,Y) in the mapping information is (2554,3572). In a case of this FIG. 30, similarly to a case of FIG. 7, "I" is added to the top of the block storing the identification information in the value and "B" is added to the top of the block storing the mapping information therein. In addition, pieces of information in the block are delimited with a comma (,) and the blocks are delimited with a space.

Furthermore, in the example of FIG. 30, each of the second to 19th AdaptationSet elements from the top contains one Representation element. In the Representation elements in the second to 19th AdaptationSet elements from the top, "cube1.mp4" to "cube18.mp4" are described as BaseURLs of the segment files corresponding to the Representation element, respectively.

Since the 20th AdaptationSet element from the top corresponds to the segment files of the audio stream and is identical to the eighth AdaptationSet element from the top of FIG. 14, description thereof will be omitted. It is noted that FIG. 30 omits the description of SegmentInfo elements.

### (Description of process performed by generation device)

FIG. 31 is a flowchart describing a file generation process performed by the generation device 300 of FIG. 23.

Since processes from Steps S121 to S124 of FIG. 31 are similar to those from Steps S61 to S64 of FIG. 15, description will be omitted.

In Step S125, the setting section 301 sets two-dimensional plane information corresponding to 18 visual line directions 321-1 to 321-18. The setting section 301 supplies each of the two-dimensional plane information to each perspective projection section 302.

In Step S126, each perspective projection section 302 maps the omnidirectional image 90 generated by the mapping processing section 24 onto the sphere 70 and performs perspective projection of the omnidirectional image 90 mapped onto the sphere 70 onto the two-dimensional plane indicated by the two-dimensional plane information, thereby generating the high resolution image 331. The perspective projection section 302 supplies the high resolution image 331 to the encoder 303.

In Step S127, each encoder 303 encodes the high resolution image supplied from the perspective projection section 302 at bitrates equal to or higher than 1. The encoder 303 supplies high resolution streams of the two-dimensional plane generated as a result of the encoding to the segment file generation section 304.

In Step S128, the encoder 27 encodes the sound acquired from the microphone 11B of FIG. 1 via the audio acquisition section 26 and generates the audio stream. The encoder 27 supplies the audio streams to the segment file generation section 304.

In Step S129, the segment file generation section 304 files the low resolution stream at each bitrate, the high resolution streams of the two-dimensional planes at each bitrate, and the audio stream in segment units, and generates segment files. The segment file generation section 304 supplies the segment files to the upload section 30.

Since processes from Steps S130 to S134 are similar to those from Steps S70 to S74 of FIG. 15, description will be omitted.

### (Example of configuration of reproducing device)

FIG. 32 is a block diagram illustrating an example of a configuration of a reproducing device according to the third embodiment of the delivery system to which the present disclosure is applied.

In the configurations depicted in FIG. 32, same configurations as those in FIG. 16 are denoted by the same reference characters. Repetitive description will be omitted, as appropriate.

A reproducing device 340 of FIG. 32 differs in configuration from the reproducing device 270 of FIG. 16 in that an MPD processing section 341, a mapping processing section 342, and a visual line detecting section 343 are provided as an alternative to the MPD processing section 271, the mapping processing section 275, and the visual line detecting section 276. The reproducing device 340 generates a display image from the high resolution image of the two-dimensional planes corresponding to the visual line of the viewer and the low resolution image.

Specifically, the MPD processing section 341 in the reproducing device 340 analyzes the MPD file supplied from the MPD acquisition section 220. Specifically, the MPD processing section 341 recognizes the identification information regarding each AdaptationSet element and selects the AdaptationSet element containing the predetermined identification information, similarly to the MPD processing section 271 of FIG. 16. For example, in a case in which the configuration of the MPD file is that of FIG. 30, the MPD processing section selects the first to 19th AdaptationSet elements from the top containing the identification information of 1.

In addition, the MPD processing section 341 selects the AdaptationSet element of the low resolution image (AdaptationSet element that does not contain the SRD in the example of FIG. 30) from among the selected AdaptationSet elements containing the predetermined identification information, as the AdaptationSet element of the low resolution image to be reproduced. For example, in the case in which the configuration of the MPD file is that of FIG. 30, the MPD processing section 341 selects the first AdaptationSet element.

In addition, the MPD processing section 341 selects the AdaptationSet elements of the high resolution images (AdaptationSet elements each containing the SRD in the example of, for example, FIG. 30) from among the selected AdaptationSet elements containing the predetermined identification information. For example, in the case in which the configuration of the MPD file is that of FIG. 30, the MPD processing section selects the second to 19th AdaptationSet elements.

The MPD processing section 341 then selects the AdaptationSet element of the selected two-dimensional plane indicated by selected two-dimensional plane information (to be described later in detail) supplied from the visual line detecting section 343 from among the AdaptationSet elements of the high resolution images on the basis of the selected two-dimensional plane information and the SRDs, as the AdaptationSet element of the high resolution image to be reproduced.

Specifically, the MPD processing section 341 holds correspondence information indicating a correspondence relationship between each two-dimensional plane and the position of the high resolution image of the two-dimensional plane on the virtual omnidirectional image 332 in advance. The MPD processing section 341 recognizes the position, on the virtual omnidirectional image 332, corresponding to the selected two-dimensional plane indicated by the selected two-dimensional plane information on the basis of the correspondence information. The MPD processing section 341 selects the AdaptationSet element having the position indicated by object_x and object_y as the AdaptationSet element of the high resolution image to be reproduced. It is noted that the selected two-dimensional plane information is information that indicates one two-dimensional plane corresponding to the visual line of the viewer as the selected two-dimensional plane among the 18 two-dimensional planes.

The MPD processing section 341 acquires information such as URLs and the like of segment files at reproducing clock time from the Representation elements in the AdaptationSet elements of the low resolution image and the high resolution image to be reproduced, and supplies the information to the segment file acquisition section 272. In addition, in a case in which the AdaptationSet elements of the low resolution image and the high resolution image to be reproduced contain the mapping information, the MPD processing section 341 supplies the mapping information to the mapping processing section 342.

In a case in which the MPD processing section 341 supplies the mapping information regarding the low resolution image, the mapping processing section 342 disposes the reference image within the low resolution image at the reference position on the basis of the mapping information, rotates the low resolution image by the rotational angle λ, and maps the low resolution image onto the faces 71 to 76 of the sphere 70 as textures. On the other hand, in a case in which the MPD processing section 341 does not supply the mapping information, the mapping processing section 342 maps the low resolution image onto the faces 71 to 76 of the sphere 70 as textures as it is.

It is noted that the mapping processing section 342 may map only part of the low resolution image containing a region subjected to the perspective projection onto the visual field range of the viewer determined by the visual line detecting section 343 without mapping the entire low resolution image.

In addition, the mapping processing section 342 sets the selected two-dimensional plane within the sphere 70 as the 3D model on the basis of the selected two-dimensional plane information supplied from the visual line detecting section 343. In a case in which the MPD processing section 341 supplies the mapping information regarding the high resolution image, the mapping processing section 342 disposes a reference image of the high resolution image at the reference position on the basis of the mapping information, rotates the high resolution image by the rotational angle, and maps the high resolution image onto the selected two-dimensional plane set within the sphere 70 as a texture. On the other hand, in a case in which the MPD processing section 341 does not supply the mapping information regarding the high resolution image, the mapping processing section 342 maps the high resolution image onto the selected two-dimensional plane set within the sphere 70 as a texture as it is.

In addition, the mapping processing section 342 supplies the 3D model image for which the textures are mapped onto the sphere 70 and the selected two-dimensional plane to the drawing section 227.

The visual line detecting section 343 determines the visual line direction of the viewer in the coordinate system of the 3D model on the basis of the detection result of the gyro sensor 15B supplied from the receiving section 228. In addition, the visual line detecting section 343 acquires the captured image of the marker 15A from the camera 14A, and detects the viewing position on the basis of the captured image.

The visual line detecting section 343, similarly to the setting section 301 of FIG. 23, sets the two-dimensional plane information regarding the 18 two-dimensional planes. The visual line detecting section 343 determines as the selected two-dimensional plane one two-dimensional plane for which the normal passing through the center thereof is closest to the visual line of the viewer among the 18 two-dimensional planes on the basis of the viewing position and visual line direction in the coordinate system of the 3D model and the two-dimensional plane information. The visual line detecting section 343 supplies the selected two-dimensional plane information to the MPD processing section 341 and the mapping processing section 342.

In addition, the visual line detecting section 343 determines the visual field range of the viewer in the coordinate system of the 3D model on the basis of the viewing position and the visual line direction in the coordinate system of the 3D model. The visual line detecting section 343 supplies the visual field range and the viewing position of the viewer to the drawing section 227.

### (Description of mapping)

FIG. 33 is an illustrative diagram of mapping by the mapping processing section 342 of FIG. 32.

In the example of FIG. 33, the viewing position is the center O of the sphere 70. In this case, a two-dimensional plane 363 having a line that corresponds to an azimuth angle and an elevation angle, and a rotational angle closest to angles in the horizontal and vertical directions and a rotational angle of a visual line 361 extending from the center O in the visual line direction formed between the visual line 361 and a line connecting the reference position to the center O, and that extends from the center O in a direction of an arrow 362, as a normal passing through a center of the two-dimensional plane 363 is selected as the selected two-dimensional plane.

Therefore, the mapping processing section 342 sets the two-dimensional plane 363 within the sphere 70 as the 3D model. In addition, the mapping processing section 342 maps the low resolution image 371 onto the sphere 70 serving as the 3D model as textures and maps the high resolution image 372 as textures onto the two-dimensional plane 363 as the 3D model.

As described so far, the two-dimensional plane 363 is disposed within the sphere 70. Therefore, in a case of performing the perspective projection onto the visual field range inside of the two-dimensional plane 363 from a direction in which both the low resolution image 371 and the high resolution image 372 are present, the drawing section 227 can preferentially use the high resolution image 372 over the low resolution image 371.

### (Process performed by reproducing device)

FIG. 34 is a flowchart describing a reproducing process performed by the reproducing device 340 of FIG. 32.

Since processes from Steps S141 to S148 of FIG. 34 are similar to those from Steps S81 to S88 of FIG. 17, description will be omitted.

In Step S149, the visual line detecting section 343 determines as the selected two-dimensional plane one two-dimensional plane for which the normal passing through the center thereof is closest to the visual line of the viewer among the 18 two-dimensional planes on the basis of the viewing position and visual line direction in the coordinate system of the 3D model and the two-dimensional plane information. The visual line detecting section 343 supplies the selected two-dimensional plane information to the MPD processing section 341 and the mapping processing section 342.

In Step S150, the visual line detecting section 343 determines the visual field range of the viewer in the coordinate system of the 3D model on the basis of the viewing position and the visual line direction in the coordinate system of the 3D model. The visual line detecting section 343 supplies the visual field range and the viewing position of the viewer to the drawing section 227.

In Step S151, the MPD processing section 341 acquires URLs of the segment files of the high resolution stream to be reproduced from the MPD file. Specifically, the MPD processing section 341 acquires the URLs of the segment files at the reproducing clock time from the Representation element in the AdaptationSet element described in the MPD file and containing the identification information selected in Step S143 and the SRD that indicates the position of the high resolution image 331, on the virtual omnidirectional image 332, corresponding to the selected two-dimensional plane indicated by the selected two-dimensional plane information by the value. The MPD processing section 341 supplies the acquired URLs to the segment file acquisition section 272.

Since processes from Steps S152 to S157 are similar to those from Steps S91 to S96 of FIG. 17, description will be omitted.

In Step S158, the mapping processing section 342 sets the selected two-dimensional plane within the sphere 70 as the 3D model on the basis of the selected two-dimensional plane information supplied from the visual line detecting section 343.

In Step S159, the MPD processing section 341 determines whether the AdaptationSet element of the high resolution stream to be reproduced contains the mapping information. In a case of determining in Step S159 that the AdaptationSet element contains the mapping information, the MPD processing section 341 supplies the mapping information to the mapping processing section 342 and the process goes to Step S160.

In Step S160, the mapping processing section 342 maps the high resolution image as textures onto the selected two-dimensional plane set within in Step S158 on the basis of the mapping information regarding the high resolution stream. The mapping processing section 342 supplies the 3D model image for which the textures are mapped onto the sphere 70 and the selected two-dimensional plane to the drawing section 227, and the process goes to Step S162.

On the other hand, in a case of determining in Step S159 that the AdaptationSet element does not contain the mapping information, the process goes to Step S161. In Step S161, the mapping processing section 342 maps the high resolution image onto the selected two-dimensional plane set in Step S158 as a texture as it is. The mapping processing section 342 supplies the 3D model image for which the textures are mapped onto the sphere 70 and the selected two-dimensional plane to the drawing section 227, and the process goes to Step S162.

Since processes in Steps S162 and S163 are similar to those in Steps S100 and S101 of FIG. 17, description will be omitted.

It is noted that in the description described above, the generation device 300 generates the virtual omnidirectional image 332 on which the high resolution images 331 are disposed, and the reproducing device 340 holds the correspondence information, thereby making it possible for the generation device 300 to notify the reproducing device 340 of the two-dimensional plane information regarding each high resolution image 331 using the SRD. However, the generation device 300 may notify the reproducing device 340 of the two-dimensional plane information itself without using the SRD.

### (Second example of MPD file)

FIG. 35 is a diagram illustrating an example of the MPD file in this case.

The MPD file of FIG. 35 is identical to the MPD file of FIG. 30 except that the second to 19th AdaptationSet elements from the top do not each contain "SupplementalProperty schemeIdUri="http://xmlns.sony.net/metadata/mpeg/dash/cordinates/2015"" indicating the omnidirectional image generation method by the value and the SRD but "SupplementalProperty schemeIdUri="http://xmlns.sony.net/metadata/mpeg/dash/360VR/Perspectiv e-Portion/2016"" indicating the two-dimensional plane information by the value is described, and except for the value of "SupplementalProperty schemeIdUri="urn:mpeg:dash:original_source_id:2016"."

Specifically, the ID, the azimuth angle, the elevation angle, the rotational angle, the lateral angle of view, and the longitudinal angle of view are set to the value of "SupplementalProperty schemeIdUri="http://xmlns.sony.net/metadata/mpeg/dash/360VR/Perspectiv e-Portion/2016"." The ID is an ID that identifies the 3D model onto which the omnidirectional image used for generating the high resolution images is mapped. The azimuth angle is an azimuth angle in the two-dimensional plane information.

The azimuth angle, the elevation angle, the rotational angle, the lateral angle of view, and the longitudinal angle of view in the two-dimensional plane information corresponding to, for example, the high resolution image 331-1 corresponding to the second AdaptationSet element from the top are -135, 0, 0, 90, and 90, respectively, as depicted in FIG. 27. Therefore, the value of "SupplementalProperty schemeIdUri="http://xmlns.sony.net/metadata/mpeg/dash/360VR/Perspectiv e-Portion/2016"" owned by the second AdaptationSet element from the top is "10 D-135,0,0,90,90."

Likewise, the values of "SupplementalProperty schemeIdUri="http://xmlns.sony.net/metadata/mpeg/dash/360VR/Perspectiv e-Portion/2016"" owned by the third to 19th AdaptationSet elements from the top are "I0 D-90,45,0,90,90," "I0 D-90,0,0,90,90," "I0 D-90,-45,0,90,90," "I0 D-45,0,0,90,90," "I0 D0,90,0,90,90," "I0 D0,45,0,90,90," "I0 D0,0,0,90,90," "I0 D0,-45,0,90,90," "I0 D0,-90,0,90,90," "10 D45,0,0,90,90," "10 D90,45,0,90,90," "10 D90,0,0,90,90," "10 D90,-45,0,90,90," "10 D135,0,0,90,90," "10 D180,45,0,90,90," "10 D180,0,0,90,90," and "10 D180,-45,0,90,90," respectively. In other words, in a case of this FIG. 35, similarly to the case of FIG. 7, "I" is added to the top of the block storing the identification information in the value and "D" is added to a top of a block storing the two-dimensional plane information and the like therein. In addition, pieces of information in the block are delimited with a comma (,) and the blocks are delimited with a space.

Furthermore, in a case in which the two-dimensional plane information itself is described in the MPD file, the mapping information cannot be represented by the coordinates (X,Y) of the position of the reference image within the omnidirectional image and the rotational angle λ. Therefore, in the example of FIG. 35, the mapping information is represented by the Euler angle. In the example of FIG. 35, the Euler angle (α,β,γ) of the low resolution image is (0,0,0) and the Euler angle (α,β,γ) of each high resolution image 331 is (1,0,0). In addition, in the example of FIG. 35, type information is also described.

Thus, in the MPD file of FIG. 35, the value of "SupplementalProperty schemeIdUri="urn:mpeg:dash:original_source_id:2016"" owned by the first AdaptationSet element from the top is "I1 Byxz-euler,0,0,0." In addition, the value of "SupplementalProperty schemeIdUri="urn:mpeg:dash:original_source_id:2016"" owned by each of the second to 19th AdaptationSet elements from the top is "I1 Byxz-euler,1,0,0." In other words, in this case, the type information is stored in the top of the block storing the mapping information and "B" is added thereto.

As described so far, in the case in which the two-dimensional plane information itself is described in the MPD file, there is no need for the generation device 300 to dispose the high resolution images 331 on the virtual omnidirectional image 332 or for the reproducing device 340 to hold the correspondence information in advance. Therefore, a degree of freedom for setting the two-dimensional planes increases.

As a result, it is possible to set the two-dimensional planes as follows. As for a forward direction that tends to attract more attention, the longitudinal angle of view and the lateral angle of view of each two-dimensional plane are set to 90 degrees and the azimuth angle, the elevation angle, and the rotational angle are set such that a distance between the adjacent two-dimensional planes forms 45 degrees. As for an upward direction or a rearward direction that tend to attract less attention, the longitudinal angle of view and the lateral angle of view of each two-dimensional plane are set to be equal to or greater than 90 degrees. As for a downward direction that tends to attract least attention, two-dimensional planes are not set. Alternatively, a direction that tends to attract more attraction can be changed depending on a content of the captured images.

In the third embodiment, each high resolution image is generated by the perspective projection onto the two-dimensional plane. Alternatively, the high resolution image may be generated by stereographic projection, equidistant projection, or the like. In this case, information indicating a scheme of Projection onto the two-dimensional plane at a time of generating the high resolution image is set to the MPD file.

Specifically, "Perspective" in "SupplementalProperty schemeIdUri="http://xmlns.sony.net/metadata/mpeg/dash/360VR/Perspectiv e-Portion/2016"" of FIG. 35, for example, is changed to information indicating a projection type other than the perspective projection. Alternatively, "SupplementalProperty schemeIdUri="http://xmlns.sony.net/metadata/mpeg/dash/360VR/Portion/20 16"" indicating information that indicates the drawing plane and the projection type by a value is described in the MPD file as an alternative to "SupplementalProperty schemeIdUri="http://xmlns.sony.net/metadata/mpeg/dash/360VR/Perspectiv e-Portion/2016"" of FIG. 35. While the information indicating the projection type is indicated by schemeIdUri in the former case, the information is indicated by the value in the latter case.

In the latter case, the ID and the information indicating the projection type as well as the azimuth angle, the elevation angle, the rotational angle, the lateral angle of view, and the longitudinal angle of view are set to the value of "SupplementalProperty schemeIdUri="http://xmlns.sony.net/metadata/mpeg/dash/360VR/Portion/20 16"."

The information indicating the perspective projection as the projection type is, for example, "Perspective," the information indicating the stereographic projection is, for example, "stereographic," and the information indicating the equidistant projection is, for example, "equidistant."

In addition, since the 18 two-dimensional planes contain the six faces that configure the cube in the third embodiment, the 18 high resolution images contain the images 51 to 56 of the six faces 41 to 46. Therefore, the MPD file may be set in such a manner that the reproducing device 270 in the second embodiment can reproduce the high resolution images (hereinafter, referred to as "common images") that are the images 51 to 56 of the six faces 41 to 46 among the 18 high resolution images.

### (Description of two-dimensional plane information regarding common images)

FIG. 36 is a diagram illustrating two-dimensional plane information regarding the six common images in the two-dimensional plane information of FIG. 27.

As depicted in FIG. 36, the two-dimensional plane information regarding the six common images is the two-dimensional plane information for which the azimuth angle and the elevation angle are - 90 and 0, 0 and 90, 0 and 0, 0 and -90, 90 and 0, and 180 and 0 out of the two-dimensional plane information of FIG. 27. In other words, the six common images are the high resolution images 331-3, 331-6, 331-8, 331-10, 331-13, and 331-17.

### (Third example of MPD file)

FIG. 37 is a diagram illustrating an example of part of the MPD file set such that the reproducing device 270 of FIG. 16 can use the common images as the high resolution images obtained by splitting the omnidirectional image generated by the cube mapping.

FIG. 37 illustrates only the AdaptationSet elements of the high resolution image 331-3 that is the common image out of the MPD file.

In the MPD file of FIG. 37, segment files of the high resolution stream of the high resolution image 331-3 are classified into two groups. Therefore, in the MPD file of FIG. 37, two AdaptationSet elements are described to correspond to the high resolution image 331-3.

In the first AdaptationSet element, various kinds of information are described while assuming the high resolution image 331-3 as the image 52 of the face 42. Specifically, the first AdaptationSet element is identical to the third AdaptationSet element from the top of FIG. 14 except for BaseURL described in the Representation element.

In other words, the high resolution image corresponding to the first AdaptationSet element is the high resolution image 331-3 among the 18 high resolution images 331-1 to 331-18. Therefore, as BaseURL of the Representation element in the first AdaptationSet element, "cube3.mp4" is described in the Representation element within the fourth AdaptationSet element from the top of FIG. 30 as BaseURL.

In addition, in the second AdaptationSet element, various kinds of information are described while assuming the high resolution image 331-3 as the high resolution image of the two-dimensional plane having the line 321-3 as the normal passing through the center thereof. Specifically, the second AdaptationSet element is identical to the fourth AdaptationSet element from the top of FIG. 30 except for a value set to source_id of the SRD.

In other words, while the image before splitting at a time of assuming the high resolution image 331-3 as the image 52 of the face 42 is the omnidirectional image 50, the image before splitting at a time of assuming the high resolution image 331-3 as the high resolution image of the two-dimensional plane having the line 321-3 as the normal passing through the center thereof is the virtual omnidirectional image 332. Therefore, 1 other than 0 that is "source_id" of the first AdaptationSet element is set to "source_id" of the second AdaptationSet element.

As depicted in FIG. 38, the second AdaptationSet element may be identical to the fourth AdaptationSet element from the top of FIG. 35. In addition, although not depicted, the AdaptationSet elements of the high resolution images 331-6, 331-8, 331-10, 331-13, and 331-17 are described similarly to the AdaptationSet elements of the high resolution image 331-3.

In a case in which the generation device 300 generates the MPD file of FIG. 37 or 38, the reproducing device 270 in the second embodiment extracts only the AdaptationSet elements having "cube" as the information indicating the omnidirectional image generation method. Furthermore, the reproducing device 270 selects one face corresponding to the visual line from among the six faces 41 to 46 corresponding to the extracted AdaptationSet elements, and generates a display image using the high resolution image and the low resolution image of the selected face.

On the other hand, in a case in which the generation device 300 generates the MPD file of FIG. 37, the reproducing device 340 in the third embodiment extracts only the AdaptationSet elements having "cube-ex" as the information indicating the omnidirectional image generation method. In addition, in a case in which the generation device 300 generates the MPD file of FIG. 38, the reproducing device 340 extracts only the AdaptationSet elements having "SupplementalProperty schemeIdUri="http://xmlns.sony.net/metadata/mpeg/dash/360VR/Perspectiv e-Portion/2016"." Furthermore, the reproducing device 340 selects one plane corresponding to the visual line from among the 18 two-dimensional planes corresponding to the extracted AdaptationSet elements, and generates a display image using the high resolution image and the low resolution image of the selected face.

It is noted that in the third embodiment, capturing the captured images in/at a photographic direction, an inclination, and an angle of view corresponding to the two-dimensional plane information makes it possible to use the captured images themselves as the high resolution images. In this case, the generation device 300 does not need to perform the perspective projection.

Furthermore, while the low resolution image and the high resolution images are generated from the identical omnidirectional image in the third embodiment, different omnidirectional image generation methods may be used for generating the low resolution image and the high resolution images. Moreover, in a case of generating the low resolution image and the high resolution images from the identical omnidirectional image, the mapping information is not necessarily described.

### <Fourth embodiment>

### (Example of configuration of two-dimensional plane information)

A configuration of a fourth embodiment of a delivery system to which the present disclosure is applied is identical to that of the third embodiment except for a configuration of two-dimensional plane information. Therefore, only the two-dimensional plane information will be described hereinafter.

FIG. 39 is a diagram illustrating an example of configuration of drawing plane information indicating the two-dimensional plane information in the fourth embodiment.

The configuration of the drawing plane information of FIG. 39 differs from the configuration of FIG. 24 in that the drawing plane information newly contains FOV_flag, a whole lateral angle of view, a whole longitudinal angle of view, and spatial_set_id.

FOV_flag (plane type information) is a flag that indicates whether the drawing plane (visual field) corresponding to information containing this FOV_flag is a sphere or a two-dimensional plane. In a case in which the drawing plane information indicates the two-dimensional plane information, FOV_flag is 1 indicating that the drawing plane is the two-dimensional plane.

FOV_flag can make a configuration of information that indicates the drawing plane in a case in which the drawing plane is the sphere, for example, in a case in which part of the omnidirectional image generated using the equirectangular projection is generated as high resolution images, similar to that of the two-dimensional plane information. In other words, changing FOV_flag makes it possible to easily change the information containing this FOV_flag to two-dimensional plane information or information indicating the sphere as the drawing plane. The FOV_flag contained in the information indicating the sphere as the drawing plane is 0 indicating that the drawing plane is the sphere.

The reproducing device 340 can recognize, by FOV_flag, whether the high resolution image corresponding to this FOV_flag is an image generated by the perspective projection onto the two-dimensional plane or an image generated by the perspective projection onto the sphere.

In a case in which FOV_flag is 1, the whole lateral angle of view and the whole longitudinal angle of view are an angle of view in a lateral direction and an angle of view in a longitudinal direction of a whole two-dimensional plane belonging to a two-dimensional plane group (to be described later in detail) indicated by the two-dimensional plane information containing this whole lateral angle of view and this whole longitudinal angle of view, respectively. The same thing is true for a case in which FOV_flag is 0. Subsequently, the case in which FOV_flag is 1 will be described; however, the same thing is true for the case in which FOV_flag is 0 unless otherwise described.

The reproducing device 340 can recognize a visual field range that can be expressed by high resolution images corresponding to the group only by analyzing two-dimensional plane information regarding one two-dimensional plane belonging to the group using the whole lateral angle of view and the whole longitudinal angle of view. Therefore, it is possible to prevent unnecessary search of two-dimensional plane information regarding the visual field range that cannot be expressed by the high resolution images. In a case in which the two-dimensional planes belonging to the group configure a three-dimensional object such as a sphere or a cube, the whole lateral angle of view is 360 degrees and the whole longitudinal angle of view is 180 degrees.

spatial_set_id is an ID unique to the group and indicating the group to which the two-dimensional plane indicated by the two-dimensional plane information containing this spatial_set_id belongs. The two-dimensional planes are grouped by, for example, the lateral angle of view, the longitudinal angle of view, the type of two-dimensional planes, or a resolution.

In a case of grouping the two-dimensional planes by the lateral angle of view, the two-dimensional planes are grouped, for example, by the identical lateral angle of view. Since display devices such as the head mounted display 15 differ in display angle of view depending on the type of display device, the lateral angle of view of the two-dimensional plane appropriate for display differs depending on the type of display device. It is, therefore, desirable that the reproducing device 340 can easily recognize the two-dimensional plane information regarding the lateral angle of view appropriate for the display of the head mounted display 15.

In a case in which the two-dimensional planes are grouped by the identical lateral angle of view, the reproducing device 340 can easily recognize the two-dimensional plane information regarding the group corresponding to the lateral angle of view appropriate for the display of the head mounted display 15 as the two-dimensional plane information regarding the lateral angle of view appropriate for the display of the head mounted display 15. The same thing is true for the longitudinal angle of view as for the lateral angle of view.

In addition, in a case in which the two-dimensional planes are grouped by the type of two-dimensional plane, the two-dimensional planes are grouped, for example, by whether each two-dimensional plane is any of the six faces that are the drawing planes of the omnidirectional image generated by the cube mapping and that configure the cube. In this case, the six faces that configure the cube among the 18 two-dimensional planes described in FIG. 26 are classified into one group while the other planes are classified into the other group.

### (Description of FOV_flag)

FIG. 40 is an illustrative diagram of a drawing plane in a case in which FOV_flag is 0.

In the case in which FOV_flag is 0, the high resolution image is a captured image mapped onto a partial region 391 of a surface of the sphere 70 as depicted in A of FIG. 40, that is, a partial image 392 of the omnidirectional image 90 generated by using the equirectangular projection as depicted in B of FIG. 40.

In this case, a lateral angle of view of the drawing plane of the partial image 392, that is, of the region 391 is an angle poq of the region 391 in a horizontal plane containing the center O of the sphere 70, and a longitudinal angle of view thereof is an angle aob of the region 391 in a vertical plane perpendicular to the horizontal plane containing the center O. In the example of FIG. 40, the angles poq and aob are 30 degrees.

On the other hand, in a case in which FOV_flag is 1, the drawing plane of the high resolution image is the two-dimensional plane. Therefore, the lateral angle of view is the angle qos depicted in FIG. 25 and the longitudinal angle of view is the angle por depicted in FIG. 25.

### (First example of MPD file)

FIG. 41 is a diagram illustrating a first example of an MPD file describing the two-dimensional information of FIG. 39.

The MPD file of FIG. 41 differs from the MPD file of FIG. 35 in that the spatial_set_id, the whole lateral angle of view, and the whole longitudinal angle of view are newly set to the value of "SupplementalProperty schemeIdUri="http://xmlns.sony.net/metadata/mpeg/dash/360VR/Perspectiv e-Portion/2016"" that is schemeIdUri indicating the two-dimensional plane information by a value in a case in which the projection type is the perspective projection.

Specifically, the ID, the spatial_set_id, the azimuth angle, the elevation angle, the rotational angle, the lateral angle of view, the longitudinal angle of view, the whole lateral angle of view, and the whole longitudinal angle of view are set to the value of "SupplementalProperty schemeIdUri="http://xmlns.sony.net/metadata/mpeg/dash/360VR/Perspectiv e-Portion/2016"" of FIG. 41.

Furthermore, in the example of FIG. 41, the two-dimensional planes corresponding to the high resolution images 331-1 to 331-18 are all classified into an identical group and ID "1" is assigned to the group. In addition, 18 two-dimensional planes corresponding to the high resolution images 331-1 to 331-18 contain the six faces 41 to 46 that configure the cube 40. Therefore, the whole lateral angle of view and the whole longitudinal angle of view of the entire 18 two-dimensional planes are 360 degrees and 180 degrees, respectively.

Therefore, the value of "SupplementalProperty schemeIdUri="http://xmlns.sony.net/metadata/mpeg/dash/360VR/Perspectiv e-Portion/2016"" owned by the second AdaptationSet element from the top is "10,1 D-135,0,0,90,90,360,180."

In addition, the values of "SupplementalProperty schemeIdUri="http://xmlns.sony.net/metadata/mpeg/dash/360VR/Perspectiv e-Portion/2016"" owned by the third to 19th AdaptationSet elements from the top are "I0,1 D-90,45,0,90,90,360,180," "I0,1 D-90,0,0,90,90,360,180," "I0,1 D-90,-45,0,90,90,360,180," "I0,1 D-45,0,0,90,90,360,180," "I0,1 D0,90,0,90,90,360,180," "I0,1 D0,45,0,90,90,360,180," "I0,1 DO,0,0,90,90,360,180," "I0,1 D0,-45,0,90,90,360,180," "I0,1 D0,-90,0,90,90,360,180," "I0,1 D45,0,0,90,90,360,180," "I0,1 D90,45,0,90,90,360,180," "I0,1 D90,0,0,90,90,360,180," "I0,1 D90,-45,0,90,90,360,180," "I0,1 D135,0,0,90,90,360,180," "I0,1 D180,45,0,90,90,360,180," "I0,1 D180,0,0,90,90,360,180," and "I0,1 D180,-45,0,90,90,360,180," respectively. In other words, in this case of FIG. 35, similarly to the case of FIG. 7, "I" is added to the top of the block storing the identification information in the value. It is noted that "D" is added to the top of the block storing data. In addition, pieces of information in the block are delimited with a comma (,) and the blocks are delimited with a space.

It is noted that "SupplementalProperty schemeIdUri="http://xmlns.sony.net/metadata/mpeg/dash/360VR/Perspectiv e-Portion/2016"" is schemeIdUri in the case in which the projection type is the perspective projection; thus, the drawing plane is always a two-dimensional plane in a case of describing this schemeIdUri. Therefore, while FOV_flag is not set as the value in the example of FIG. 41, FOV_flag may be set as the value.

Furthermore, similarly to the third embodiment, a scheme other than the perspective projection may be adopted as the projection type. In this case, "Perspective" of "SupplementalProperty schemeIdUri="http://xmlns.sony.net/metadata/mpeg/dash/360VR/Perspectiv e-Portion/2016"" is changed to other information indicating the projection type (for example, "stereographic" or "equidistant").

It is noted that the projection type may be indicated by a value. In this case, "SupplementalProperty schemeIdUri="http://xmlns.sony.net/metadata/mpeg/dash/360VR/Portion/20 16"" indicating information indicating the drawing plane and the projection type by a value is described in the MPD file as an alternative to "SupplementalProperty schemeIdUri="http://xmlns.sony.net/metadata/mpeg/dash/360VR/Perspectiv e-Portion/2016"." In addition, the ID, the spatial_set_id, the information indicating the projection type, FOV_flag, the azimuth angle, the elevation angle, the rotational angle, the lateral angle of view, the longitudinal angle of view, the whole lateral angle of view, and the whole longitudinal angle of view are set to a value thereof. Therefore, in the case in which the projection type is, for example, the perspective projection, "SupplementalProperty schemeIdUri="http://xmlns.sony.net/metadata/mpeg/dash/360VR/Perspectiv e-Portion/2016"" owned by the second AdaptationSet element from the top of FIG. 41 is "SupplementalProperty schemeIdUri="http://xmlns.sony.net/metadata/mpeg/dash/360VR/portion/20 16"" and the value thereof is "I0,1 Pperspective D1,-135,0,0,90,90,360,180." It is noted that "P" is added to the top of the block storing the projection type in this case.

As described so far, in the case in which the projection type is indicated by the value, it is possible to deal with extension of the projection type only by changing the value. Therefore, it is easy to deal with extension of the projection type, compared with the case in which the projection type is indicated by schemeIdUri. Furthermore, in the case in which the projection type is indicated by the value, schemeIdUri indicating the information indicating the drawing plane by the value is common to all the projection types; thus, it is impossible to determine whether the drawing plane is the sphere or the two-dimensional plane by description of this schemeIdUri. In this case, therefore, FOV_flag is set to the value.

In addition, in the fourth embodiment, similarly to the third embodiment, the MPD file may be set in such a manner that the reproducing device 270 can reproduce the common images.

### (Second example of MPD file)

FIG. 42 is a diagram illustrating an example of part of the MPD file in this case.

The MPD file of FIG. 42 differs from the MPD file of FIG. 38 in that the value of "SupplementalProperty schemeIdUri="http://xmlns.sony.net/metadata/mpeg/dash/360VR/Perspectiv e-Portion/2016"" in the second AdaptationSet element is identical to the fourth AdaptationSet element from the top of FIG. 41.

In addition, in the fourth embodiment, drawing plane information may be described together with an omnidirectional video generation method and SRD information in the MPD file.

FIG. 43 is a diagram illustrating an example of part of the MPD file in this case. In FIG. 43, the omnidirectional video generation method is set to the value of "SupplementalProperty schemeIdUri="http://xmlns.sony.net/metadata/mpeg/dash/cordinates/2015"" in each of the AdaptationSet elements.

In addition, the ID, spatial_set_id, FOV_flag, the azimuth angle, the elevation angle, the rotational angle, the lateral angle of view, the longitudinal angle of view, the whole lateral angle of view, and the whole longitudinal angle of view are set to the value of "SupplementalProperty schemeIdUri="http://xmlns.sony.net/metadata/mpeg/dash/360VR/Portion/20 16"" in each of the AdaptationSet elements as the drawing plane information. The projection type is not set since the scheme can be determined from the omnidirectional video generation method; however, the projection type may be set.

Furthermore, SRD information is set to the value of "SupplementalProperty schemeIdUri="urn:mpeg:dash:srd:2014"" in each of the second to fourth AdaptationSet elements.

It is noted that the ID, spatial_set_id, the whole lateral angle of view, and the whole longitudinal angle of view in the drawing plane information described above may be omitted in a case in which the drawing plane information is described together with the SRD information in each AdaptationSet element. In addition, description of the mapping information may be omitted in a case in which the drawing plane information described in each AdaptationSet element is information containing the mapping information.

FIG. 44 is a perspective view illustrating an example of the 3D model of a cube stream set by the MPD file depicted in FIG. 43. In this case, the captured images are mapped onto six faces (splits 1 to 6) of a cube. SRD information regarding development of these faces is, for example, as depicted in FIG. 45. In addition, the drawing plane information is, for example, as depicted in FIG. 46.

Furthermore, in the fourth embodiment, distance information that indicates a radius of the sphere 70 as the 3D model of the omnidirectional image in meter units may be described in the MPD file.

### (Third example of MPD file)

FIG. 47 is a drawing illustrating an example of the MPD file in this case.

The MPD file of FIG. 47 differs from the MPD file of FIG. 41 in that "SupplementalProperty schemeIdUri=http://xmlns.sony.net/metadata/mpeg/dash/360VR/sphere_radi us/2016" indicating the distance information by a value is newly described in each AdaptationSet element.

In the example of FIG. 41, the radius of the sphere 70 is ten meters. Therefore, 10 is set to the value of "SupplementalProperty schemeIdUri=http://xmlns.sony.net/metadata/mpeg/dash/360VR/sphere_radi us/2016" in each of the second to 19th AdaptationSet elements from the top of FIG. 41.

It is noted that the distance information may contain not only information that indicates the radius of the sphere 70 itself but also "inf" that indicates that the radius of the sphere 70 is infinite or "und" that indicates that the radius of the sphere 70 is unknown. In a case in which the distance information is "und," the radius of the sphere 70 is estimated by the reproducing device 340. In addition, the unit of the distance information may be other than meter.

In the first to third embodiments, similarly to the fourth embodiment, the radius of the sphere 70 may be described in the MPD file.

As described so far, describing the radius of the sphere 70 in the MPD file makes it possible for the reproducing device 14 (270, 340) to provide a display image with an appropriate sense of depth to the viewer.

In other words, the display device such as the head mounted display 15 can display separate images for both eyes. Therefore, the reproducing device 14 (270, 340) displays a display image for a left eye and a display image for a right eye by, for example, displacing the display image rightward and leftward by a predetermined distance and displays the display images on the head mounted display 15, thereby making it possible to produce the sense of depth of the display image. In a case of a large displacement between the display image for the left eye and that for the right eye, the viewer recognizes that a subject in the display image is on the front side, and in a case of a small displacement, the viewer recognizes that the subject is on the back side.

However, the reproducing device 14 (270, 340) is unable to grasp an appropriate displacement amount between the display image for the left eye and the display image for the right eye. Therefore, the generation device 12 (250, 300) describes the radius of the sphere 70 in the MPD file. The reproducing device 14 (270, 340) can thereby calculate the appropriate displacement amount between the display image for the left eye and the display image for the right eye on the basis of the radius of the sphere 70. As a result, it is possible to provide the display image with an appropriate sense of depth to the viewer.

While both a method of delimiting values in the value with a space and an alphabet and a method of delimiting values with a comma are used in the first to fourth embodiments, only the method of delimiting the values with a comma may be used.

In this case, "ID,projection,FOV_flag,azimuth angle,elevation angle, rotational angle, lateral angle of view,longitudinal angle of view, whole lateral angle of view, whole longitudinal angle of view,spatial_set_id," for example, are set to the value of "SupplementalProperty schemeIdUri="http://xmlns.sony.net/metadata/mpeg/dash/360VR/portion/20 16"."

Therefore, in the case in which the projection type is, for example, the perspective projection, "SupplementalProperty schemeIdUri="http://xmlns.sony.net/metadata/mpeg/dash/360VR/Perspectiv e-Portion/2016"" owned by the second AdaptationSet element from the top of FIG. 41 is "SupplementalProperty schemeIdUri="http://xmlns.sony.net/metadata/mpeg/dash/360VR/portion/20 16"" and the value thereof is "0,perspective,1,-135,0,0,90,90,360,180,1."

### <Fifth embodiment>

### (Example of configuration of generation device)

A fifth embodiment of a delivery system to which the present disclosure is applied differs from the fourth embodiment in that various kinds of information regarding the images (low resolution image, high resolution images) set to the MPD file in the fourth embodiment is set to segment files. Therefore, description of processes other than those performed by the generation device and the reproducing device will be omitted, as appropriate hereinafter.

FIG. 48 is a block diagram illustrating an example of a configuration of the fifth embodiment of the generation device to which the present disclosure is applied.

In the configurations depicted in FIG. 48, same configurations as those in FIG. 23 are denoted by the same reference characters. Repetitive description will be omitted, as appropriate.

A generation device 400 of FIG. 48 differs in configuration from the generation device 300 of FIG. 23 in that a segment file generation section 401 and an MPD file generation section 402 are provided as an alternative to the segment file generation section 304 and the MPD file generation section 256.

The segment file generation section 401 files a low resolution stream, a high resolution stream of each two-dimensional plane, and an audio stream for each bitrate and each segment in accordance with an MP4 file format, and generates segment files.

Specifically, the segment file generation section 401 disposes the low resolution stream in a predetermined time unit, the high resolution stream of each two-dimensional plane, and the audio stream in each segment file for each bitrate and each segment as samples. In addition, the segment file generation section 401 (setting section) sets various kinds of information regarding an image corresponding to the sample disposed in the segment file to the segment file. The segment file generation section 401 supplies the segment files to the upload section 30.

The MPD file generation section 402 generates an MPD file. The various kinds of information regarding images are not set to this MPD file unlike the fourth embodiment. The MPD file generation section 402 supplies the MPD file to the upload section 30.

In the fifth embodiment, it is assumed that an image coding scheme is HEVC (High Efficiency Video Coding).

### (Description of method of setting various kinds of information regarding images)

FIG. 49 is an illustrative diagram of a method of setting various kinds of information regarding images by the segment file generation section 401 of FIG. 48.

The segment file is a file in an MP4 file format and has a box structure depicted in FIG. 49. In FIG. 49, four alphabets represent a name of a box and a lateral position of the name represents a layer of the box with the name. The layer is lower rightward.

As depicted in FIG. 49, examples of the method of setting various kinds of information regarding images by the segment file generation section 401 of FIG. 48 include first to fifth methods.

Specifically, in a case in which the various kinds of information regarding images do not change within tracks, the various kinds of information regarding images are set in track units by any of the first to third methods.

With the first method, the various kinds of information regarding images are set to an hvcC box (HEVC Configuration Box) that is a Configuration Box of HEVC, which is the image coding scheme, on a lower layer than a trak box provided per track on a lower layer than a moov box.

With the second method, the various kinds of information regarding images are set to Visual Sample Entry (hev1 box) of HEVC images contained in an stsd box on a lower layer than the trak box.

With the third method, the various kinds of information regarding images are set to an schi box on a lower layer than a rinf box (Restricted Scheme Info box) storing information necessary for processes after decoding of lower layers than the trak box.

In addition, in a case in which at least part of the various kinds of information regarding images changes within tracks, the various kinds of information regarding images are set by a fourth or fifth method.

With the fourth method, at least information changing within the tracks among the various kinds of information regarding images is set in sample units by an approach called sample groups using an sbgp box (SampleToGroupBox) and an sgpd (SampleGroupDescriptionBox) box.

With the fifth method, at least information changing within the tracks among the various kinds of information regarding images is set in sample units as timed metadata in samples of tracks allocated to the various kinds of information regarding images.

### (First method)

FIG. 50 is a diagram illustrating an example of a configuration of the hvcC box in a case in which the segment file generation section 401 of FIG. 48 sets the various kinds of information regarding images with the first method.

As depicted in FIG. 50, in the case in which the segment file generation section 401 sets the various kinds of information regarding images with the first method, the hvcC box is extended to include an scri box (Spherical Coordinate Region Info Box) that contains various kinds of information regarding images in track units.

In the fifth embodiment, the hvcC box is extended since the image coding scheme is HEVC. However, in a case in which the image coding scheme is a scheme other than HEVC, not the hvcC box but a Configuration Box of the coding scheme is extended to include the scri box.

FIG. 51 is a diagram illustrating an example of a configuration of the scri box.

As depicted in FIG. 51, various kinds of information regarding images are set to the scri box. Specifically, information that indicates a type of projection onto a two-dimensional plane at the time of generating a high resolution image is set as projection_type.

The ID serving as the identification information regarding the captured images used for generating the omnidirectional image is set as id. FOV_flag is set. The azimuth angle configuring the two-dimensional plane information is set as object_yaw, the elevation angle is set as object_pitch, the rotational angle is set as object_roll, the lateral angle of view is set as object_width, and the longitudinal angle of view is set as object_height.

In addition, the whole lateral angle of view is set as total_width and the whole longitudinal angle of view is set as total_height. It is noted that total_width can be omitted in a case of the whole lateral angle of view of 360 degrees, and that total_height can be omitted in a case of the whole longitudinal angle of view of 180 degrees. Furthermore, the distance information is set as sphere_radius and spatial_set_id is set. In a case in which spatial_set_id is 0, spatial_set_id may not be set.

It is noted that the low resolution image and the high resolution image to which a track corresponding to the scri box to which the identical id is set can be mapped onto the identical 3D model.

In addition, even in a case of allocating different tracks to a plurality of high resolution images belonging to a group indicated by the identical spatial_set_id, the whole lateral angle of view and the whole longitudinal angle of view are set as total_width and total_height. In other words, in this case, the angle of view in the lateral direction and the angle of view in the longitudinal direction of the entire two-dimensional planes corresponding to the plurality of high resolution images allocated to the plurality of tracks and belonging to the group indicated by the identical spatial_set_id are set as total_width and total_height.

In a case of allocating a plurality of tracks to a plurality of images (low resolution image and high resolution image) identical in ID as the identification information regarding the captured images used for generating the omnidirectional image, the segment file generation section 401 may group the tracks identical in ID without setting the ID to the scri box as id.

In this case, as depicted in FIG. 52, the tracks identical in ID as the identification information regarding the captured images used for generating the omnidirectional image are grouped using a tref box (Track Reference Box) on the lower layer than the trak box.

Specifically, "spid" indicating that the ID as the identification information regarding the captured images used for generating the omnidirectional image is identical is set as reference_type that indicates a type of a reference relationship in Track Reference Type Box that indicates the reference relationship of tracks contained in the tref box. Furthermore, in the Track Reference Type Box in which reference_type is "spid," the ID of a track corresponding to this Track Reference Type Box and the ID of the other track identical in ID as the identification information regarding the captured images used for generating the omnidirectional image are set as track_IDs that is track IDs of tracks to be referred to.

Likewise, in a case of allocating a plurality of tracks to a plurality of high resolution images identical in spatial_set_id, the segment file generation section 401 may group the tracks identical in spatial_set_id without setting the spatial_set_id to the scri box. In this case, reference_type is "spsi" indicating that spatial_set_id is identical.

### (Description of second method)

FIG. 53 is a diagram illustrating an example of a configuration of Visual Sample Entry in a case in which the segment file generation section 401 of FIG. 48 sets the various kinds of information regarding images with the second method.

As depicted in FIG. 53, in the case in which the segment file generation section 401 sets the various kinds of information regarding images with the second method, Visual Sample Entry that is Sample Entry of images is extended to include the scri box of FIG. 51. Therefore, with the second method, the box extended to include the scri box does not change with the image coding scheme.

In the fifth embodiment, since the image coding scheme is HEVC, Visual Sample Entry to which the various kinds of information regarding images are set is Visual Sample Entry (hev1 box) for HEVC images.

### (Description of third method)

FIG. 54 is a diagram illustrating an example of a configuration of the schi box in a case in which the segment file generation section 401 of FIG. 48 sets the various kinds of information regarding images with the third method.

As depicted in FIG. 54, in the case in which the segment file generation section 401 sets the various kinds of information regarding images with the third method, the schi box is extended to include the scri box of FIG. 51. scheme_type representing a type of a process after decoding using information stored in the schi box in a schm box (Scheme Type Box) on the same layer as that of the extended schi box is set to "scri" indicating a mapping process.

With the third method, the box extended to include the scri box does not change with the image coding scheme.

With the second and third methods, similarly to the first method, the segment file generation section 401 can group tracks with the identical ID as the identification information regarding the captured images used for generating the omnidirectional image or identical spatial_set_id using the tref box, without setting id or spatial_set_id.

As described so far, with the first to third methods, various kinds of information regarding images are set on the lower layer than the trak box provided per track. Therefore, in a case in which the various kinds of information regarding images do not change within the tracks, the information can be efficiently set in track units.

### (Description of fourth method)

FIG. 55 is an illustrative diagram of sample groups.

As depicted in FIG. 55, the approach called sample groups uses an sgpd box and sbgp box.

The sgpd box is a box for grouping continuous samples having common sample information that is information regarding samples and for describing the sample information regarding each group. The sbgp box is a box for describing information identifying samples in each group (hereinafter, referred to as "sample identification information").

In the sgpd box, grouping_type, entry_count, GroupEntry, and the like are described. In the sgpd box, grouping_type indicates a type of sample information that forms the basis for grouping into a corresponding group, and entry_count indicates the number of sample information different from one another among the sample information in each group. In addition, GroupEntry is sample information different from one another among the sample information in each group and described by the number represented by entry_count. A structure of GroupEntry varies depending on grouping_type.

In the sbgp box, grouping_type, entry_count, sample_count, group_description_index, and the like are described. In the sbgp box, grouping_type indicates the type of sample information that forms the basis for grouping into the corresponding group, and entry_count indicates the number of groups.

sample_count is sample identification information regarding each group and indicates the number of continuous samples in each group. sample_count is described by the number indicated by entry_count, and a sum of all sample_count is the number of all samples of the track corresponding to the sgpd box. group_description_index is information identifying GroupEntry that is the sample information regarding each group.

In the example of FIG. 55, entry_count of the sbgp box and that of the sgpd box identical in grouping_type are 6 and 4, respectively. Therefore, the number of groups is six and the number of sample information different from one another among the sample information regarding each of the six groups is four. Furthermore, four pieces of GroupEntry are described in the sgpd box.

In addition, first to sixth sample_count[1] to sample_count[6] from the top in the sbgp box are 1, 2, 1, 1, 1, and 2 in order. Therefore, the numbers of samples of the first to sixth groups from the top are 1, 2, 1, 1, 1, and 2 in order.

In other words, the first sample from the top (sample[1]) is classified into the first group from the top and the second and third samples from the top (sample[2], sample[3]) are classified into the second group from the top. In addition, the fourth sample from the top (sample[4]) is classified into the third group from the top and the fifth sample from the top (sample[5]) is classified into the fourth group from the top. The sixth sample from the top (sample[6]) is classified into the fifth group from the top and the seventh and eighth samples from the top (sample[7], sample[8]) are classified into the sixth group from the top.

In addition, first to sixth group_description_index[1] to group_description_index[6] from the top are 1, 3, 2, 0, 4, and 1 in order. Therefore, the sample information regarding the first sample from the top classified into the first group from the top is first GroupEntry from the top. In addition, the sample information common to the second and third samples from the top classified into the second group from the top is third GroupEntry from the top.

Furthermore, the sample information regarding the fourth sample from the top classified into the third group from the top is second GroupEntry from the top. In addition, there is no sample information regarding the fourth sample from the top classified into the fifth group from the top.

In addition, the sample information regarding the sixth sample from the top classified into the fifth group from the top is fourth GroupEntry from the top. In addition, the sample information regarding the seventh and eighth samples from the top classified into the sixth group from the top is first GroupEntry from the top.

In the case in which the segment file generation section 401 sets the various kinds of information regarding images with the fourth method, various kinds of information regarding images in sample units are set as the sample information using the sample groups described above.

Specifically, the sbgp box of FIG. 56 having grouping_type of "scri" is set to correspond to the sgpd box in which Spherical Coordinate Region Info Entry is disposed as GroupEntry and which has grouping_type of "scri." Spherical Coordinate Region Info Entry of FIG. 56 is an extension of VisualSampleGroupEntry to include various kinds of information regarding images in sample units.

In other words, with the fourth method, continuous samples having common various kinds of information regarding images in sample units are classified into each group. Furthermore, information different from one another among the various kinds of information regarding images in sample units of each group is set to Spherical Coordinate Region Info Entry of FIG. 56 disposed in the sgpd box having grouping_type of "scri" as GroupEntry. In addition, sample_count indicating the sample identification information regarding each group is set to the sbgp box having grouping_type of "scri." It is thereby possible to the various kinds of information regarding images in sample units to each segment file.

While all the various kinds of information regarding images can be set in sample units with the fourth method described above, only the information changing within the tracks among the various kinds of information regarding images can be set in sample units.

FIG. 57 is a diagram illustrating an example of a configuration of Spherical Coordinate Region Info Entry in this case.

In the example of FIG. 57, object_yaw, object_pitch, object_roll, object_width, and object_height among the various kinds of information regarding images are information changing within the tracks.

In this case, as depicted in FIG. 57, only object_yaw, object_pitch, object_roll, object_width, and object_height are set to Spherical Coordinate Region Info Entry.

In addition, in this case, information that does not change within the tracks among the various kinds of information regarding images is set to the scri box included in the hvcC box, the hev1 box, or the schi box with a method similar to the first to third methods. The scri box at this time is as depicted in FIG. 58. A configuration of the scri box of FIG. 58 differs from the configuration of FIG. 51 in that object_yaw, object_pitch, object_roll, object_width, and object_height are not set.

It is noted that the tracks identical in id or spatial_set_id may be grouped without setting id or spatial_set_id among the information that does not change within tracks to the scri box, similarly to the first to third methods.

As described so far, in the case of setting only the information changing within tracks among the various kinds of information regarding images using the sample groups, it is possible to reduce an amount of data of the segment file, compared with a case of setting all various kinds of information regarding images using the sample groups.

While it is assumed in the examples of FIGS. 57 and 58 that the information changing within tracks among the various kinds of information regarding images are object_yaw, object_pitch, object_roll, object_width, and object_height, arbitrary information can be set.

### (Description of fifth method)

FIG. 59 is a diagram illustrating an example of a configuration of the segment file in a case in which the segment file generation section 401 of FIG. 48 sets the various kinds of information regarding images with the fifth method.

As depicted in FIG. 59, with the fifth method, a metadata track (Spherical Coordinate Region Info Track) different from image tracks is allocated to various kinds of information regarding images. The various kinds of information regarding images in sample units (Spherical Coordinate Region Information) are set as samples of timed metadata to the allocated track.

In addition, Track Reference Type Box having reference_type of "scri" indicating a relationship between the images and the various kinds of information regarding the images is set to a tref box in Spherical Coordinate Region Info Track. To this Track Reference Type Box, an ID of Spherical Coordinate Region Info Track for various kinds of information regarding images in the track corresponding to this Track Reference Type Box is set as track_IDs.

FIG. 60 is a diagram illustrating an example of a configuration of SphericalCoordinateRegionInfoSample that is a sample of timed metadata in which various kinds of information regarding images in sample units are disposed.

As depicted in FIG. 60, various kinds of information regarding images in sample units are set to SphericalCoordinateRegionInfoSample.

It is noted that various kinds of information regarding images in sample units of samples may be set as SphericalCoordinateRegionInfoSample only in a case in which the information differs from various kinds of information regarding images in sample units of a previous sample without setting all the information as SphericalCoordinateRegionInfoSample.

In this case, examples of a method of setting the various kinds of information regarding images in sample units to SphericalCoordinateRegionInfoSample include two methods, namely, a whole information setting method and a partial information setting method.

The whole information setting method is a method of setting all of the various kinds of information regarding images in sample units to SphericalCoordinateRegionInfoSample in a case in which at least one of the various kinds of information regarding images in sample units differs from a previous sample.

Specifically, with the whole information setting method, as depicted in FIG. 61, Spherical Coordinate Region Info Sample Entry that is Metadata Sample Entry for the various kinds of information regarding images included in the stsd box on the lower layer of the trak box in Spherical Coordinate Region Info Track trak includes Spherical Coordinate Region Info Configuration Box. Furthermore, as depicted in FIG. 62, default values of the various kinds of information regarding images in sample units (default_projection_type, default_id, default_FOV_flag, default_object_yaw, default_object_pitch, default_object_roll, default_object_width, default_object_height, default_total_width, default_total_height, default_sphere_radius, and default_spatial_set_id) are set to Spherical Coordinate Region Info Configuration Box.

While it is described herein that the default values of the various kinds of information regarding images in sample units are contained in the stsd box in Spherical Coordinate Region Info Track, the default values may be included in the stsd box in the image track. An hvcC box in this case is identical to the hvcC box with the first method described with reference to FIGS. 50 and 51 except that the various kinds of information regarding images in track units are replaced by the default values of the various kinds of information regarding images in sample units.

In addition, with the whole information setting method, SphericalCoordinateRegionInfoSample is as depicted in FIG. 63. SphericalCoordinateRegionInfoSample of FIG. 63 differs from SphericalCoordinateRegionInfoSample of FIG. 60 in that an update_flag of one bit indicating whether this sample differs from a previous sample in at least one of the various kinds of information regarding images in sample units is set, and in that all the various kinds of information regarding images in sample units are set in response to the update_flag.

The update_flag is 1 in a case in which the sample corresponding to this update_flag differs from the previous sample in at least one of the various kinds of information regarding images in the sample units, and is 0 in a case in which the sample corresponding to this update_flag is totally identical to the previous sample. It is noted that in a case in which the sample corresponding to the update_flag is the first sample, various kinds of information regarding images in sample units of the previous sample are default values of the various kinds of information regarding images in sample units.

In the case in which the update_flag is 1, the various kinds of information regarding images in sample units of this sample are set to SphericalCoordinateRegionInfoSample. On the other hand, in the case in which the update_flag is 0, the various kinds of information regarding images in sample units are not set to SphericalCoordinateRegionInfoSample.

In addition, the partial information setting method is a method of setting only different information to SphericalCoordinateRegionInfoSample in the case in which the sample differs from the previous sample in at least one of the various kinds of information regarding images in sample units.

Specifically, with the partial information setting method, similarly to the whole information setting method, the default values of the various kinds of information regarding images in sample units are set. In addition, SphericalCoordinateRegionInfoSample is as depicted in FIG. 64. SphericalCoordinateRegionInfoSample of FIG. 64 differs from SphericalCoordinateRegionInfoSample of FIG. 60 in that an update_flag of 16 bits indicating whether this sample differs from the previous sample in each of the various kinds of information regarding images in sample units is set, and in that the various kinds of information regarding images in sample units are set in response to the update_flag per information.

In other words, each of the various kinds of information regarding images in sample units is allocated to each bit of the update_flag. In a case in which each piece of information differs from the previous sample of the sample corresponding to this update_flag, the bit allocated to the information is 1 and, in a case in which each piece of information is identical to the previous sample of the sample corresponding to this update_flag, the bit is 0. It is noted that in a case in which the sample corresponding to the update_flag is the first sample, various kinds of information regarding images in sample units of the previous sample are default values of the various kinds of information regarding images in sample units.

In the example of FIG. 64, the bits of update_flag are allocated, in order from a least significant bit, projection_type, id, FOV_flag, object_yaw, object_pitch, object_roll, object_width, object_height, total_width, total_height, sphere_radius, and spatial_set_id among the various kinds of information regarding images.

Therefore, in a case in which the update_flag of 16 bits is, for example, 0000 0000 0000 0001b, only the projection_type of the sample corresponding to this update_flag is set to SphericalCoordinateRegionInfoSample. In a case in which the update_flag is 0000 0000 0000 0010b, only the id of the sample corresponding to this update_flag is set to SphericalCoordinateRegionInfoSample.

In addition, in a case in which the update_flag is 0000 0000 0000 0100b, only the FOV_flag of the sample corresponding to this update_flag is set to SphericalCoordinateRegionInfoSample. In a case in which the update_flag is 0000 0000 0000 1000b, only the object_yaw of the sample corresponding to this update_flag is set to SphericalCoordinateRegionInfoSample. In a case in which the update_flag is 0000 0000 0001 0000b, only the object_pitch of the sample corresponding to this update_flag is set to SphericalCoordinateRegionInfoSample.

Furthermore, In a case in which the update_flag is 0000 0000 0010 0000b, only the object_roll of the sample corresponding to this update_flag is set to SphericalCoordinateRegionInfoSample. In a case in which the update_flag is 0000 0000 0100 0000b, only the object_width of the sample corresponding to this update_flag is set to SphericalCoordinateRegionInfoSample. In a case in which the update_flag is 0000 0000 1000 0000b, only the object_height of the sample corresponding to this update_flag is set to SphericalCoordinateRegionInfoSample.

In addition, In a case in which the update_flag is 0000 0001 0000 0000b, only the total_width of the sample corresponding to this update_flag is set to SphericalCoordinateRegionInfoSample. In a case in which the update_flag is 0000 0010 0000 0000b, only the total_height of the sample corresponding to this update_flag is set to SphericalCoordinateRegionInfoSample. In a case in which the update_flag is 0000 0100 0000 0000b, only the sphere_radius of the sample corresponding to this update_flag is set to SphericalCoordinateRegionInfoSample. In a case in which the update_flag is 0000 1000 0000 0000b, only the spatial_set_id of the sample corresponding to this update_flag is set to SphericalCoordinateRegionInfoSample.

Moreover, in a case in which the sample differs from the previous sample only in projection_type and FOV_flag among the various kinds of information regarding images, 0x0005(0000 0000 0000 0101b) is set as the update_flag. In this case, only the projection_type and the FOV_flag of this sample are set to SphericalCoordinateRegionInfoSample.

As described so far, the various kinds of information regarding images in sample units are set to SphericalCoordinateRegionInfoSample only in the case in which the sample differs from the previous sample only in at least one of the various kinds of information regarding images in sample units. In this case, it is possible to reduce an amount of data of the segment file when a frequency of changing the various kinds of information regarding images in sample units is low.

In addition, with the partial information setting method, only the information different from the previous sample among the various kinds of information regarding images in sample units is set to SphericalCoordinateRegionInfoSample; thus, it is possible to reduce the amount of data of the segment file, compared with the whole information setting method.

While all the various kinds of information regarding images can be set in sample units with the fifth method described above, only the information changing within tracks among the various kinds of information regarding images in sample units may be set in sample units.

FIG. 65 is a diagram illustrating an example of a configuration of Spherical Coordinate Region Info Configuration Box in this case, and FIG. 66 is a diagram illustrating an example of a configuration of SphericalCoordinateRegionInfoSample in this case.

In the examples of FIGS. 65 and 66, object_yaw, object_pitch, object_roll, object_width, and object_height are the information changing within tracks among the various kinds of information regarding images in sample units may be set in sample units.

In this case, as depicted in FIG. 65, projection_type, id, FOV_flag, total_width, total_height, sphere_radius, and spatial_set_id that do not change within tracks among the various kinds of information regarding images are set in track units to Spherical Coordinate Region Info Configuration Box included in the stsd box on the lower layer than the trak box in Spherical Coordinate Region Info Track.

In addition, as depicted in FIG. 66, object_yaw, object_pitch, object_roll, object_width, and object_height that change within tracks among the various kinds of information regarding images are set in sample units to SphericalCoordinateRegionInfoSample.

It is noted that projection_type, id, FOV_flag, total_width, total_height, sphere_radius, and spatial_set_id that do not change within tracks among the various kinds of information regarding images may be included in the stsd box in the image track. A configuration of an hvcC box in this case differs from the hvcC box with the first method described with reference to FIGS. 50 and 51 in that object_yaw, object_pitch, object_roll, object_width, and object_height are not set.

In addition, the tracks identical in id or spatial_set_id may be grouped without setting id or spatial_set_id among the information that does not change within tracks to the scri box, similarly to the first to third methods.

As described so far, in the case of setting only the information changing within tracks among the various kinds of information regarding images to SphericalCoordinateRegionInfoSample, it is possible to reduce the amount of data of the segment file, compared with the case of setting all various kinds of information regarding images to SphericalCoordinateRegionInfoSample.

While it is assumed in the examples of FIGS. 65 and 66 that the information that change within track among the various kinds of information regarding images is object_yaw, object_pitch, object_roll, object_width, and object_height, arbitrary information can be set.

As described so far, with the fourth or fifth method, at least the information that changes within tracks among the various kinds of information regarding images is set to the segment file in sample units. Therefore, even in a case in which at least part of the various kinds of information regarding images changes within tracks, the information can be set to the segment file.

### (Description of process performed by generation device)

FIG. 67 is a flowchart describing a file generation process performed by the generation device 400 of FIG. 48.

Since processes from Steps S201 to S208 of FIG. 67 are similar to those from Steps S121 to S128 of FIG. 31, description will be omitted.

In Step S209, the segment file generation section 401 files a low resolution stream, a high resolution stream of each two-dimensional plane, and an audio stream for each bitrate and each segment, and generates segment files to each of which various kinds of information regarding images with any of the first to fifth methods.

In Step S210, the MPD file generation section 402 generates an MPD file.

In Step S211, the upload section 30 uploads the segment files supplied from the segment file generation section 401 and the MPD file supplied from the MPD file generation section 402 to the delivery server 13 of FIG. 1, and the process ends.

### (Example of configuration of reproducing device)

FIG. 68 is a block diagram illustrating an example of a configuration of a reproducing device according to the fifth embodiment of the delivery system to which the present disclosure is applied.

In the configurations depicted in FIG. 68, same configurations as those in FIG. 32 are denoted by the same reference characters. Repetitive description will be omitted, as appropriate.

A reproducing device 430 of FIG. 68 differs in configuration from the reproducing device 340 of FIG. 32 in that an MPD processing section 431, a segment file acquisition section 432, and a mapping processing section 433 are provided as an alternative to the MPD processing section 341, the segment file acquisition section 272, and the mapping processing section 342.

Specifically, the MPD processing section 431 in the reproducing device 430 analyzes the MPD file supplied from the MPD acquisition section 220, and acquires information such as URLs of the segment files at reproducing clock time at a predetermined bitrate. The MPD processing section 431 supplies the acquired URLs to the segment file acquisition section 432.

The segment file acquisition section 432 issues a request of the segment files identified by the URLs supplied from the MPD processing section 431 to the delivery server 13 on the basis of the URLs and acquires the segment files. The segment file acquisition section 432 supplies various kinds of information regarding images (low resolution image and high resolution images) from the acquired segment files. The segment file acquisition section 432 selects samples corresponding to a predetermined id among the acquired various kinds of information regarding images.

The segment file acquisition section 432 sets the sample to which the two-dimensional plane information and the like are not set as the various kinds of information regarding images among the selected samples, as a sample of the low resolution image to be reproduced. The segment file acquisition section 432 supplies one low resolution stream disposed in the sample of the low resolution image to be reproduced to the decoder 273.

In addition, the segment file acquisition section 432 recognizes the samples to which the two-dimensional plane information and the like are also set as the various kinds of information regarding images among the selected samples, as samples of high resolution images.

Furthermore, the segment file acquisition section 432 selects the sample corresponding to the selected two-dimensional plane from among the samples of the high resolution images as the sample of the high resolution image to be reproduced on the basis of the selected two-dimensional plane information generated by the visual line detecting section 343 and source_id, object_x, object_y, object_width, object_height, total_width, total_height, spatial_set_id, and the like corresponding to the sample of the high resolution image. The segment file acquisition section 432 supplies one high resolution stream disposed in the sample of the high resolution image to be reproduced to the decoder 274.

The mapping processing section 433 maps the low resolution image supplied from the decoder 273 onto the faces 71 to 76 of the sphere 70 as textures.

It is noted that the mapping processing section 433 may map only part of the low resolution image containing the region subjected to the perspective projection onto the visual field range of the viewer determined by the visual line detecting section 343 without mapping the entire low resolution image.

In addition, the mapping processing section 433 sets the selected two-dimensional plane within the sphere 70 as the 3D model on the basis of the selected two-dimensional plane information supplied from the visual line detecting section 343. The mapping processing section 433 maps the high resolution image onto the selected two-dimensional plane set within the sphere 70 as a texture. Furthermore, the mapping processing section 433 supplies the 3D model image for which the textures are mapped onto the sphere 70 and the selected two-dimensional plane to the drawing section 227.

### (Process performed by reproducing device)

FIG. 69 is a flowchart describing a reproducing process performed by the reproducing device 430 of FIG. 68.

In Step S231 of FIG. 69, the MPD acquisition section 220 in the reproducing device 430 issues a request of the MPD file to the delivery server 13 of FIG. 1 and acquires the MPD file. The MPD acquisition section 220 supplies the acquired MPD file to the MPD processing section 431.

In Step S232, the MPD processing section 431 analyzes the MPD file supplied from the MPD acquisition section 220, and acquires information such as URLs of the segment files at reproducing clock time at a predetermined bitrate. The MPD processing section 431 supplies the acquired URLs to the segment file acquisition section 432.

In Step S233, the segment file acquisition section 432 issues a request of the segment files identified by the URLs supplied from the MPD processing section 431 to the delivery server 13 on the basis of the URLs, and acquires the segment files.

In Step S234, the segment file acquisition section 432 acquires various kinds of information regarding images from the acquired segment files.

In Step S235, the segment file acquisition section 432 selects a predetermined id from among ids in the various kinds of information regarding images acquired in Step S234 as the id of the omnidirectional image to be reproduced. In addition, the segment file acquisition section 432 selects the sample to which the selected id is set.

In Step S236, the segment file acquisition section 432 sets the sample to which the two-dimensional plane information and the like are not set as the various kinds of information regarding images among the selected samples, as the sample of the low resolution image to be reproduced, and acquires one low resolution stream disposed in the sample from the segment files. The segment file acquisition section 432 supplies the acquired one low resolution stream to the decoder 273.

Since processes from Steps S237 to S242 are similar to those from Steps S145 to S150 of FIG. 34, description will be omitted.

In Step S243, the segment file acquisition section 432 recognizes the samples to which the two-dimensional plane information and the like are also set as the various kinds of information regarding images among the selected samples, as samples of high resolution images. Furthermore, the segment file acquisition section 432 selects the sample corresponding to the selected two-dimensional plane from among the samples of the high resolution images as the sample of the high resolution image to be reproduced on the basis of the selected two-dimensional plane information generated by the visual line detecting section 343 and source_id, object_x, object_y, object_width, object_height, total_width, total_height, spatial_set_id, and the like corresponding to the sample of the high resolution image. The segment file acquisition section 432 supplies one high resolution stream disposed in the sample of the high resolution image to be reproduced to the decoder 274.

In Step S244, the segment file acquisition section 432 acquires one high resolution stream disposed in the sample of the high resolution image to be reproduced selected in Step S243 from the segment files and supplies the high resolution stream to the decoder 274.

Since processes in Steps S245 and S246 are similar to those in Steps S153 and S154 of FIG. 34, description will be omitted.

In Step S247, the mapping processing section 433 maps the low resolution image supplied from the decoder 273 onto the faces 71 to 76 of the sphere 70 as textures.

In Step S248, the mapping processing section 433 sets the selected two-dimensional plane within the sphere 70 as the 3D model on the basis of the selected two-dimensional plane information supplied from the visual line detecting section 343.

In Step S249, the mapping processing section 433 maps the high resolution image supplied from the decoder 274 onto the selected two-dimensional plane set in Step S248 as a texture. The mapping processing section 433 supplies the 3D model image for which the textures are mapped onto the sphere 70 and the selected two-dimensional plane to the drawing section 227.

Processes in Steps S250 and S251 are similar to those in Steps S162 and S163 of FIG. 34.

As described so far, the generation device 400 sets various kinds of information regarding images to the segment files. Therefore, it is possible to realize similar effects to those of the fourth embodiment in MP4 layers.

In addition, the generation device 400 sets various kinds of information regarding images to the lower layers than a moov box that manages samples of the segment files or to track samples having the reference relationship with the image track. Therefore, it is possible to recognize the various kinds of information before decoding of the low resolution stream or the high resolution stream disposed as a sample.

Furthermore, the generation device 400 sets various kinds of information regarding images in track units or sample units. Therefore, the reproducing device 430 can recognize the various kinds of information regarding images in track units or sample units. Thus, the reproducing device 430 can easily select the sample in track units or sample in sample units to be reproduced on the basis of the various kinds of information regarding images in track units or sample units and the selected two-dimensional plane information.

While the various kinds of information regarding images set to the MPD file in the fourth embodiment are set to the segment files in the fifth embodiment, the various kinds of information regarding images set to the MPD file in the first to third embodiments may be set to the segment files. Furthermore, all of the first to fifth embodiments described above may be combined, and the various kinds of information regarding images may be set, for example, to both the segment files and the MPD file.

In addition, the various kinds of information regarding images may contain mapping information. In a case in which the various kinds of information regarding images contain the mapping information, the mapping processing section 433 performs mapping on the basis of the mapping information similarly to the mapping processing section 433.

### <Sixth embodiment>

### (Description of computer to which the present Disclosure is applied)

A series of processes described above can be either executed by hardware or executed by software. In a case of executing a series of processes by software, a program configuring the software is installed into a computer. Here, types of the computer include a computer incorporated into dedicated hardware, a computer, for example, a general-purpose personal computer, capable of executing various functions by installing various programs into the computer, and the like.

FIG. 70 is a block diagram illustrating an example of a configuration of the hardware of the computer executing a series of processes described above by the program.

In a computer 900, a Central Processing Unit (CPU) 901, a Read Only Memory (ROM) 902, and a Random Access Memory (RAM) 903 are mutually connected by a bus 904.

An input/output interface 905 is also connected to the bus 904. An input section 906, an output section 907, a storage section 908, a communication section 909, and a drive 910 are connected to the input/output interface 905.

The input section 906 includes a keyboard, a mouse, a microphone, and the like. The output section 907 includes a display, a loudspeaker, and the like. The storage section 908 includes a hard disc, a nonvolatile memory, and the like. The communication section 909 includes a network interface and the like. The drive 910 drives a removable medium 911 such as a magnetic disc, an optical disc, a magneto-optical disc or a semiconductor memory.

In the computer 900 configured as described above, the CPU 901 loads a program stored in, for example, the storage section 908 to the RAM 903 via the input/output interface 905 and the bus 904 and executes the program, whereby a series of processes described above are performed.

The program executed by the computer 900 (CPU 901) can be provided by, for example, recording the program in the removable medium 911 serving as a package medium or the like. Alternatively, the program can be provided via a wired or wireless transmission medium such as a local area network, the Internet, or a digital satellite service.

In the computer 900, the program can be installed into the storage section 908 via the input/output interface 905 by attaching the removable medium 911 to the drive 910. Alternatively, the program can be received by the communication section 909 via the wired or wireless transmission medium and installed into the storage section 908. In another alternative, the program can be installed into the ROM 902 or the storage section 908 in advance.

The program executed by the computer 900 may be a program for performing processes in time series in an order described in the present specification or may be a program for performing the processes either in parallel or at necessary timing such as timing of calling.

Furthermore, a system means in the present specification a collection of a plurality of constituent elements (devices, modules (components), and the like), regardless of whether all the constituent elements are provided in the same casing. Therefore, a plurality of devices accommodated in different casings and connected to one another via a network and one device in which a plurality of modules are accommodated in one casing can be each referred to as "system."

Furthermore, the effects described in the present specification are given as an example only, and the effects are not limited to those described in the present specification and may contain other effects.

Moreover, the embodiments of the present disclosure are not limited to the embodiments described above and various changes can be made without departing from the spirit of the present disclosure.

It is noted that the present disclosure can be configured as follows.
(1) A file generation device including:
   a setting section that sets identification information for identifying an image used for generating an omnidirectional image generated by mapping the image onto a 3D model.
(2) The file generation device according to (1), in which
   the setting section sets mapping information used at a time of mapping the omnidirectional image onto the 3D model.
(3) The file generation device according to (2), in which
   the mapping information is information used at the time of mapping the omnidirectional image onto the 3D model so that a reference image within the image is mapped onto a reference position of the 3D model at a predetermined inclination.
(4) The file generation device according to (3), in which
   the mapping information includes a position of the reference image within the omnidirectional image, and a rotational angle for making an inclination of the reference image on the 3D model equal to the predetermined inclination at the time of mapping the omnidirectional image onto the 3D model in such a manner that the reference image is mapped onto the reference position.
(5) The file generation device according to (3), in which
   the mapping information is a rotational angle of the omnidirectional image at the time of mapping the omnidirectional image onto the 3D model in such a manner that the reference image is mapped onto the reference position at the predetermined inclination.
(6) The file generation device according to (1), in which
   the setting section sets the identical identification information to a plurality of the omnidirectional images generated by mapping the image onto the 3D model.
(7) The file generation device according to (6), in which
   the setting section sets the identical identification information to the omnidirectional image generated with at least one of the plurality of methods and to the omnidirectional image of each region generated by a remaining method.
(8) The file generation device according to (1), in which
   the setting section sets the identification information to an image generated by projecting the omnidirectional image onto a drawing plane.
(9) The file generation device according to (8), in which
   the setting section sets drawing plane information containing information regarding the drawing plane to the image.
(10) The file generation device according to (9), in which
   the drawing plane information contains a position and an angle of view of the drawing plane.
(11) The file generation device according to (9) or (10), in which
   the drawing plane information contains plane type information indicating that the drawing plane of the image is a two-dimensional plane or a sphere.
(12) The file generation device according to (9) or (11), in which
   the drawing plane is classified into a group, and
   the drawing plane information contains information indicating the group to which the drawing plane belongs and an angle of view of whole drawing planes belonging to the group, the drawing plane information indicating a position and an angle of view of the drawing plane.
(13) The file generation device according to any one of (8) to (12), in which
   the setting section sets identical information to each of a plurality of images generated by projecting the omnidirectional image onto the drawing plane, as information for identifying the 3D model onto which the omnidirectional image used for generating the image is mapped.
(14) The file generation device according to any one of (1) to (13), in which
   the 3D model is a sphere, and
   the setting section sets information for indicating a radius of the 3D model.
(15) The file generation device according to any one of (1) to (14), in which
   the setting section sets the identification information to a management file that manages files of the omnidirectional image.
(16) The file generation device according to any one of (1) to (15), in which
   the setting section sets the identification information to files of the omnidirectional image.
(17) A file generation method including:
   a setting step of causing a file generation device to set identification information for identifying an image used for generating an omnidirectional image generated by mapping the image onto a 3D model.
(18) A reproducing device including:
   a selection section that selects an omnidirectional image that is to be reproduced and that is generated by mapping an image onto a 3D model on the basis of identification information for identifying the image used for generating the omnidirectional image.
(19) A reproducing method including:
   a selecting step of causing a reproducing device to select an omnidirectional image that is to be reproduced and that is generated by mapping an image onto a 3D model on the basis of identification information for identifying the image used for generating the omnidirectional image.
   [1] A file generation device comprising:
      a setting section that sets identification information for identifying an image used for generating an omnidirectional image generated by mapping the image onto a 3D model.
   [2] The file generation device according to [1], wherein
      the setting section sets mapping information used at a time of mapping the omnidirectional image onto the 3D model.
   [3] The file generation device according to [2], wherein
      the mapping information is information used at the time of mapping the omnidirectional image onto the 3D model so that a reference image within the image is mapped onto a reference position of the 3D model at a predetermined inclination.
   [4] The file generation device according to [3], wherein
      the mapping information includes a position of the reference image within the omnidirectional image, and a rotational angle for making an inclination of the reference image on the 3D model equal to the predetermined inclination at the time of mapping the omnidirectional image onto the 3D model in such a manner that the reference image is mapped onto the reference position.
   [5] The file generation device according to [3], wherein
      the mapping information is a rotational angle of the omnidirectional image at the time of mapping the omnidirectional image onto the 3D model in such a manner that the reference image is mapped onto the reference position at the predetermined inclination.
   [6] The file generation device according to [1], wherein
      the setting section sets the identical identification information to a plurality of the omnidirectional images generated by mapping the image onto the 3D model.
   [7] The file generation device according to [6], wherein
      the setting section sets the identical identification information to the omnidirectional image generated with at least one of the plurality of methods and to the omnidirectional image of each region generated by a remaining method.
   [8] The file generation device according to [1], wherein
      the setting section sets the identification information to an image generated by projecting the omnidirectional image onto a drawing plane.
   [9] The file generation device according to [8], wherein
      the setting section sets drawing plane information containing information regarding the drawing plane to the image.
   [10] The file generation device according to [9], wherein
      the drawing plane information contains a position and an angle of view of the drawing plane.
   [11] The file generation device according to [9], wherein
      the drawing plane information contains plane type information indicating that the drawing plane of the image is a two-dimensional plane or a sphere.
   [12] The file generation device according to [9], wherein
      the drawing plane is classified into a group, and
      the drawing plane information contains information indicating the group to which the drawing plane belongs and an angle of view of whole drawing planes belonging to the group, the drawing plane information indicating a position and an angle of view of the drawing plane.
   [13] The file generation device according to [8], wherein
      the setting section sets identical information to each of a plurality of images generated by projecting the omnidirectional image onto the drawing plane, as information for identifying the 3D model onto which the omnidirectional image used for generating the image is mapped.
   [14] The file generation device according to [1], wherein
      the 3D model is a sphere, and
      the setting section sets information for indicating a radius of the 3D model.
   [15] The file generation device according to [1], wherein
      the setting section sets the identification information to a management file that manages files of the omnidirectional image.
   [16] The file generation device according to [1], wherein
      the setting section sets the identification information to files of the omnidirectional image.
   [17] A file generation method comprising:
      a setting step of causing a file generation device to set identification information for identifying an image used for generating an omnidirectional image generated by mapping the image onto a 3D model.
   [18] A reproducing device comprising:
      a selection section that selects an omnidirectional image that is to be reproduced and that is generated by mapping an image onto a 3D model on a basis of identification information for identifying the image used for generating the omnidirectional image.
   [19] A reproducing method comprising:
      a selecting step of causing a reproducing device to select an omnidirectional image that is to be reproduced and that is generated by mapping an image onto a 3D model on a basis of identification information for identifying the image used for generating the omnidirectional image.
      {1} A file generation device comprising:
         a setting section that sets identification information for identifying a captured image used for generating an omnidirectional image generated by mapping the captured image onto a 3D model, wherein
         the setting section sets mapping information used at a time at which a reproducing device maps the omnidirectional image onto the 3D model.
      {2} The file generation device according to {1}, wherein
         the mapping information is information used at the time of mapping the omnidirectional image so that a reference image within the captured image is mapped onto a reference position of the 3D model at a predetermined inclination.
      {3} The file generation device according to {2}, wherein
         the mapping information includes a position of the reference image within the omnidirectional image, and a rotational angle for making an inclination of the reference image on the 3D model equal to the predetermined inclination at the time of mapping the omnidirectional image in such a manner that the reference image is mapped onto the reference position; or
         the mapping information is a rotational angle of the omnidirectional image at the time of mapping the omnidirectional image onto the 3D model in such a manner that the reference image is mapped onto the reference position at the predetermined inclination.
      {4} The file generation device according to {1}, wherein
         the setting section
         sets the identical identification information to a plurality of the omnidirectional images generated by projecting the captured image onto the 3D model, and
         sets the identical identification information to the omnidirectional image generated with at least one method of projection onto the 3D model and to the omnidirectional image of each region generated by a method different from the method.
      The file generation device according to {1}, wherein
         the setting section
         sets the identification information to a captured image generated by projecting the omnidirectional image onto a drawing plane, and
         sets drawing plane information containing information regarding the drawing plane to the captured image, and
         the drawing plane information contains a position and an angle of view of the drawing plane.
      {6} The file generation device according to {5}, wherein
         the drawing plane information contains plane type information indicating that the drawing plane of the captured image is a two-dimensional plane or a sphere; or
         the drawing plane is classified into a group, and
         the drawing plane information contains information indicating the group to which the drawing plane belongs and an angle of view of whole drawing planes belonging to the group, the drawing plane information indicating a position and an angle of view of the drawing plane; or
         the setting section sets identical information to each of a plurality of captured images generated by projecting the omnidirectional image onto the drawing plane, as information for identifying the 3D model onto which the omnidirectional image used for generating the captured image is mapped; or
         the drawing plane information is described, together with a method of generating the omnidirectional video and SRD (Spatial Relationship Description) information, in an MPD (Media Presentation Description) file.
      {7} The file generation device according to {1}, wherein
         the 3D model is a sphere, and
         the setting section sets information for indicating a radius of the 3D model.
      {8} The file generation device according to any one of {5} to {6}, wherein
         the setting section sets at least one of the identification information, the mapping information or the drawing plane information, to a management file that manages files of the omnidirectional image.
      {9} The file generation device according to {8}, wherein
         the management file is MPD (Media Presentation Description), and at least one of the identification information, the mapping information, or the drawing plane information is set in an AdaptationSet.
      {10} The file generation device according to {9}, wherein
         at least one of the identification information, the mapping information, or the drawing plane information is set to SupplementalProperty or EssentialProperty in the AdaptationSet.
      {11} The file generation device according to any one of {1} to {6} and {7}, wherein
         the setting section stores at least one of the identification information, the mapping information, or the drawing plane information in a file of the omnidirectional image.
      {12} A file generation method comprising:
         a setting step of causing a file generation device to set identification information for identifying a captured image used for generating an omnidirectional image generated by projecting the captured image onto a 3D model, wherein
         the setting step includes setting mapping information used at a time at which a reproducing device maps the omnidirectional image onto the 3D model.
      {13} The file generation method according to {16}, wherein
         the setting step includes
         setting the identification information to a captured image generated by projecting the omnidirectional image onto a drawing plane, and
         setting drawing plane information containing information regarding the drawing plane to the captured image, and
         the drawing plane information contains a position and an angle of view of the drawing plane.
      {14} A reproducing device comprising:
         a selection section that selects an omnidirectional image that is to be reproduced and that is generated by projecting a captured image onto a 3D model on the basis of identification information for identifying the captured image used for generating the omnidirectional image, wherein
         mapping is performed using mapping information set for mapping the omnidirectional image onto the 3D model,
         the identification information is set to a captured image generated by projecting the omnidirectional image onto a drawing plane,
         drawing plane information containing information regarding the drawing plane is set to the captured image, and
         the drawing plane information contains a position and an angle of view of the drawing plane.
      {15} A reproducing method comprising:
         a selecting step of causing a reproducing device to select an omnidirectional image that is to be reproduced and that is generated by projecting a captured image onto a 3D model on the basis of identification information for identifying the captured image used for generating the omnidirectional image, wherein
         mapping is performed using mapping information set for mapping the omnidirectional image onto the 3D model,
         the identification information is set to a captured image generated by projecting the omnidirectional image onto a drawing plane,
         drawing plane information containing information regarding the drawing plane is set to the captured image, and
         the drawing plane information contains a position and an angle of view of the drawing plane.

### [Reference Signs List]

- 12:: Generation device
- 14:: Reproducing device
- 29:: MPD file generation section
- 40:: Cube
- 41 to 46:: Face
- 50:: Omnidirectional image
- 70:: Sphere
- 90:: Omnidirectional image
- 221:: MPD processing section
- 250:: Generation device
- 256:: MPD file generation section
- 270:: Reproducing device
- 271:: MPD processing section
- 300:: Generation device
- 331-1 to 331-18:: High resolution image
- 340:: Reproducing device
- 341:: MPD processing section
- 400:: Generation device
- 401:: Segment file generation section
- 430:: Reproducing device
- 431:: MPD processing section

## Claims

1. A file generation device (300) comprising:
a segment file generating unit (304) configured to generate a file which sets mapping information used for mapping an omnidirectional image to a 3D model,
wherein the mapping information includes rotational angle information which is used to rotate and map a reference image in the omnidirectional image with respect to a reference position of the 3D model.

2. The file generation device (300) according to claim 1, further comprising:
a setting section configured to set drawing plane information,
wherein:
the drawing plane information includes plane type information indicating that the drawn plane is a two-dimensional plane or a spherical surface is provided as information on the surface to be drawn of the 3D model.

3. The file generation device (300) according to claim 2, wherein:
the drawing plane information includes angular information corresponding to the drawing plane.

4. The file generation device (300) according to claim 3, wherein:
the angular information includes an azimuth angle, an elevation angle, a rotational angle, a lateral angle of view, and a longitudinal angle of view.

5. The file generation device (300) according to claim 4, wherein:
the drawing plane is grouped, and
the drawing plane information further includes group information indicating a group to which the drawing plane belongs, and information on the angle of the entire two-dimensional plane configured by all drawing planes belonging to the group.

6. The file generation device (300) according to claim 5, wherein:
the segment file generating unit is configured to set information of a diameter of the 3D model into the file.

7. A file generation device (12) comprising:
a Media Presentation Description file generating unit (29) configured to generate a Media Presentation Description file which sets mapping information used for mapping an omnidirectional image to a 3D model,
wherein:
the mapping information includes rotational angle information which is used to rotate and map a reference image in the omnidirectional image with respect to a reference position of the 3D model.

8. The file generation device (12) according to claim 7, further comprising:
a setting section configured to set drawing plane information,
wherein the drawing plane information includes plane type information indicating that the drawn plane is a two-dimensional plane or a spherical surface is provided as information on the surface to be drawn of the 3D model.

9. The file generation device (12) according to claim 8, wherein:
the drawing plane information includes angular information corresponding to the drawing plane.

10. The file generation device (12) according to claim 9, wherein:
the angular information includes an azimuth angle, an elevation angle, a rotational angle, a lateral angle of view, and a longitudinal angle of view.

11. The file generation device (12) according to claim 10, wherein:
the drawing plane is grouped, and
the drawing plane information further includes group information indicating a group to which the drawing plane belongs, and information on the angle of the entire two-dimensional plane configured by all drawing planes belonging to the group.

12. The file generation device (12) according to claim 11, wherein:
the file generating unit (29) is configured to set information of a diameter of the 3D model into the file.

13. A file generation method comprising:
generating a file which sets mapping information used for mapping an omnidirectional image to a 3D model,
wherein the mapping information includes rotational angle information which is used to rotate and map a reference image in the omnidirectional image with respect to a reference position of the 3D model.

14. A file generation method comprising:
generating a Media Presentation Description file which sets mapping information used for mapping an omnidirectional image to a 3D model,
wherein:
the mapping information includes rotational angle information which is used to rotate and map a reference image in the omnidirectional image with respect to a reference position of the 3D model.
